(19) Europäisches Patentamt
European Patent Office
Office européen des brevets

(11) EP 4 742 666 A1

(12) **EUROPEAN PATENT APPLICATION**
published in accordance with Art. 153(4) EPC

(43) Date of publication:
**13.05.2026 Bulletin 2026/20**

(21) Application number: **24836326.9**

(22) Date of filing: **03.07.2024**

(51) International Patent Classification (IPC):
$H04N\ 19/122^{(2014.01)}$     $H04N\ 19/63^{(2014.01)}$
$H04N\ 19/124^{(2014.01)}$     $H04N\ 19/176^{(2014.01)}$
$H04N\ 19/18^{(2014.01)}$

(52) Cooperative Patent Classification (CPC):
H04N 19/122; H04N 19/124; H04N 19/176;
H04N 19/18; H04N 19/63

(86) International application number:
**PCT/KR2024/009380**

(87) International publication number:
**WO 2025/009878 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.07.2023 US 202363524848 P**

(71) Applicant: **LG Electronics Inc.**
**Yeongdeungpo-gu**
**Seoul 07336 (KR)**

(72) Inventors:
• **KOO, Moonmo**
**Seoul 06772 (KR)**
• **LIM, Jaehyun**
**Seoul 06772 (KR)**
• **KIM, Seunghwan**
**San Diego, California 92131 (US)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD AND APPARATUS, AND RECORDING MEDIUM STORING BITSTREAM**

(57) An image decoding method and apparatus according to the present disclosure may: acquire residual information from a bitstream; derive transform coefficients of the current block on the basis of the residual information; derive residual samples of the current block by performing at least one of dequantization and inverse transform on the transform coefficients of the current block; and reconstruct the current block on the basis of the residual samples of the current block. Here, the inverse transform may be performed on the basis of at least one of a non-separable primary transform, a low-frequency non-separable transform, and a separable primary transform.

FIG.4

DERIVE TRANSFORM COEFFICIENTS OF CURRENT BLOCK — S400

DERIVE RESIDUAL SAMPLES BASED ON TRANSFORM COEFFICIENTS OF CURRENT BLOCK — S410

RECONSTRUCT CURRENT BLOCK BASED ON RESIDUAL SAMPLES OF CURRENT BLOCK — S420

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide a method and an apparatus for performing a transform by using a non-separable primary transform.

The present disclosure is to provide a method and an apparatus for performing a transform by using a non-separable primary transform kernel of a reduced dimension.

The present disclosure is to provide a method and an apparatus for determining/signaling a non-separable transform kernel based on an encoding parameter.

[Technical Solution]

An image decoding method and apparatus according to the present disclosure may obtain residual information from a bitstream, derive transform coefficients of a current block based on the residual information, derive residual samples of the current block by performing at least one of dequantization or inverse transform on the transform coefficients of the current block and reconstruct the current block based on the residual samples of the current block.

In an image decoding method and apparatus according to the present disclosure, the inverse transform may be performed based on at least one of non-separable primary transform (NSPT), low frequency non-separable transform (LFNST) or separable primary transform.

In an image decoding method and apparatus according to the present disclosure, pre-defined allowed transform block sizes may be divided into a plurality of groups, and the plurality of groups may include at least two of a first group including block sizes that a minimum value of a width and a height is 4, a second group including block sizes that the minimum value of the width and the height is 8, a third group including block sizes that the minimum value of the width and the height is 16, a fourth group including block sizes greater than or equal to 16x16, a fifth group including block sizes greater than or equal to 32x32 or a sixth group including block sizes greater than or equal to 8x8.

In an image decoding method and apparatus according to the present disclosure, any one of the plurality of groups may include one or more block sizes to which the NSPT is applicable.

In an image decoding method and apparatus according to the present disclosure, any one of the plurality of groups may include one or more block sizes to which the NSPT and the LFNST are not applied.

In an image decoding method and apparatus according to the present disclosure, any one of the plurality of groups may include one or more block sizes to which the LFNST is applicable.

In an image decoding method and apparatus according to the present disclosure, the NSPT may be applied to a 4xL block and an Lx4 block ($4 \leq L \leq 32$) belonging to the first group, and the NSPT and the LFNST may not be applied to a 4xM block and an Mx4 block (M>32) belonging to the first group.

In an image decoding method and apparatus according to the present disclosure, the NSPT may be applied to a 4x4 block belonging to the first group, and the LFNST may be applied to a 4xL block and an Lx4 block ($L \geq 8$) belonging to the first group.

In an image decoding method and apparatus according to the present disclosure, the NSPT may be applied to a 4x4 block belonging to the first group, and the NSPT and the LFNST may not be applied to a 4xL block and an Lx4 block (L≥8) belonging to the first group.

In an image decoding method and apparatus according to the present disclosure, the NSPT may be applied to an 8xL block and an Lx8 block (8≤L≤32) belonging to the second group, and the NSPT and the LFNST may not be applied to an 8xM block and an Mx8 block (M>32) belonging to the second group.

In an image decoding method and apparatus according to the present disclosure, the NSPT may be applied to an 8x8 block belonging to the second group, and the LFNST may be applied to an 8xL block and an Lx8 block (L≥16) belonging to the second group.

In an image decoding method and apparatus according to the present disclosure, the NSPT may be applied to an 8x8 block belonging to the second group, and the NSPT and the LFNST may not be applied to an 8xL block and an Lx8 block (L≥16) belonging to the second group.

In an image decoding method and apparatus according to the present disclosure, the NSPT may not be applied to at least one of the third group to the sixth group.

An image encoding method and apparatus according to the present disclosure may derive residual samples of a current block, derive transform coefficients of the current block by performing at least one of transform or quantization on the residual samples of the current block and encode the transform coefficients of the current block. Here, the transform may be performed based on at least one of non-separable primary transform (NSPT), separable primary transform or low frequency non-separable transform (LFNST).

In an image encoding method and apparatus according to the present disclosure, pre-defined allowed transform block sizes are divided into a plurality of groups, and the plurality of groups may include at least two of a first group including block sizes that a minimum value of a width and a height is 4, a second group including block sizes that the minimum value of the width and the height is 8, a third group including block sizes that the minimum value of the width and the height is 16, a fourth group including block sizes greater than or equal to 16x16, a fifth group including block sizes greater than or equal to 32x32 or a sixth group including block sizes greater than or equal to 8x8.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and an apparatus for transmitting video/image information generated according to an image encoding method according to the present disclosure are provided.

[Advantageous Effects]

The present disclosure may improve the performance of a transform by using a non-separable primary transform as a primary transform.

The present disclosure may improve the performance of a transform by performing a transform by using a non-separable primary transform kernel of a reduced dimension.

The present disclosure may improve encoding efficiency by effectively determining and/or signaling a non-separable transform kernel based on an encoding parameter.

[Brief Description of Drawings]

FIG. 1 shows a video/image coding system according to the present disclosure.
FIG. 2 shows a schematic block diagram of an encoding apparatus to which an embodiment of the present disclosure is applicable and encoding of video/image signals is performed.
FIG. 3 shows a schematic block diagram of a decoding apparatus to which an embodiment of the present disclosure is applicable and decoding of video/image signals is performed.
FIG. 4 illustrates an image decoding method performed by a decoding apparatus (300) as an embodiment according to the present disclosure.
FIG. 5 exemplarily shows intra prediction modes and prediction directions thereof according to the present disclosure.
FIG. 6 illustrates a schematic configuration of a decoding apparatus (300) that performs an image decoding method according to the present disclosure.
FIG. 7 illustrates an image encoding method performed by an encoding apparatus (200) according to an embodiment of the present disclosure.
FIG. 8 illustrates a schematic configuration of an encoding apparatus (200) that performs an image encoding method according to the present disclosure.

FIG. 9 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, the first component may be referred to as the second component without departing from the scope of a right of the present disclosure, and similarly, the second component may also be referred to as the first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

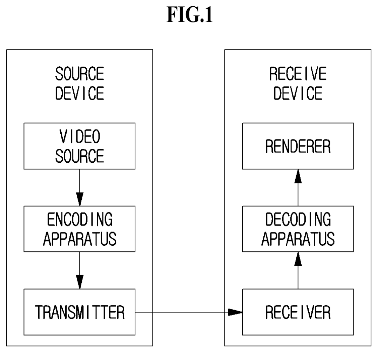

FIG. 1 shows a video/image coding system according to the present disclosure.

Referring to FIG. 1, a video/image coding system may include the first device (a source device) and the second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

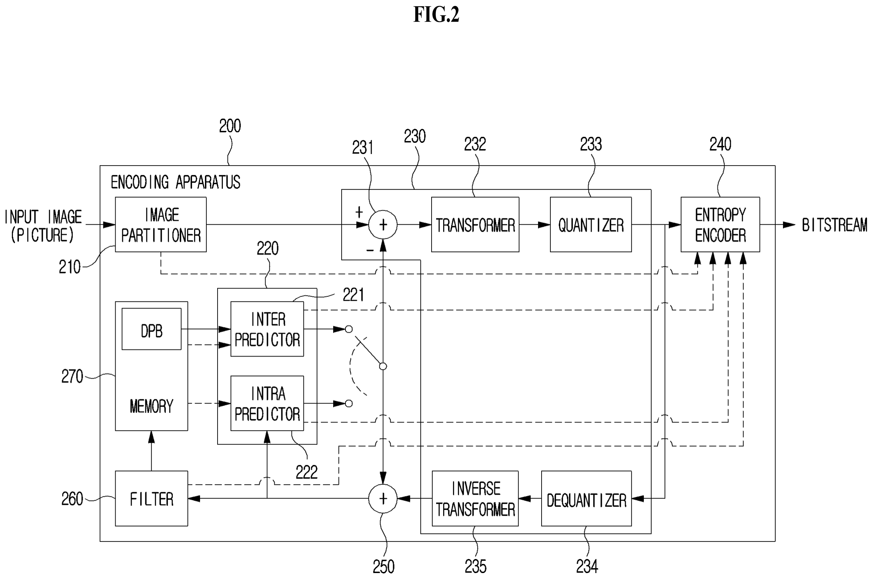

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or a region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into a 1D vector form based on coefficient scan order, and may generate information on the quantized transform coefficients based on the quantized transform coefficients in the 1D vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictor 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

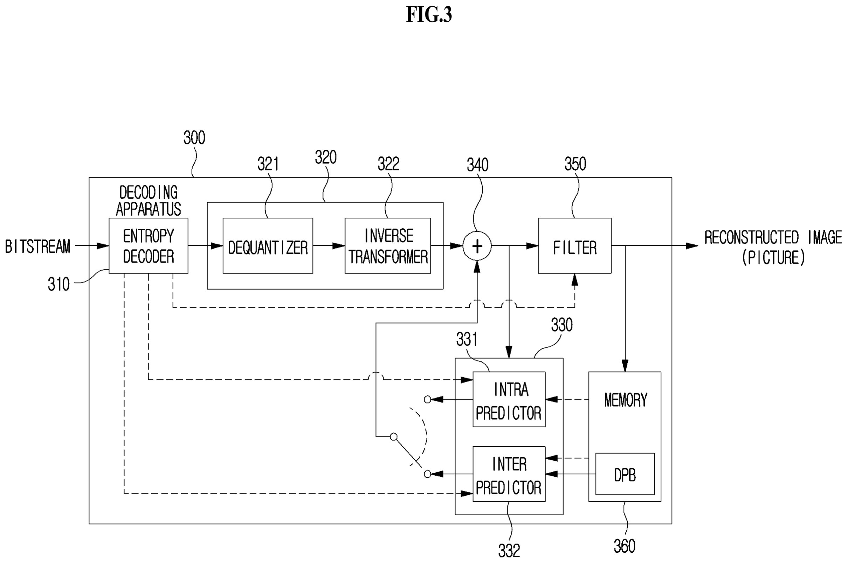

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

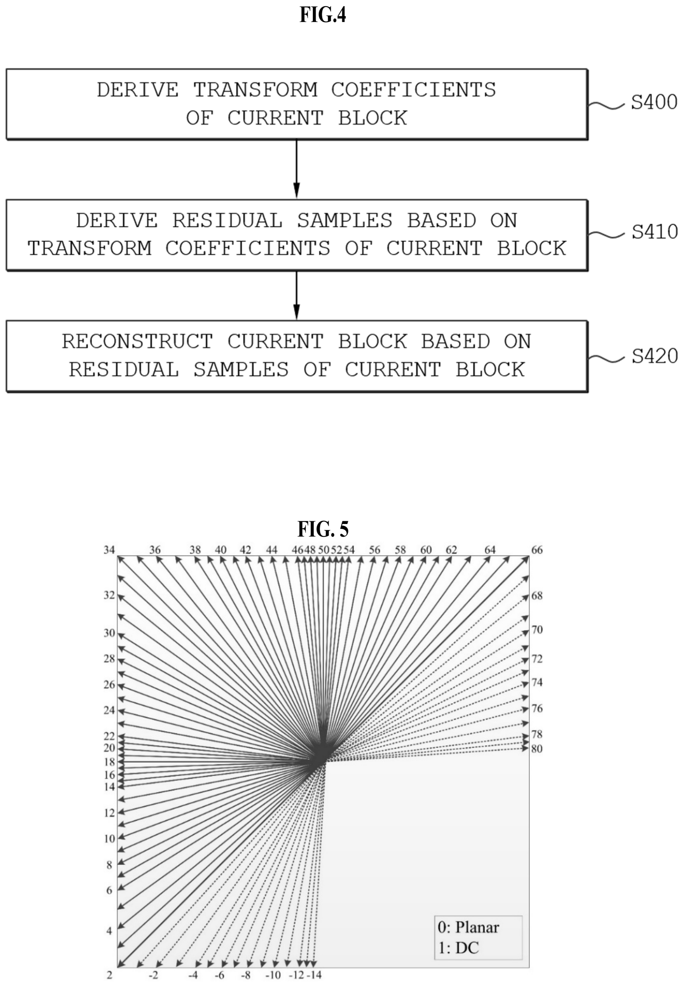

FIG. 4 illustrates an image decoding method performed by a decoding apparatus (300) as an embodiment according to the present disclosure.

Referring to FIG. 4, transform coefficients of the current block may be derived from the bitstream (S400). That is, the bitstream may include residual information of the current block, and the transform coefficients of the current block may be derived by decoding the residual information.

Referring to FIG. 4, residual samples of the current block may be derived by performing at least one of dequantization and inverse transform on the transform coefficients of the current block (S410).

When Adaptive Multiple Transform Selection (MTS) is applied, the inverse transform may be performed based on at least one of DCT-2, DST-7, or DCT-8. Here, DCT-2, DST-7, DCT-8, etc. may be called a transform type, a transform kernel, or a transform core.

In the present disclosure, the inverse transform may mean a separable transform. However, it is not limited thereto, and the inverse transform may mean a non-separable transform, or may be a concept including a separable transform and a non-separable transform. In addition, the inverse transform in the present disclosure means a primary transform, but is not limited thereto, and may be applied to a secondary transform by being modified into an identical/similar form.

For example, as a method for inverse transform, only DCT-2 and a non-separable transform may be used, or a non-separable transform may be used in addition to at least one of DCT-2, DST-7, or DCT-8, or a non-separable transform may replace the transform kernel of one or more of DCT-2, DST-7, or DCT-8.

As a more specific embodiment, when there are (DCT-2, DCT-2), (DST-7, DST-7), (DCT-8, DST-7), (DST-7, DCT-8), (DCT-8, DCT-8) as transform kernel candidates for a separable transform, a non-separable transform may replace or be added to one or more of the five transform kernel candidates. Here, the notation (transform1, transform2) indicates that transform1 is applied in the horizontal direction and transform2 is applied in the vertical direction. When the non-separable transform replaces some of the transform kernel candidates, the remaining transform kernel candidates except (DCT-2, DCT-2) and (DST-7, DST-7) may be replaced with the non-separable transform. However, the above-described transform kernel candidates are only examples, and other types of DCT and/or DST may be included, and a transform skip may be included as the transform kernel candidate.

A non-separable transform may mean a transform or inverse transform based on a non-separable transform matrix. That is, unlike a separable transform that performs horizontal and vertical transforms independently by separating vertical and horizontal transforms, a non-separable transform may perform horizontal and vertical transforms at once.

For example, when a non-separable transform is performed on a 4x4 block, the input data X to the non-separable transform is as shown in the following equation 1.

[Equation 1]

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

When the input data X is expressed in vector form, vector X' may be expressed as follows.

[Equation 2]

$$X' = [X_{00}, X_{01}, X_{02}, X_{03}, X_{10}, X_{11}, X_{12}, X_{13}, X_{20}, X_{21}, X_{22}, X_{23}, X_{30}, X_{31}, X_{32}, X_{33}]^T$$

In this case, the non-separable transform may be performed as in the following equation 3.

[Equation 3]

$$F = T \cdot X'$$

In equation 3, F represents a transform coefficient vector, T represents a 16x16 non-separable transform matrix, and • represents the multiplication of a matrix and a vector.

A 16x1 transform coefficient vector F may be derived through the equation 3, and the F may be reconfigured into 4x4 blocks according to a predetermined scan order. The scan order may be a horizontal scan, a vertical scan, a diagonal scan, a z-scan, a raster scan, or a pre-defined scan.

The non-separable transform set and/or transform kernel for the non-separable transform may be variously configured based on at least one of a prediction mode (e.g., intra mode, inter mode, etc.), the width, height, or number of pixels of the current block, the position of a sub-block within the current block, explicitly signaled syntax elements, statistical characteristics of neighboring samples, whether a secondary transform is used, or a quantization parameter (QP).

Specifically, for the intra mode, the pre-defined intra prediction modes may be grouped to correspond to n non-separable transform sets, and each non-separable transform set may include k transform kernel candidates. Here, n and k may be arbitrary constants according to rules (conditions) defined identically for the encoding apparatus and the decoding apparatus.

The number of non-separable transform sets and/or the number of transform kernel candidates included in the non-separable transform set may be configured differently depending on the width and/or height of the current block. For example, for a 4x4 block, $n_1$ non-separable transform sets and $k_1$ transform kernel candidates may be configured. For a 4x8 block, $n_2$ non-separable transform sets and $k_2$ transform kernel candidates may be configured. In addition, the number of non-separable transform sets and the number of transform kernel candidates included in each non-separable transform set may be configured differently depending on the product of the width and the height of the current block. For example, when the product of the width and the height of the current block is equal to or greater than 256, $n_3$ non-separable transform sets and $k_3$ transform kernel candidates may be configured, and otherwise, $n_4$ non-separable transform sets and $k_4$

transform kernel candidates may be configured. That is, since the degree of change in the statistical characteristics of the residual signal varies depending on the block size, the number of non-separable transform sets and transform kernel candidates may be configured differently to reflect this.

When the current block is divided into a plurality of sub-blocks, the statistical characteristics of the residual signal may be different for each sub-block, and therefore the number of non-separable transform sets and transform kernel candidates may be configured differently. For example, when a 4x8 or 8x4 block is divided into two 4x4 sub-blocks and a non-separable transform is applied to each sub-block, $n_5$ non-separable transform sets and $k_5$ transform kernel candidates may be configured for the top-left 4x4 sub-block, and $n_6$ non-separable transform sets and $k_6$ transform kernel candidates may be configured for other 4x4 sub-blocks.

Based on the explicitly signaled syntax element, the number of non-separable transform sets and transform kernel candidates may be differently configured. As the syntax element, information indicating one of a plurality of non-separable transform configurations may be used. For example, when three kinds of non-separable transform configurations are supported (i.e., $n_7$ non-separable transform sets and $k_7$ transform kernel candidates, $n_8$ non-separable transform sets and $k_8$ transform kernel candidates, $n_9$ non-separable transform sets and $k_9$ transform kernel candidates), the syntax element may have values of 0, 1, and 2, and the non-separable transform configuration applied to the current block may be determined based on the value of the signaled syntax element.

Based on whether a secondary transform is applied and/or which secondary transform is applied, the number of non-separable transform sets and transform kernel candidates may be configured differently. For example, when a secondary transform is not applied, a non-separable transform configuration including $n_{10}$ non-separable transform sets and $k_{10}$ transform kernel candidates may be applied. When a secondary transform is applied, a non-separable transform configuration including $n_{11}$ non-separable transform sets and $k_{11}$ transform kernel candidates may be applied.

Based on the quantization parameter (QP) and/or the range to which the QP value belongs, different non-separable transform configurations may be applied. For example, when the QP value has a small value, a non-separable transform configuration including $n_{12}$ non-separable transform sets and $k_{12}$ transform kernel candidates may be applied. On the other hand, when the QP value has a large value, a non-separable transform configuration including $n_{13}$ non-separable transform sets and $k_{13}$ transform kernel candidates may be applied. When the QP value is less than or equal to a threshold (e.g., 32), the case is classified as having a small QP value, and otherwise, the case is classified as having a large QP value. Alternatively, the range of the QP values may be divided into three or more, and different non-separable transform configurations may be applied for each range.

For relatively large blocks, instead of using a non-separable transform corresponding to the width and height of the block, the block may be divided into a plurality of sub-blocks and a non-separable transform corresponding to the width and height of the sub-block may be used. For example, when performing a non-separable transform for a 4x8 block, the 4x8 block may be divided into two 4x4 sub-blocks and a 4x4 block-based non-separable transform may be used for each of the 4x4 sub-blocks. Alternatively, an 8x16 block may be divided into two 8x8 sub-blocks and an 8x8 block-based non-separable transform may be used.

The non-separable transform set may be determined based on the intra prediction mode of the current block and the mapping table. The mapping table may define a mapping relationship between the pre-defined intra prediction modes and the non-separable transform sets. The pre-defined intra prediction modes may include two non-directional modes and 65 directional modes. In general, the non-separable transform has a larger transform kernel size than the separable transform. This means that the computational complexity required for the transform process is high and the memory required for storing the transform kernel is large. Meanwhile, while the separable transform may only consider statistical characteristics existing in the horizontal and/or vertical directions, the non-separable transform may simultaneously consider statistical characteristics in a two-dimensional space including the horizontal and vertical directions, thereby providing better compression efficiency. Since the statistical characteristics and diversity of the residual are different depending on the directionality of the intra prediction mode, there may be cases where the non-separable transform is absolutely necessary, and there may exist intra prediction modes where the characteristics of the residual may be sufficiently identified by the separable transform alone. Therefore, by predefining which transform to use based on to the intra prediction mode in the encoding apparatus and the decoding apparatus, the transform process may be designed with optimized complexity and memory requirements. The non-directional mode may include the planar mode of number 0 and the DC mode of number 1, and the directional mode may include the intra prediction modes of numbers 2 to 66. However, this is merely an example, and the present disclosure may also be applied to cases where the number of pre-defined intra prediction modes is different.

Due to the application of wide angle intra prediction (WAIP), the pre-defined intra prediction modes may further include intra prediction modes from -14 to -1 and intra prediction modes from 67 to 80.

FIG. 5 exemplarily shows intra prediction modes and prediction directions thereof according to the present disclosure. Referring to FIG. 5 , modes -14 to -1 and 2 to 33 and modes 35 to 80 are symmetrical with respect to mode 34 in terms of prediction direction. For example, modes 10 and 58 are symmetrical with respect to the direction corresponding to mode 34, and mode -1 is symmetrical with mode 67. Accordingly, for a vertical directionality mode symmetrical to a horizontal directionality mode with respect to mode 34, the input data may be transposed and used. Transposing the input data means that the rows and columns in the input data MxN of a two-dimensional block become columns and rows, respectively, to form NxM data.

For example, when a 4x4 block is used, 16 data forming a 4x4 block may be appropriately arranged to form a 16x1 1-dimensional vector for non-separable transform. In this case, the 1-dimensional vector may be formed in row-first order or in column-first order. The residual samples resulting from the non-separable transform may be arranged in the above order to form a 2-dimensional block.

For modes -14 to -1 and 2 to 33, when the data arrangement order for forming a 16x1 input vector is row-first order, for modes 35 to 80, the input vector may be formed according to column-first order.

Mode 34 may be regarded as neither a horizontal directionality mode nor a vertical directionality mode, but in this disclosure, it is classified as belonging to a horizontal directionality mode. That is, for modes -14 to -1 and 2 to 33, the input data arrangement method for the horizontal directionality mode, i.e., the row-first order, is used, and for the vertical directionality mode symmetrical with respect to mode 34, the input data may be transposed and used.

For non-square blocks, the symmetry in square blocks (i.e., the symmetry between the mode P and the mode (68-P) in an NxN block (2<=P<=33) or the symmetry between the mode Q and the mode (66-Q) (-14<=Q<=-1)) cannot be utilized. Therefore, in addition to the symmetry based only on the intra prediction mode, the symmetry between block shapes that are in a transpose relationship with each other, i.e., the symmetry between a KxL block and an LxK block, may also be utilized. Specifically, a symmetry relationship exists between a KxL block predicted by the mode P and an LxK block predicted by the mode (68-P). Alternatively, a symmetry relationship exists between a KxL block predicted by the mode Q and an LxK block predicted by the mode (66-Q).

Since a KxL block having mode 2 and an LxK block having mode 66 can be seen as symmetrical to each other, the same transform kernel may be applied to the KxL block and the LxK block. If a non-separable transform set for the intra prediction mode of the KxL block is mapped, in order to apply a non-separable transform to the LxK block, the non-separable transform set may be derived through a mapping table corresponding to the KxL block based on the mode (68-P) instead of the mode P applied to the LxK block. Alternatively, the non-separable transform set may be derived through a mapping table corresponding to the KxL block based on the mode (66-Q) instead of the mode Q applied to the LxK block.

For example, in order to apply a non-separable transform to an LxK block, the non-separable transform set may be selected based on mode 2 instead of mode 66. In addition, for a KxL block, the input data may be read in a predetermined order (e.g., row-first order or column-first order) to form a 1D vector and then the corresponding non-separable transform may be applied. For an LxK block, the input data may be read in the transposed order to form a 1D vector and then the corresponding non-separable transform may be applied. That is, when the KxL block is read in row-first order, the LxK block may be read in column-first order. Conversely, when the KxL block is read in column-first order, the LxK block may be read in row-first order.

In addition, when mode 34 is applied to the KxL block, a non-separable transform set may be determined based on mode 34, and the input data may be read in a pre-determined order to form a 1D vector and perform the corresponding non-separable transform. When mode 34 is applied to the LxK block, a non-separable transform set may be determined based on mode 34, but the input data may be read in a transposed order to form a 1D vector and perform the corresponding non-separable transform.

In the present disclosure, a method for determining a non-separable transform set and a method for forming input data are described based on a KxL block. However, the non-separable transform may be performed based on an LxK block by utilizing the symmetry described above for a KxL block. Alternatively, a block having a width greater than a height may be restricted to be used as a reference block. Alternatively, the symmetry may be restricted not to be utilized in the case of non-square blocks. In this case, a non-square block may use a different number of non-separable transform sets and/or transform kernel candidates than a square block, and may select a non-separable transform set using a different mapping table than a square block.

An example of a mapping table for selecting a non-separable transform set is as follows:

[Table 1]

| predModeIntra | TrSetIdx |
|---|---|
| predModeIntra < 0 | 4 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |

(continued)

| predModeIntra | TrSetIdx |
|---|---|
| 56 <= predModeIntra <= 66 | 1 |
| 67 <= predModeIntra <= 80 | 4 |

Table 1 shows an example of assigning a non-separable transform set for each intra prediction mode when there are five non-separable transform sets. The value of predModeIntra means the value of the intra prediction mode considering WAIP, and TrSetIdx is an index indicating a specific non-separable transform set. In Table 1, it may be confirmed that the same non-separable transform set is applied to modes located in symmetrical directions according to the intra prediction mode. Table 1 is only an example of using five non-separable transform sets, and does not limit the total number of non-separable transform sets for non-separable transform.

Alternatively, as shown in Table 2, the non-separable transform may not be applied to WAIP for compression performance.

[Table 2]

| predModeIntra | TrSetIdx |
|---|---|
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 66 | 1 |

Alternatively, as shown in Table 3, instead of configuring a separate non-separable transform set for WAIP, a non-separable transform set corresponding to an adjacent intra prediction mode may be shared.

[Table 3]

| predModeIntra | TrSetIdx |
|---|---|
| predModeIntra < 0 | 1 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 80 | 1 |

The non-separable transform set may include a plurality of transform kernel candidates, and one of the plurality of transform kernel candidates may be selectively used. For this purpose, an index signaled through a bitstream may be used. Alternatively, one of the plurality of transform kernel candidates may be implicitly determined based on context information of a current block. Here, the context information may mean a size of a current block or whether a non-separable transform is applied to a neighboring block. Here, the size of the current block may be defined as a width, a height, a maximum/minimum value of the width and the height, a sum of the width and the height, or a product of the width and the height.

Below, a method of determining the transform kernel for the inverse transform of the current block will be described in detail.

Embodiment 1

As described above, the inverse transform may be divided into a separable transform and a non-separable transform. The separable transform means performing transform in the horizontal direction and the vertical direction respectively for a two-dimensional block, and the non-separable transform may mean performing a single transform for samples constituting the entire or a part of the two-dimensional block. When expressing a separable transform, it may be expressed as a pair of a horizontal transform and a vertical transform, and in the present disclosure, it will be expressed as (horizontal transform, vertical transform).

A plurality of transform sets may be defined for the inverse transform of the current block. Each transform set may include one or more transform kernel candidates.

For example, one of (DST-7, DST-7), (DCT-8, DST-7), (DST-7, DCT-8), or (DCT-8, DCT-8) may be applied as a separable transform, and the above four transform kernel candidates may be regarded as one transform set. In addition, (DCT-2, DCT-2) may be regarded as one transform set. A transform skip that does not apply a transform may also be regarded as one transform set, and (DCT-2, DCT-2) and the transform skip may be regarded as one transform set. In the present disclosure, a transform kernel may refer to one transform (e.g., DCT-2, DST-7) or may refer to two transform pairs (e.g., (DCT-2, DCT-2)).

As another example of a transform set, there may be the above-described non-separable transform set. In the present disclosure, a non-separable transform applied as a primary transform may be denoted as a Non-Separable Primary Transform (NSPT). In NSPT, a plurality of non-separable transform sets may be configured, and each non-separable transform set may include one or more transform kernels as transform kernel candidates. In the case of NSPT, one of the plurality of non-separable transform sets is selected based on the intra prediction mode, and the plurality of non-separable transform sets for NSPT may be denoted as an NSPT set list. This is as described above, and a detailed description thereof will be omitted here.

A group of one or more transform sets available for a current block may be configured from a plurality of pre-defined transform sets. The group of one or more transform sets may be configured in a predetermined area unit to which the current block belongs, and is hereinafter referred to as a collection. Here, the predetermined area unit may be at least one of a picture, a slice, a coding tree unit row (CTU row), or a coding tree unit (CTU).

For example, a transform set consisting of (DCT-2, DCT-2) is called $S_1$, and a transform set consisting of (DST-7, DST-7), (DCT-8, DST-7), (DST-7, DCT-8), and (DCT-8, DCT-8) is called $S_2$. In addition, the above-described NSPT set list may include N non-separable transform sets, and the N non-separable transform sets are called $S_{3,1}$, $S_{3,2}$, ..., $S_{3,N}$, respectively. Here, N may be 35, but is not limited thereto.

When S3,13 is selected as the non-separable transform set for NSPT based on the intra prediction mode of the current block, the transform kernel applicable to the current block may belong to one of $S_1$, $S_2$, or $S_{3,13}$. In this case, the collection available for the current block may be denoted as $\{S_1, S_2, S_{3,13}\}$.

As described above, since a collection according to the present disclosure is a group of one or more transform sets available for a current block, the collection may be configured differently based on the context of the current block. Here, the context may include at least one of a shape, a size, or an intra prediction mode. If a total of K contexts are defined, K collections may be generated, and each collection may be denoted as Ci (i=1, 2, ..., N). For example, when the sizes of blocks to which NSPT is applicable are 4x4, 8x8, 16x16, and 32x32 and one of a total of 35 non-separable transform sets is selected based on the intra prediction mode, a total of 4 x 35 = 140 contexts may be defined if different transform kernels are applied for each size of the block.

A collection may be configured based on the context of the current block, and in this case, a process of selecting one of a plurality of transform sets belonging to the collection and selecting one of a plurality of transform kernel candidates belonging to the selected transform set may be performed. Here, the selection of the transform set and the transform kernel candidate may be performed implicitly based on the context of the current block, or may be performed based on an explicitly signaled index. Alternatively, the process of selecting one of a plurality of transform sets belonging to the collection and the process of selecting one of a plurality of transform kernel candidates belonging to the selected transform set may be performed separately. For example, an index for selecting a transform set may be first signaled, and one of a plurality of transform sets belonging to the collection may be selected based on the index. Then, an index indicating one of a plurality of transform kernel candidates belonging to the transform set may be signaled, and one of the transform kernel candidates may be selected from the transform set based on the signaled index. The transform kernel of the current block may be determined based on the selected transform kernel candidate. Alternatively, selection of one transform set from the collection may be performed implicitly based on the context of the current block, and selection of one transform kernel candidate from the selected transform set may be performed based on a signaled index. Alternatively, selection of one transform set from the collection may be performed based on a signaled index, and selection of one transform kernel candidate from the selected transform set may be performed implicitly based on the context of the current block. Alternatively, selection of one transform set from the collection may be performed implicitly based on the context of the current block, and selection of one transform kernel candidate from the selected transform set may also be performed implicitly based on the context of the current block. Of course, when the number of transform sets belonging to the collection is 1, the index for selecting the transform set may not be signaled. Similarly, when the number of transform kernel candidates belonging to the selected transform set is 1, the index for indicating the transform kernel candidate may not be signaled. Alternatively, an index indicating one of all transform kernel candidates belonging to the current collection may be signaled. In this case, the process of selecting one transform set from the collection may be omitted. In this case, all transform sets belonging to the collection may be shuffled in consideration of priorities. For example, in the case of assigning small-length binary codes to small-value indices, such as truncated unary codes, it may be advantageous to assign small-value indices to transform kernel candidates that are more advantageous for improving coding performance. When shuffling all transform kernel candidates belonging to the collection in accordance with priorities, different shuffling may be applied to each collection. In addition, instead of shuffling all transform kernel candidates belonging to the collection, only some of them may be selectively shuffled.

Embodiment 2

The transform kernel for the inverse transform of the current block may be determined based on MTS (Multiple Transform Selection).

The MTS according to the present disclosure may use at least one of DST-7, DCT-8, DCT-5, DST-4, DST-1, or IDT (identity transform) as a transform kernel. In addition, the MTS according to the present disclosure may further include a transform kernel of DCT-2.

In the present disclosure, a plurality of MTS sets for MTS may be defined. Based on the size and/or an intra prediction mode of a current block, one of the plurality of MTS sets may be determined. For example, in determining one MTS set, 16 transform block sizes may be considered, and for a directional mode, the shape of the transform block and the symmetry between the intra prediction modes may be considered. For the WAIP (Wide Angle Intra Prediction) mode (i.e., -1 to -14 (or -15), 67 to 80 (or 81)), an MTS set corresponding to mode 2 may be applied for modes -1 to -14 (or -15), and an MTS set corresponding to mode 66 may be applied for modes 67 to 80 (or 81). A separate MTS set may be assigned for the MIP (Matrix-based Intra Prediction) mode.

For example, an MTS set according to transform block size and intra prediction mode may be assigned/defined as shown in Table 4 below.

[Table 4]

| Block size | | Intra prediction mode | | | | |
|---|---|---|---|---|---|---|
| width | height | [0, 1] | [2, 12] | [13, 23] | [24, 34] | MIP |
| 4 | 4 | 0 | 1 | 2 | 3 | 4 |
| 4 | 8 | 5 | 6 | 7 | 8 | 9 |
| 4 | 16 | 10 | 11 | 12 | 13 | 14 |
| 4 | 32 | 15 | 16 | 17 | 18 | 19 |
| 8 | 4 | 20 | 21 | 22 | 23 | 24 |
| 8 | 8 | 25 | 26 | 27 | 28 | 29 |
| 8 | 16 | 30 | 31 | 32 | 33 | 34 |
| 8 | 32 | 35 | 36 | 37 | 38 | 39 |
| 16 | 4 | 40 | 41 | 42 | 43 | 44 |
| 16 | 8 | 45 | 46 | 47 | 48 | 49 |
| 16 | 16 | 50 | 51 | 52 | 53 | 54 |
| 16 | 32 | 55 | 56 | 57 | 58 | 59 |
| 32 | 4 | 60 | 61 | 62 | 63 | 64 |
| 32 | 8 | 65 | 66 | 67 | 68 | 69 |
| 32 | 16 | 70 | 71 | 72 | 73 | 74 |
| 32 | 32 | 75 | 76 | 77 | 78 | 79 |

Table 4 shows the assignment of MTS sets according to 16 transform block sizes and intra prediction modes. The number of pre-defined MTS sets is 80, and the index indicating one of the 80 MTS sets may have a value from 0 to 79, as shown in Table 4.

[Table 5]

| MTS set index | Transform kernel candidate index | | | | | |
|---|---|---|---|---|---|---|
| | 0 | 1 | 2 | 3 | 4 | 5 |
| 0 | 18 | 24 | 17 | 23 | 8 | 12 |
| 1 | 18 | 3 | 7 | 22 | 0 | 16 |
| 2 | 18 | 2 | 17 | 22 | 3 | 23 |
| 3 | 18 | 3 | 15 | 17 | 12 | 23 |
| 4 | 18 | 12 | 3 | 19 | 10 | 13 |
| 5 | 18 | 12 | 19 | 23 | 13 | 24 |
| 6 | 18 | 12 | 17 | 2 | 3 | 23 |
| 7 | 18 | 2 | 17 | 22 | 12 | 23 |
| 8 | 18 | 2 | 11 | 17 | 22 | 23 |
| 9 | 18 | 12 | 19 | 23 | 3 | 10 |
| 10 | 16 | 12 | 13 | 24 | 7 | 8 |
| 11 | 16 | 2 | 11 | 23 | 12 | 18 |
| 12 | 13 | 17 | 2 | 22 | 12 | 18 |
| 13 | 17 | 11 | 2 | 21 | 12 | 18 |
| 14 | 16 | 13 | 19 | 22 | 3 | 10 |
| 15 | 18 | 12 | 13 | 7 | 14 | 22 |
| 16 | 16 | 12 | 11 | 1 | 18 | 22 |
| 17 | 17 | 13 | 3 | 22 | 12 | 18 |
| 18 | 6 | 12 | 1 | 22 | 13 | 17 |
| 19 | 16 | 12 | 13 | 15 | 2 | 23 |
| 20 | 18 | 24 | 23 | 19 | 12 | 17 |
| 21 | 18 | 24 | 2 | 17 | 0 | 23 |
| 22 | 17 | 3 | 4 | 22 | 2 | 13 |
| 23 | 18 | 12 | 19 | 23 | 3 | 15 |
| 24 | 18 | 12 | 19 | 23 | 3 | 10 |
| 25 | 6 | 12 | 18 | 24 | 13 | 19 |
| 26 | 6 | 12 | 2 | 21 | 13 | 18 |
| 27 | 17 | 11 | 1 | 22 | 2 | 18 |
| 28 | 16 | 17 | 3 | 11 | 12 | 23 |
| 29 | 8 | 12 | 19 | 23 | 11 | 24 |
| 30 | 16 | 13 | 7 | 23 | 12 | 19 |
| 31 | 6 | 12 | 1 | 11 | 18 | 22 |
| 32 | 17 | 11 | 1 | 21 | 12 | 18 |
| 33 | 6 | 11 | 17 | 21 | 12 | 18 |
| 34 | 8 | 11 | 14 | 17 | 12 | 22 |
| 35 | 6 | 12 | 11 | 21 | 14 | 16 |
| 36 | 6 | 12 | 11 | 1 | 17 | 21 |
| 37 | 6 | 12 | 11 | 2 | 17 | 21 |

(continued)

| MTS set index | Transform kernel candidate index | | | | | |
|---|---|---|---|---|---|---|
| | 0 | 1 | 2 | 3 | 4 | 5 |
| 38 | 6 | 11 | 21 | 1 | 12 | 17 |
| 39 | 16 | 12 | 11 | 7 | 1 | 5 |
| 40 | 8 | 12 | 19 | 24 | 11 | 17 |
| 41 | 18 | 13 | 1 | 22 | 2 | 24 |
| 42 | 6 | 2 | 17 | 21 | 19 | 22 |
| 43 | 16 | 12 | 11 | 19 | 8 | 15 |
| 44 | 8 | 12 | 17 | 24 | 13 | 15 |
| 45 | 6 | 12 | 19 | 21 | 17 | 18 |
| 46 | 6 | 12 | 13 | 21 | 2 | 18 |
| 47 | 16 | 2 | 17 | 21 | 1 | 11 |
| 48 | 6 | 17 | 19 | 23 | 12 | 16 |
| 49 | 6 | 12 | 14 | 17 | 8 | 22 |
| 50 | 6 | 7 | 11 | 21 | 9 | 12 |
| 51 | 16 | 12 | 11 | 1 | 7 | 21 |
| 52 | 6 | 12 | 11 | 1 | 17 | 21 |
| 53 | 6 | 12 | 11 | 21 | 1 | 16 |
| 54 | 8 | 7 | 9 | 11 | 12 | 21 |
| 55 | 6 | 12 | 7 | 11 | 14 | 21 |
| 56 | 6 | 12 | 7 | 11 | 1 | 21 |
| 57 | 16 | 12 | 11 | 1 | 2 | 21 |
| 58 | 6 | 11 | 17 | 21 | 1 | 12 |
| 59 | 6 | 12 | 7 | 11 | 9 | 21 |
| 60 | 18 | 12 | 14 | 21 | 6 | 21 |
| 61 | 16 | 11 | 1 | 22 | 2 | 17 |
| 62 | 16 | 11 | 1 | 22 | 2 | 17 |
| 63 | 16 | 13 | 15 | 7 | 14 | 19 |
| 64 | 8 | 12 | 1 | 19 | 16 | 23 |
| 65 | 6 | 12 | 7 | 9 | 13 | 21 |
| 66 | 6 | 12 | 13 | 2 | 7 | 18 |
| 67 | 16 | 12 | 1 | 21 | 11 | 17 |
| 68 | 16 | 11 | 7 | 19 | 12 | 15 |
| 69 | 8 | 12 | 7 | 11 | 14 | 21 |
| 70 | 6 | 12 | 7 | 11 | 8 | 9 |
| 71 | 6 | 12 | 7 | 11 | 2 | 21 |
| 72 | 6 | 12 | 1 | 11 | 21 | 22 |
| 73 | 6 | 7 | 11 | 16 | 9 | 12 |
| 74 | 6 | 12 | 7 | 11 | 9 | 21 |
| 75 | 6 | 12 | 7 | 11 | 13 | 17 |

(continued)

| MTS set index | Transform kernel candidate index | | | | | |
|---|---|---|---|---|---|---|
| | 0 | 1 | 2 | 3 | 4 | 5 |
| 76 | 6 | 12 | 11 | 21 | 2 | 7 |
| 77 | 6 | 12 | 1 | 11 | 2 | 7 |
| 78 | 6 | 12 | 7 | 11 | 16 | 21 |
| 79 | 6 | 12 | 7 | 11 | 9 | 16 |

Table 5 shows transform kernel candidates included in each MTS set described in Table 4. Each MTS set may be composed of six transform kernel candidates. The transform kernel candidate index has a value of one of 0 to 5 and may indicate one of the six transform kernel candidates. Here, each transform kernel candidate may be a combination of a horizontal transform kernel and a vertical transform kernel for a separable transform, and 25 transform kernel candidates having indices of 0 to 24 may be defined.

[Table 6]

| Kernel Combination Index | when the value of the intra prediction mode is less than 35 | when the value of the intra prediction mode is greater than or equal to 35 |
|---|---|---|
| 0 | (DCT-8, DCT-8) | (DCT-8, DCT-8) |
| 1 | (DST-7, DCT-8) | (DCT-8, DST-7) |
| 2 | (DCT-5, DCT-8) | (DCT-8, DCT-5) |
| 3 | (DST-4, DCT-8) | (DCT-8, DST-4) |
| 4 | (DST-1, DCT-8) | (DCT-8, DST-1) |
| 5 | (DCT-8, DST-7) | (DST-7, DCT-8) |
| 6 | (DST-7, DST-7) | (DST-7, DST-7) |
| 7 | (DCT-5, DST-7) | (DST-7, DCT-5) |
| 8 | (DST-4, DST-7) | (DST-7, DST-4) |
| 9 | (DST-1, DST-7) | (DST-7, DST-1) |
| 10 | (DCT-8, DCT-5) | (DCT-5, DCT-8) |
| 11 | (DST-7, DCT-5) | (DCT-5, DST-7) |
| 12 | (DCT-5, DCT-5) | (DCT-5, DCT-5) |
| 13 | (DST-4, DCT-5) | (DCT-5, DST-4) |
| 14 | (DST-1, DCT-5) | (DCT-5, DST-1) |
| 15 | (DCT-8, DST-4) | (DST-4, DCT-8) |
| 16 | (DST-7, DST-4) | (DST-4, DST-7) |
| 17 | (DCT-5, DST-4) | (DST-4, DCT-5) |
| 18 | (DST-4, DST-4) | (DST-4, DST-4) |
| 19 | (DST-1, DST-4) | (DST-4, DST-1) |
| 20 | (DCT-8, DST-1) | (DST-1, DCT-8) |
| 21 | (DST-7, DST-1) | (DST-1, DST-7) |
| 22 | (DCT-5, DST-1) | (DST-1, DCT-5) |
| 23 | (DST-4, DST-1) | (DST-1, DST-4) |
| 24 | (DST-1, DST-1) | (DST-1, DST-1) |

Table 6 is an example of the 25 transform kernel candidates described in Table 5. Specifically, the horizontal transform and vertical transform of the transform kernel candidate are expressed as (horizontal transform, vertical transform). For each transform kernel candidate index, the horizontal/vertical transform when the intra prediction mode is less than 35 may be the opposite of the horizontal/vertical transform when the intra prediction mode is greater than or equal to 35. When the value of the intra prediction mode is greater than or equal to 35, a mode symmetrical with respect to mode 34 may be derived, and an MTS set may be selected from Table 4 based on the mode. In addition, the symmetry of the block shape may be additionally considered. When the original transform block has a WxH size, the original transform block may be considered to have a HxW size by symmetrizing it, and an MTS set may be selected from Table 4. Here, the value of the intra prediction mode may be the value of the modified intra prediction mode. That is, as a mode value for WAIP, for from -14 (or -15) to -1, it is modified to mode 2, for from 67 to 80 (or 81), it is modified to mode 66, and for the remaining modes, the value of the original intra prediction mode may be set as the value of the modified intra prediction mode. In this case, since the extended modes for WAIP are also configured symmetrically with respect to mode 34, the symmetry with respect to mode 34 may be used for all directional modes except for the Planar mode and the DC mode.

For example, when a 16x32 block is predicted based on mode 54, mode 14 (=68-54) may be derived as a mode symmetrical to mode 54, and the block size may be regarded as 32x16. In this case, an MTS set with an index of 72 may be selected, as defined in Table 4.

When the MIP mode is applied, the MTS set assigned to the MIP mode may be selected based on the size of the current block without considering the symmetry of the block shape. Alternatively, when the MIP mode is applied, the MTS set assigned to the MIP mode may be selected based on the symmetrical block size considering the symmetry of the block shape. For example, when the MIP mode is applied for an 8x16 block, the 8x16 block may be regarded as a 16x8 block symmetrical to this, and an MTS set having an index of 49 may be selected as defined in Table 4. Alternatively, when the MIP mode is applied, the intra prediction mode may be regarded as the Planar mode. In this case, the MTS set assigned to the MIP mode may be selected based on the size of the current block without considering the symmetry of the block shape. Alternatively, the MTS set assigned to the MIP mode may be selected based on the symmetrical block size considering the symmetry of the block shape.

For MIP mode, a flag may be used to indicate whether the MIP mode is applied in transpose mode. When the MIP mode is applied to the current block of MxN and the flag indicates that the transpose mode is applied, the intra prediction mode may be regarded as Planar mode, and the current block of MxN may be regarded as an NxM block. That is, from Table 4, an MTS set corresponding to the block size of NxM and the Planar mode may be selected. As described in Table 6, when the value of the intra prediction mode is greater than or equal to 35, the horizontal transform and the vertical transform are swapped, but since the intra prediction mode of the current block is regarded as the Planar mode, the horizontal transform and the vertical transform of the transform kernel candidate may not be swapped. Alternatively, when the MIP mode is applied to the current block of MxN and the flag indicates that the transpose mode is applied, the intra prediction mode may not be regarded as the Planar mode, and the current block of MxN may be regarded as an NxM block. That is, from Table 4, an MTS set corresponding to the block size of NxM and the MIP mode may be selected.

In Table 5, a transform kernel candidate selected by a transform kernel candidate index may be set as a transform kernel of the current block. Alternatively, based on the size of the current block, at least one of a horizontal transform or a vertical transform of the selected transform kernel candidate may be changed to another transform kernel. For example, when the transform kernel candidate index is 3 and both the width and the height of the current block are less than or equal to 16, at least one of a horizontal transform or a vertical transform of the transform kernel candidate corresponding to the transform kernel candidate index of 3 may be changed to another transform kernel. In this case, the horizontal transform and the vertical transform may be changed independently of each other. When the difference (or the absolute value of the difference) between the value of the intra prediction mode of the current block and the value of the horizontal mode is less than or equal to a predetermined threshold, the vertical transform of the selected transform kernel candidate may be changed to IDT (identity transform). When the difference (or the absolute value of the difference) between the value of the intra prediction mode of the current block and the value of the vertical mode is less than or equal to a predetermined threshold, the horizontal transform of the selected transform kernel candidate may be changed to IDT (identity transform). Here, the threshold may be determined based on the width and height of the current block, as shown in Table 7 below.

[Table 7]

| Block size | | Threshold |
|---|---|---|
| width | height | |
| 4 | 4 | 8 |
| 4 | 8 | 6 |
| 4 | 16 | 4 |
| 8 | 4 | 8 |

(continued)

| Block size | | Threshold |
|---|---|---|
| width | height | |
| 8 | 8 | 8 |
| 8 | 16 | 6 |
| 16 | 4 | 4 |
| 16 | 8 | 2 |
| 16 | 16 | -1 |

Table 7 is for changing the horizontal transform and/or vertical transform of a transform kernel candidate selected by a transform kernel candidate index to another transform kernel and defines thresholds according to the size of a transform block.

Six transform kernel candidates composing one MTS set may be distinguished by transform kernel candidate indices from 0 to 5 as defined in Table 5. The transform kernel candidate index may be signaled via a bitstream. A flag indicating whether the MTS set is available/applied (MTS enabled flag or MTS flag) may be signaled, and a transform kernel candidate index may be signaled when the flag indicates that the MTS set is available/applied. The MTS flag may be composed of one bin, and one or more contexts for CABAC-based entropy coding (hereinafter, referred to as CABAC contexts) may be assigned to the bin. For example, different CABAC contexts may be assigned for non-MIP mode and MIP mode, respectively.

Based on the context of the current block described above, the number of transform kernel candidates available for the current block may be set differently. For example, as the context of the current block, the sum of the absolute values of all or some of the transform coefficients in the current block may be considered. The sum of the absolute values of the transform coefficients is referred to as AbsSum. When AbsSum is less than or equal to T1, only one transform kernel candidate corresponding to the transform kernel candidate index of 0 may be available. When AbsSum is greater than T1 and less than or equal to T2, four transform kernel candidates corresponding to the transform kernel candidate indices of 0 to 3 may be available. When AbsSum is greater than T2, six transform kernel candidates corresponding to the transform kernel candidate indices of 0 to 5 may be available. Here, T1 may be 6 and T2 may be 32, but this is only an example.

When AbsSum is less than or equal to T1, since the number of transform kernel candidates available for the current block is 1, the transform kernel candidate corresponding to the transform kernel candidate index of 0 may be set as the transform kernel of the current block without signaling the transform kernel candidate index. When AbsSum is greater than T1 and less than or equal to T2, since four transform kernel candidates are available, one of the four transform kernel candidates may be selected based on the transform kernel candidate index with two bins. That is, the transform kernel candidate indices of 0 to 3 may be signaled as 00, 01, 10, and 11, respectively. For the two bins, the MSB (Most Significant Bit) may be signaled first and the LSB (Least Significant Bit) may be signaled later. Different CABAC contexts may be assigned to each bin. For example, a CABAC context other than the CABAC context assigned for the MTS flag may be assigned to each bin for the two bins. Alternatively, bypass coding may be applied without assigning a CABAC context to the two bins. When AbsSum is greater than T2, the transform kernel candidate index has a value from 0 to 5, so the transform kernel candidate index cannot be expressed with only two bins. In this case, the transform kernel candidate index may be expressed by assigning two or more bins, such as truncated binary coding. For each bin assigned by the truncated binary coding method, a CABAC context may be assigned, or bypass coding may be applied without assigning a CABAC context. Alternatively, a CABAC context may be assigned to some of the plurality of bins (e.g., the first bin, or the first and second bins), and bypass coding may be applied to the remaining bins.

Embodiment 3

The transform kernel of the current block may be determined based on a transform set including one or more transform kernel candidates. The transform kernel of the current block may be derived as one of one or more transform kernel candidates belonging to the transform set.

The process of determining the transform kernel of the current block may include at least one of 1) the process of determining the transform set of the current block or 2) the process of selecting one transform kernel candidate from the transform set of the current block. The process of determining the transform set may be the process of selecting one of a plurality of transform sets that are identically pre-defined in the encoding apparatus and the decoding apparatus. Alternatively, the process of determining the transform set may be a process of configuring one or more transform sets available for the current block from among a plurality of transform sets that are identically pre-defined in the encoding apparatus and the decoding apparatus, and selecting one of the configured transform sets. Alternatively, the process of determining the transform set may be a process of configuring one transform set based on a transform kernel candidate available for the current block from among a plurality of transform kernel candidates that are identically pre-defined in the encoding apparatus and the decoding apparatus.

When the transform set of the current block includes a plurality of transform kernel candidates, a process of selecting one of the plurality of transform kernel candidates for the current block may be performed. However, when the transform set of the current block includes one transform kernel candidate (i.e., when the number of transform kernel candidates available for the current block is 1), the transform kernel of the current block may be set to the corresponding transform kernel candidate.

The transform set according to the present disclosure may mean the (non-separable) transform set in the above-described Embodiment 1, or may mean the MTS set in the Embodiment 2. Alternatively, the transform set may be defined separately from the (non-separable) transform set in Embodiment 1 or the MTS set in Embodiment 2. In this case, the transform set may include one or more specific transform kernels as transform kernel candidates. One specific transform kernel may be defined as a pair of a transform kernel for horizontal transform and a transform kernel for vertical transform, or may be defined as one transform kernel that is applied equally to horizontal and vertical transforms.

In the embodiment of the present disclosure, the process of applying NSPT, a non-separable transform applied as a primary transform, is described in detail. NSPT may be applied to the entire or a part of a transform block. Based on forward NSPT, a residual sample existing in a region where NSPT is applied may be input as a 1D vector of NSPT. In other words, residual samples existing in the entire or a part of a single transform block (referred to as a Region Of Interest (ROI) in the present disclosure) may be collected as a 1D vector and configured as an input. Then, when forward NSPT is applied, a primary transform coefficient may be obtained. Conversely, when backward NSPT is applied to a primary transform coefficient, a 1D vector output may be obtained. A residual sample for a ROI may be obtained by arranging each element value configuring a corresponding output vector at a position determined within a 2D transform block.

For a non-separable transform kernel for NSPT, a matrix dimension may be determined according to the size of a ROI. In the present disclosure, a transform kernel may be referred to as a transform type or a transform matrix, and a non-separable transform kernel for NSPT may be referred to as a NSPT kernel. For example, when a current block is a MxN transform block, a ROI is a region for the entire MxN transform block and square NSPT is applied, the dimension of a corresponding transform matrix may be MN x MN. For example, when a ROI is a region for the entire 8x8 transform block, the dimension of a NSPT kernel may be 64 x 64.

According to an embodiment of the present disclosure, when NSPT is applied to a residual generated by intra prediction, a NSPT kernel may be adaptively determined according to an intra prediction mode. Since a statistical characteristic for a residual block may vary depending on an intra prediction mode, compression efficiency may be improved by adaptively determining a NSPT kernel according to an intra prediction mode.

It may be configured to share a NSPT kernel that is applied to at least one intra prediction mode. As described above, a non-separable transform set may be determined based on the intra prediction mode of a current block and a mapping table. A mapping table may define a mapping relationship between pre-defined intra prediction modes and non-separable transform sets. The pre-defined intra prediction modes may include two non-directional modes and 65 directional modes.

As an embodiment, intra prediction modes may be grouped into an intra prediction mode group. One NSPT kernel may be allocated to or a plurality of NSPT kernels may be allocated to an intra prediction mode group. In other words, a non-separable transform set (NSPT set) including at least one NSPT kernel may be allocated to an intra prediction mode group. A non-separable transform set may be mapped to an intra prediction mode and one of the N NSPT kernels included in a non-separable transform set may be selected.

As an example, an intra prediction group may include adjacent prediction modes (e.g., modes 17, 18 and 19). In addition, an intra prediction group may include modes having symmetry. For example, directional modes may be symmetrical around a diagonal mode (i.e., intra prediction mode 34) in FIG. 5 described above. In this case, two symmetrical modes may configure one group (or pair). For example, mode 18 and mode 50 may be included in the same group because they are symmetrical around mode 34. However, for modes having symmetry, the process of transposing a 2D input block and then configuring a one-dimensional input vector may be added before applying a forward NSPT kernel. For example, when an intra prediction mode is less than or equal to 34, a one-dimensional input vector may be derived from a corresponding input block in the row first order without transposing a 2D input block. When an intra prediction mode is greater than 34, a one-dimensional input vector may be configured by transposing a 2D input block first and then reading a corresponding input block in the row first order or by leaving a 2D input block as it is and reading a corresponding input block in the column first order.

Table 8 below illustrates a mapping table for allocating a NSPT set according to an intra prediction mode. Referring to Table 8, a total of 35 NSPT sets from 0 to 34 may be defined. A NSPT set allocated to the nearest general directional mode may be allocated to an extended WAIP mode (i.e., modes -14 to -1 and modes 67 to 80 in FIG. 5). In other words, NSPT set 2 may be allocated to an extended WAIP mode.

[Table 8]

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| NSPT set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| NSPT set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| NSPT set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 | |

A NSPT set may include at least one NSPT kernel (or kernel candidate). In other words, a NSPT set may include N NSPT kernel candidates. As an example, N may be set as a value equal to or greater than 1 such as 1, 2, 3, 4, etc. A kernel applied to a current block among at least one NSPT kernel included in a NSPT set may be signaled by using an index. In the present disclosure, a corresponding index may be referred to as a NSPT index. As an example, a NSPT index may have a value of 0, 1, 2, ..., N - 1.

In addition, as an embodiment, when the number of NSPT kernel candidates is 1, a NSPT index value may be fixed to 0. In this case, a NSPT index may be inferred without being separately signaled. In addition, a flag indicating whether to apply NSPT may be signaled separately from a NSPT index. In the present disclosure, a corresponding flag may be referred to as a NSPT flag.

When a NSPT flag value is 1, NSPT may be applied. When a NSPT flag value is 0, NSPT may not be applied. When a NSPT flag is not signaled, a NSPT flag value may be inferred as 0. As an example, when a NSPT flag value is 1, a NSPT index may be applied. One of the N kernel candidates included in a NSPT set selected by an intra prediction mode may be specified based on a signaled NSPT index.

In an embodiment, the entropy coding method of a NSPT index may be defined in various ways by considering the number (N) of NSPT kernels included in a NSPT set. For example, as a method for mapping a value from 0 to N-1 to a bin string (i.e., a binarization method), truncated unary binarization, truncated binarization and fixed-length binarization methods may be used.

For example, when the value of N, the number of kernel candidates configuring a NSPT set, is 2, one of the two candidates may be specified with one bin. For example, 0 may indicate the first candidate and 1 may indicate the second candidate. In addition, when the value of N is 3 and truncated unary binarization is applied, a candidate may be specified with two bins. For example, the first, second and third candidates may be binarized to 0, 10 and 11, respectively, and signaled. As an embodiment, binarized bins may be coded by using context coding or bypass coding.

In the present disclosure, a reduced primary transform (RPT) method using a transform kernel of a reduced dimension as a primary transform is described. As described above, when forward NSPT is applied, samples belonging to a 2D residual block may be arranged (or rearranged) into a 1D vector according to the row-first order (or the column-first order). Afterwards, a transform matrix for NSPT may be multiplied by an arranged vector. When a corresponding 2D residual block is a M x N block (M is a horizontal length and N is a vertical length), the length of a rearranged 1D vector may be M*N. In other words, a corresponding 2D residual block may also be represented as a column vector having a dimension of M*N x 1. In the present disclosure, M*N may be expressed as MN for convenience. In this case, the dimension of a corresponding transform matrix may be MN x MN. In summary, forward NSPT may operate in a way that a MN x 1 transform coefficient vector is obtained by multiplying the left side of a MN x 1 vector by a corresponding MN x MN transform matrix.

When RPT is applied, r transform coefficients may be obtained by multiplying a r x MN matrix, instead of multiplying a MN x MN matrix, as a forward NSPT transform matrix described above. Here, r represents the number of rows of a transform matrix, and MN represents the number of columns of a transform matrix. According to an embodiment of the present disclosure, the value of r may be set to be less than or equal to MN. In other words, the existing forward NSPT transform matrix includes MN rows, and each row is a 1 x MN row vector and a transform basis vector of a corresponding NSPT transform matrix. A corresponding transform coefficient may be obtained by multiplying each transform basis vector by a MN x 1 sample column vector.

Since the existing forward NSPT transform matrix is composed of MN row vectors, MN transform coefficients (i.e., MN x 1 transform coefficient column vectors) may be obtained by applying forward NSPT. Meanwhile, for forward RPT, a transform matrix may be composed of r transform basis vectors instead of MN transform basis vectors. Accordingly, when forward RPT is applied, r, instead of MN, transform coefficients (i.e., r x 1 transform coefficient column vectors) may be obtained.

A RPT kernel may be configured by selecting r transform basis vectors which are a part of the transform basis vectors configuring a MN x MN forward NSPT kernel. In the present disclosure, a transform kernel may be referred to as a transform type or a transform matrix, and a non-separable transform kernel for NSPT may be referred to as a RPT kernel. In other words, when r 1 x MN row vectors are selected from a MN x MN forward NSPT kernel, it may be advantageous to select the most important transform basis vectors from the perspective of coding performance. Specifically, in terms of energy compaction through transform, more energy may be concentrated on transform coefficients that appear first by multiplying a forward NSPT transform matrix. In other words, a transform basis vector positioned on the top side of a forward NSPT transform matrix may generate a transform coefficient having greater energy. Considering this, a r x MN forward RPT kernel may be configured (or derived) by taking r from the top side of a forward NSPT kernel.

RPT according to the present disclosure takes only a part (i.e., r) of the transform coefficients obtained by applying the existing NSPT and accordingly, the original signal's energy may be partially lost. In other words, distortion between an original signal and a natural signal may occur through a corresponding process. Nevertheless, since only r, instead of MN, transform coefficients are generated by applying RPT, the amount of bits required to code corresponding transform coefficients may be reduced. Therefore, for a signal where a large amount of energy is concentrated on a small number of transform coefficients (e.g., an image residual signal), gains obtained by reducing signaling bits may be significantly large, thereby improving coding performance.

Backward NSPT is a transform matrix, and may be a transpose matrix of a forward NSPT kernel described above. In this case, input data may be a transform coefficient signal instead of a sample signal such as a residual signal. Specifically, when a forward NSPT transform matrix is G and a sample signal rearranged into a 1D vector is x, a transform coefficient vector obtained by multiplying a corresponding transform matrix by the left side may be expressed as in Equation 4 below.

[Equation 4]

$$y = Gx$$

Referring to Equation 4, x and y may be a MN x 1 column vector. G may have the form of a MN x MN matrix. A backward NSPT process may be expressed as in Equation 5 below by using the same variable.

[Equation 5]

$$x = G^T y$$

In Equation 5, $G^T$ means a transpose matrix of G. A forward RPT operation and a backward RPT operation according to the present disclosure may also be expressed by the two equations. However, when RPT is applied, y is a r x 1 column vector instead of a MN x 1 column vector, and G is a r x MN matrix instead of a MM x MN matrix. In other words, even when RPT instead of NSPT is applied, the dimension of a sample signal (e.g., an image residual signal) is not changed, which may mean that the original number of sample signals (i.e., MN sample signals) may be reconstructed with only r transform coefficients through backward RPT. In other words, the original MN sample signals may be reconstructed by coding only r transform coefficients that are less than MN, which may improve coding performance.

In an embodiment of the present disclosure, a RPT structure is proposed that defines the value of r by considering the statistical characteristics of a residual block and derives a residual block of the existing transform block size from a residual block of a reduced size determined according to the defined value of r. If another additional transform (i.e., a secondary transform) is applied to predict the statistical distribution of a primary transform coefficient, a quantization process is applied to a primary transform coefficient, so quantized non-zero coefficients may be concentrated in a relatively low frequency domain. Accordingly, a reduced secondary transform for the statistical distribution of a primary transform coefficient may define the statistical characteristics of a primary transform coefficient relatively simply in the form of setting the value of r for a given low frequency domain. However, RPT according to the present disclosure has a fundamental difference from a reduced secondary transform as a technology for defining the value of r by considering the statistical characteristics of samples within a residual block having a very different characteristic from the distribution of a primary transform coefficient. Hereinafter, various embodiments for determining a RPT kernel which is a transform matrix of a reduced dimension are described. In other words, a method for determining or defining the value of r in RPT is described below.

In an embodiment of the present disclosure, the value of r in RPT may be determined by considering the worst case complexity allowed by a transform system. As an embodiment, the worst case complexity may be calculated based on the number of multiplications per sample. MN * r multiplications are needed to apply RPT in both forward and backward directions based on a M x N block. Since a 2D block is composed of a total of MN samples, the number of multiplications per sample may be calculated as (MN * r) / MN = r. Accordingly, the value of r may be configured to be maintained less than or equal to the maximum number of multiplications per sample allowed. For example, when the maximum possible number of multiplications per sample is set as 16 for a 16x16 block, the value of r may be determined to be less than or equal to 16. In other words, a forward RPT kernel may be set as 16 x 256.

In another embodiment, memory usage may be considered as a measure of the worst case complexity. As an example, a memory size allowed per kernel may be set. For example, when p bytes are needed per kernel coefficient (in the present disclosure, each element configuring a transform kernel is referred to as a kernel coefficient) and the memory usage is set to be less than or equal to q bytes per kernel, the value of r may be set to be less than or equal to q / (MN * p). For example, when p is 1 byte for a forward RPT kernel for a 16x16 block and the memory usage is set to be less than or equal to 8KB per kernel (q = 8 KB = $2^{13}$ bytes), the value of r may be set to be less than or equal to 32.

In addition, as another example, the memory usage and/or the number of multiplications per sample may be considered as a measure of the worst case complexity. For example, when the maximum possible number of multiplications per sample is set as 16 for a 16x16 block and the memory usage is set to be less than or equal to 8KB per kernel (a kernel coefficient is expressed as 1 byte), the value of r may be set to be less than or equal to 16.

In addition, in an embodiment, the value of r configuring a RPT kernel may be determined by specific information. In other words, the value of r configuring a RPT kernel may be determined based on a predefined encoding parameter. For example, the value of r may be determined based on the size of a block. In other words, a RPT kernel may be variably determined based on the size of a block. Here, a block may be at least one of a coding block, a transform block and a prediction block. In addition, for example, the value of r may be determined based on prediction information. Here, prediction information may include information about inter/intra prediction, intra prediction mode information, etc. In addition, for example, the value of r may be determined based on signaled information (the value of a syntax element). For example, the value of r may be variably determined according to a quantization parameter value. In addition, in terms of complexity improvement, a fixed value predefined as the value of r may be used, and the predefined fixed value may be determined based on signaled information.

When a sample signal is multiplied by a RPT kernel r x MN, r transform coefficients may be obtained. The obtained r transform coefficients may be arranged according to the predefined scan order of transform coefficients (e.g., forward/backward zig-zag scan order, forward/backward horizontal scan order, forward/backward vertical scan order, forward/backward diagonal scan order, scan order specified based on an intra prediction mode, etc.). When transform coefficients obtained by applying forward RPT are arranged according to this scan order (e.g., scan order in the unit of a coefficient group (CG) may also be applied), if the value of r is smaller than MN, the inside of a M x N block may not be completely filled with r transform coefficients, so an empty space may occur. As an embodiment of the present disclosure, an empty space described above may be predicted in the following manner by considering the characteristics of a residual signal.

- The value of an empty space may be filled by using the value of an available neighboring pixel.
- The value of an empty space may be filled based on the value of an available neighboring pixel and an intra prediction mode. For example, the value of an empty space may be predicted by performing intra prediction based on the value of an available neighboring pixel and an intra prediction mode.
- The value of an empty space may be filled by using a predefined fixed value (e.g., 0).
- The value of an empty space may be filled from an available neighboring pixel by using a predetermined intra prediction mode (e.g., a planar mode).

In the present disclosure, filling an empty space with 0 among the above-described examples may be referred to as a zero-out process. When an empty space is filled with 0, the following embodiment may be applied. When a non-zero transform coefficient is detected (or parsed) in a corresponding empty space part during parsing of a transform coefficient on the decoding device side, it may be considered (or inferred) that RPT is not applied. In other words, when a non-zero transform coefficient exists in a predefined region representing the corresponding empty space, it may be considered that RPT is not applied. In this case, signaling (or parsing) for a flag indicating whether to apply RPT and/or an index designating one of a plurality of RPT kernel candidates may not be performed. As an example, when a non-zero transform coefficient exists in a predefined region representing the corresponding empty space, a predefined variable value may be updated, and it may be inferred that RPT is not applied based on an updated variable value.

In an embodiment of the present disclosure, whether to apply RPT may be determined based on the size and/or form of a block. In addition, a RPT kernel may be variably determined according to the size and/or form of a block. Since the value of r may be different according to the size and/or form of a block (i.e., for each M x N block), an empty space may be different according to the size and/or form of a block. Accordingly, a region for checking whether a non-zero transform coefficient is detected may be defined differently for each size and/or form of a block. In other words, a zero-out region may be variably determined.

As an example, when a 16x64 matrix is applied as a forward RPT matrix for a 8x8 block, the value of r may be 16. In this case, when a CG is a 4x4 sub-block, only a top-left 4x4 block may be filled with non-zero RPT transform coefficients, and the remaining three 4x4 sub-blocks (i.e., top-right, bottom-left and bottom-right sub-blocks) that are an empty space may be filled with the value of 0. In this case, when a non-zero transform coefficient is detected in the corresponding remaining three 4x4 sub-block regions during a decoding process, it may be considered that RPT is not applied. And, as described above, a flag indicating whether to apply RPT or an index designating one of a plurality of RPT kernel candidates may not be signaled.

In addition, as an example, when a 32x128 matrix is applied as a forward RPT matrix for a 16x8 block (i.e., the value of r is 32) and a CG is a 4x4 sub-block, only two CGs in scan order may be filled with non-zero RPT transform coefficients. For example, a top-left 4x4 sub-block and a 4x4 sub-block adjacent to the bottom of a top-left sub-block may be filled with corresponding RPT transform coefficients. A region filled with 0 as an empty space may be determined as the remaining region excluding corresponding two 4x4 sub-blocks. A RPT kernel may be variably determined according to the size and/or form of a block, and as described, an empty space may be determined differently for a 8x8 block and a 16x8 block.

As an embodiment, when the value of r is a multiple of a CG size and a transform coefficient is scanned in the unit of a CG, if a non-zero transform coefficient is detected in CGs belonging to an empty space, a flag and/or an index related to RPT may not be signaled. In other words, transform coefficients inside a CG may be scanned in designated order for each CG, and transform coefficients inside a CG may be scanned in the same manner after moving on to the next CG in scan order for the unit of a CG. In the existing image compression technology, since a flag for whether a non-zero transform coefficient exists in a corresponding CG is signaled first for each CG, whether to apply RPT may be determined only with corresponding information, which may reduce signaling overhead and related implementation complexity.

As described above, when RPT is applied, if a non-zero transform coefficient is detected in an empty space region filled with 0, RPT may not be applied. In this case, signaling for information related to RPT may be omitted. However, since it is not possible to determine whether to apply RPT when a non-zero transform coefficient is not detected in a corresponding empty space region, a flag representing whether to apply RPT may be parsed after parsing (or signaling) a related transform coefficient to finally determine whether to apply RPT.

As an embodiment, a forward secondary transform may be additionally applied to transform coefficients generated by applying RPT. Alternatively, a forward secondary transform may be additionally applied to a region where corresponding generated transform coefficients are positioned in a M x N block. In the present disclosure, a corresponding region or a part of a corresponding region may be referred to as a ROI from the perspective of a forward secondary transform. For a backward direction, a backward secondary transform may be applied first and then backward RPT may be applied. Specifically, a region where r transform coefficients generated by applying forward RPT are arranged or a part of a corresponding region may be set as a ROI to apply a forward secondary transform. In this case, when a 16x64 forward RPT transform matrix is applied to a 8x8 region, generated 16 transform coefficients may be positioned in a top-left 4x4 sub-block, and a corresponding sub-block region may be set as a ROI to apply a forward secondary transform to a corresponding ROI.

In addition, a RPT kernel may adjust a coefficient value by considering an operation such as an integer operation or a fixed-point operation. In other words, a RPT kernel may be configured to perform transform through an integer operation (or a fixed-point operation) in an actual codec system by appropriately scaling kernel coefficients belonging to a corresponding kernel, not a theoretical orthogonal transform or non-orthogonal transform (here, an orthogonal transform and a non-orthogonal transform represent a transform in which the norm of each transform basis vector is 1). It may be reflected equally even when RPT is applied as much as a scaling factor multiplied when applying a separable transform in the existing image compression technology. In this case, a separable transform or a non-separable transform (including RPT) may be performed while maintaining other processes (e.g., quantization and dequantization processes) other than transform.

The integerized coefficient of a RPT kernel may be obtained by multiplying a transform basis vector by a scaling value described above. As an embodiment, multiplying a scaling value may include applying an operation such as rounding, floor, ceiling, etc. to each kernel coefficient. In other words, an integerized RPT kernel obtained through the above-described method may be defined and used for a transform/inverse transform process. As described above, when kernel coefficients of a scaled integer value are obtained through an operation such as rounding, floor, ceiling, etc., the maximum value and the minimum value may be obtained for all kernel coefficients, so the number of bits enough to express all kernel coefficients may be obtained from the maximum value and the minimum value. For example, when the maximum value is less than or equal to 127 and the minimum value is greater than or equal to -128, all integer kernel coefficients may be expressed in 8 bits (especially, through two's complement expression, etc.).

Generally, when the maximum value is less than or equal to $(2^{(N-1)} - 1)$ and the minimum value is greater than or equal to $-2^{(N-1)}$, all integer kernel coefficients may be expressed in N bits. When the maximum value is greater than $(2^{(N-1)} - 1)$ or the minimum value is less than $-2^{(N-1)}$, all integer kernel coefficients may not be expressed in N bits. In this case, 1) all kernel coefficients may be additionally multiplied by a scaling value to adjust them to fall within the range of N bits, or 2) the number of bits needed to express a kernel coefficient may be increased (i.e., N+1 bits or more). When all kernel coefficients need to be multiplied by $2^{-p}$ (p >= 1) to express them with N bits, they may be compensated by multiplying by $2^{-p}$ afterwards so that they are fused into the existing encoding/decoding process. As an embodiment, multiplying by $2^p$ may be implemented by additionally performing a shift operation by p bits to the left or reducing the amount of right shift applied in a quantization or dequantization process by p.

All kernel coefficients may be expressed in 8-bit, 9-bit, 10-bit, etc. by using a method described above, and of course, the scaling value of a kernel coefficient may be set differently for each block size or kernel and the number of bits for expressing a kernel coefficient may be set differently.

NSPT described above may be applied based on at least one of the size, tree type, or component type of a current block. As an example, whether to apply NSPT may be determined based on at least one of the size, tree type, or component type of a current block. A NSPT index may be signaled based on at least one of the size, tree type, or component type of a current block. A NSPT set or a NSPT kernel may be derived based on at least one of the size, tree type, or component type of a current block.

Allowed transform block sizes pre-defined in a decoding device may be largely divided into two groups. Any one of the two groups (hereinafter, referred to as the first group) may mean a set of block sizes to which NSPT is applicable. The first group may be composed of any one of the allowed transform block sizes or may be composed of two or more block sizes among the allowed block sizes. A block size to which NSPT is applicable may be defined as a block size in which at least one of a width and a height is less than or equal to a predetermined threshold value. Alternatively, a block size to which NSPT is applicable may be defined as a block size in which the product of a width and a height is less than or equal to a predetermined threshold value. Alternatively, a block size to which NSPT is applicable may be defined as a block size in which the maximum value of a width and a height is less than or equal to a predetermined threshold value. The threshold value may be an integer of 4, 8, 16, 32, 64, 128 or higher.

Another one of the two groups (hereinafter, referred to as the second group) may mean a set of block sizes to which NSPT is not applied. The above-described separable primary transform may be applied to block sizes belonging to the second group. In addition, a non-separable secondary transform may be applied to all or part of the block sizes belonging to the second group.

For example, when the size of a current block belongs to the first group, backward NSPT may be applied to the (dequantized) transform coefficient of a current block. When the size of a current block belongs to the second group, a backward separable primary transform may be applied to the (dequantized) transform coefficient of a current block. Alternatively, when the size of a current block belongs to the second group, a backward non-separable secondary transform (e.g., low frequency non-separable transform, LFNST) may be applied first to the (dequantized) transform coefficient of a current block and a backward separable primary transform (e.g., DCT-2) may be applied to a transform coefficient obtained therefrom.

As an example, the first group, which is a set of block sizes to which NSPT is applicable, may be defined as a set of 4x4, 4x8, 8x4 and 8x8. Alternatively, the first group may be defined as a set of 4x8, 8x4 and 8x8. Alternatively, the first group may be defined as a set of 4x8 and 8x4. Alternatively, the first group may be defined as a set of 4x4, 4x8, 4x16, 8x4, 8x8 and 16x4. Alternatively, the first group may be defined as a set of 4x8, 4x16, 8x4, 8x8 and 16x4. Alternatively, the first group may be defined as a set of 4x8, 4x16, 8x4 and 16x4. Alternatively, the first group may be defined as a set of 4x4, 4x8, 8x4, 8x8, 8x16, 16x8 and 16x16. Alternatively, the first group may be defined as a set of 4x4, 4x8, 8x4, 8x8, 8x16 and 16x8. Alternatively, the first group may be defined as a set of 4x8, 8x4, 8x8, 8x16 and 16x8. Alternatively, the first group may be defined as a set of 4x8, 8x4, 8x16 and 16x8. Alternatively, the first group may be defined as a set of 4x4, 4x8, 8x4, 8x8, 8x16, 16x8, 16x16, 16x32, 32x16 and 32x32. Alternatively, the first group may be defined as a set of 4x4, 4x8, 8x4, 8x8, 8x16, 16x8, 16x16, 16x32 and 32x16. Alternatively, the first group may be defined as a set of 4x8, 8x4, 8x8, 8x16, 16x8, 16x16, 16x32 and 32x16. Alternatively, the first group may be defined as a set of 4x8, 8x4, 8x16, 16x8, 16x16, 16x32 and 32x16. Alternatively, the first group may be defined as a set of 4x8, 8x4, 8x16, 16x8, 16x32 and 32x16. Alternatively, the first group may be defined as a set of 4x4, 4x8, 4x16, 8x4 and 16x4. Alternatively, the first group may be defined as a set of 4x4, 4x8, 4x16, 8x4, 8x8, 8x16, 16x4 and 16x8. Alternatively, the first group may be defined as a set of 4x8, 4x16, 8x4, 8x8, 8x16, 16x4 and 16x8. Alternatively, the first group may be defined as a set of 4x4, 4x8, 4x16, 8x4, 8x16, 16x4 and 16x8. Alternatively, the first group may be defined as a set of 4x8, 4x16, 8x4, 8x16, 16x4 and 16x8. Alternatively, the first group may be defined as a set of 4x4, 4x8, 4x16, 8x4, 8x8, 8x16, 16x4, 16x8 and 16x16. Alternatively, the first group may be defined as a set of 4x8, 4x16, 8x4, 8x8, 8x16, 16x4, 16x8 and 16x16. Alternatively, the first group may be defined as a set of 4x4, 4x8, 4x16, 8x4, 8x16, 16x4, 16x8 and 16x16. Alternatively, the first group may be defined as a set of 4x8, 4x16, 8x4, 8x16, 16x4, 16x8 and 16x16. Alternatively, the first group may be defined as a set of 4x4, 4x8, 4x16, 4x32, 8x4, 8x16, 8x32, 16x4, 16x8, 32x4 and 32x8. Alternatively, the first group may be defined as a set of 4x8, 4x16, 4x32, 8x4, 8x16, 8x32, 16x4, 16x8, 32x4 and 32x8. The first group may be defined as a set of 4x4, 4x8, 4x16, 4x32, 8x4, 8x8, 8x16, 8x32, 16x4, 16x8, 16x16, 32x4 and 32x8. Alternatively, the first group may be defined as a set of 4x4, 4x8, 4x16, 4x32, 8x4, 8x8, 8x16, 8x32, 16x4, 16x8, 16x32, 32x4, 32x8 and 32x16. Alternatively, the first group may be defined as a set of 4x4, 4x8, 4x16, 4x32, 8x4, 8x8, 8x16, 8x32, 16x4, 16x8, 16x16, 16x32, 32x4, 32x8 and 32x16. Alternatively, the first group may be defined as a set of 4x8, 4x16, 4x32, 8x4, 8x16, 8x32, 16x4, 16x8, 16x32, 32x4, 32x8 and 32x16. Alternatively, the first group may be defined as a set of 4x4, 4x8, 4x16, 4x32, 8x4, 8x8, 8x16, 8x32, 16x4, 16x8, 16x16, 16x32, 32x4, 32x8, 32x16 and 32x32.

A NSPT matrix (or, a NSPT kernel) having a predetermined dimension may be applied to block sizes belonging to the first group. Here, a NSPT matrix may be expressed as a matrix having a dimension of PxQ as a backward transform matrix, and a PxQ matrix represents a matrix in which the number of rows and the number of columns are P and Q, respectively.

As an example, a NSPT matrix of 16x16 may be applied to a 4x4 block. A NSPT matrix of 32x20 may be applied to at least one of a 4x8 block or a 8x4 block. A NSPT matrix of 64x24 may be applied to at least one of a 4x16 block or a 16x4 block. A NSPT matrix of 64x32 may be applied to a 8x8 block. A NSPT matrix of 128x40 may be applied to at least one of a 8x16 block or a 16x8 block. A NSPT matrix of 256x44 may be applied to a 16x16 block. A NSPT matrix of 128x36, 128x38 or 128x40 may be applied to a 4x32 block or a 32x4 block. A NSPT matrix of 256x48 may be applied to a 8x32 block or a 32x8 block. A NSPT matrix of 512x52 or 512x54 may be applied to a 16x32 block or a 32x16 block.

For at least one of a 4x32 block or a 32x4 block, an NSPT matrix of 128x36, 128x38, 128x40 or 128x(36-(4*n)) may be applied. Alternatively, for at least one of a 4x32 block or a 32x4 block, an NSPT matrix of 128x(36-(4*n)) may be applied instead of an NSPT matrix of 128x36, 128x38 or 128x40. Here, * represents multiplication, and n may be an integer greater than or equal to 0.

As an example, as an NSPT matrix for at least one of a 4x32 block or a 32x4 block, at least one of a 128x36 matrix, a 128x32 matrix, a 128x28 matrix, a 128x24 matrix, a 128x20 matrix, a 128x16 matrix, a 128x12 matrix, a 128x8 matrix or a 128x4 matrix may be used.

In addition, for at least one of an 8x32 block or a 32x8 block, an NSPT matrix of 256x48 or 256x(48-(4*m)) may be applied. Alternatively, for at least one of an 8x32 block or a 32x8 block, an NSPT matrix of 256x(48-(4*m)) may be applied instead of an NSPT matrix of 256x48. Here, * represents multiplication, and m may refer to an integer greater than or equal to 0.

As an example, as an NSPT matrix for at least one of an 8x32 block or a 32x8 block, at least one of a 256x48 matrix, a 256x44 matrix, a 256x40 matrix, a 256x36 matrix, a 256x32 matrix, a 256x28 matrix, a 256x24 matrix, a 256x20 matrix, a 256x16 matrix, a 256x12 matrix, a 256x8 matrix or a 256x4 matrix may be used.

The combination of the structure of an NSPT matrix for a 4x32 block and a 32x4 block and the structure of an NSPT matrix for an 8x32 block and a 32x8 block may be configured by combining the above-described matrices. That is, the combination of the structure of an NSPT matrix for a 4x32 block and a 32x4 block and the structure of an NSPT matrix for an 8x32 block and a 32x8 block may be defined as the combination of one or more NSPT matrices of 128x(36-(4*n)) and one or more NSPT matrices of 256x(48-(4*m)). Here, n may be one or more integers in the range of 0 to 8, and m may be one or more integers in the range of 0 to 11.

As an example, an NSPT matrix for at least one of a 4x32 block or a 32x4 block may be a 128x24 matrix, and an NSPT matrix for at least one of an 8x32 block or a 32x8 block may be a 256x36 matrix.

Alternatively, an NSPT matrix for at least one of a 4x32 block or a 32x4 block may be a 128x24 matrix, and an NSPT matrix for at least one of an 8x32 block or a 32x8 block may be a 256x32 matrix.

Alternatively, an NSPT matrix for at least one of a 4x32 block or a 32x4 block may be a 128x24 matrix, and an NSPT matrix for at least one of an 8x32 block or a 32x8 block may be a 256x28 matrix.

Alternatively, an NSPT matrix for at least one of a 4x32 block or a 32x4 block may be a 128x24 matrix, and an NSPT matrix for at least one of an 8x32 block or a 32x8 block may be a 256x24 matrix.

Alternatively, an NSPT matrix for at least one of a 4x32 block or a 32x4 block may be a 128x24 matrix, and an NSPT matrix for at least one of an 8x32 block or a 32x8 block may be a 256x20 matrix.

Alternatively, an NSPT matrix for at least one of a 4x32 block or a 32x4 block may be a 128x24 matrix, and an NSPT matrix for at least one of an 8x32 block or a 32x8 block may be a 256x16 matrix.

Alternatively, an NSPT matrix for at least one of a 4x32 block or a 32x4 block may be a 128x20 matrix, and an NSPT matrix for at least one of an 8x32 block or a 32x8 block may be a 256x36 matrix.

Alternatively, an NSPT matrix for at least one of a 4x32 block or a 32x4 block may be a 128x20 matrix, and an NSPT matrix for at least one of an 8x32 block or a 32x8 block may be a 256x32 matrix.

Alternatively, an NSPT matrix for at least one of a 4x32 block or a 32x4 block may be a 128x20 matrix, and an NSPT matrix for at least one of an 8x32 block or a 32x8 block may be a 256x28 matrix.

Alternatively, an NSPT matrix for at least one of a 4x32 block or a 32x4 block may be a 128x20 matrix, and an NSPT matrix for at least one of an 8x32 block or a 32x8 block may be a 256x24 matrix.

Alternatively, an NSPT matrix for at least one of a 4x32 block or a 32x4 block may be a 128x20 matrix, and an NSPT matrix for at least one of an 8x32 block or a 32x8 block may be a 256x20 matrix.

Alternatively, an NSPT matrix for at least one of a 4x32 block or a 32x4 block may be a 128x20 matrix, and an NSPT matrix for at least one of an 8x32 block or a 32x8 block may be a 256x16 matrix.

Alternatively, an NSPT matrix for at least one of a 4x32 block or a 32x4 block may be a 128x16 matrix, and an NSPT matrix for at least one of an 8x32 block or a 32x8 block may be a 256x36 matrix.

Alternatively, an NSPT matrix for at least one of a 4x32 block or a 32x4 block may be a 128x16 matrix, and an NSPT matrix for at least one of an 8x32 block or a 32x8 block may be a 256x32 matrix.

Alternatively, an NSPT matrix for at least one of a 4x32 block or a 32x4 block may be a 128x16 matrix, and an NSPT matrix for at least one of an 8x32 block or a 32x8 block may be a 256x28 matrix.

Alternatively, an NSPT matrix for at least one of a 4x32 block or a 32x4 block may be a 128x16 matrix, and an NSPT matrix for at least one of an 8x32 block or a 32x8 block may be a 256x24 matrix.

Alternatively, an NSPT matrix for at least one of a 4x32 block or a 32x4 block may be a 128x16 matrix, and an NSPT matrix for at least one of an 8x32 block or a 32x8 block may be a 256x20 matrix.

Alternatively, an NSPT matrix for at least one of a 4x32 block or a 32x4 block may be a 128x16 matrix, and an

**EP 4 742 666 A1**

NSPT matrix for at least one of an 8x32 block or a 32x8 block may be a 256x16 matrix.

Since the PxQ matrix is a backward NSPT matrix, a Px1 output vector may be obtained by applying a PxQ matrix to a Qx1 input vector (i.e., (PxQ matrix)x(Qx1 input vector)). Here, a Qx1 input vector may correspond to (dequantized) transform coefficients within a current block to which a NSPT is applied. In this case, the value of Q may mean the number of transform coefficients to which a NSPT is applied, and may be less than or equal to the product of the width and height of a current block. The value of Q may be variably determined based on the size of a current block among the block sizes belonging to the first group described above. Alternatively, the value of Q may be set equally for block sizes belonging to the first group. A Px1 output vector may correspond to a residual signal (or, decoded residual samples). The value of P may be equal to the product of the width and height of a current block.

Conversely, a forward NSPT matrix may be expressed as a QxP matrix which is the transpose matrix of the PxQ matrix. A Qx1 output vector may be obtained by applying a QxP matrix to a Px1 input vector (i.e., (QxP matrix)x(Px1 input vector)). Here, a Px1 input vector may correspond to residual samples within a current block to which a NSPT is applied. The value of P may be equal to the product of the width and height of a current block. A Qx1 output vector may correspond to transform coefficients within a current block derived through a NSPT. In this case, the value of Q may mean the number of transform coefficients output through a NSPT, and may be less than or equal to the product of the width and height of a current block. Similarly, the value of Q may be variably determined based on the size of a current block among the block sizes belonging to the first group described above. Alternatively, the value of Q may be set equally for block sizes belonging to the first group.

As in the example, NSPT may be applied to a MxN block and a NxM block which are a non-square block. For example, NSPT may be applied to a 4x8 block and a 8x4 block. Alternatively, NSPT may be applied to a 4x16 block and a 16x4 block, or NSPT may be applied to a 8x16 block and a 16x8 block, or NSPT may be applied to a 16x32 block and a 32x16 block.

By applying NSPT to specific block sizes belonging to the first group, transform may be performed more sophisticatedly and coding performance may be improved. When forward LFNST is applied, primary transformed transform coefficients of the remaining region except for a region to which LFNST is applied (i.e. Region-Of-Interest, ROI) may be zeroed out. In addition, LFNST may be composed of a small number of transform basis vectors. In this case, when a separable primary transform such as DCT-2 and a non-separable secondary transform such as LFNST are applied to corresponding block sizes instead of NSPT, performance degradation may occur. When NSPT is applied instead of LFNST for a corresponding case, the zero-out process is omitted, and coding performance may be improved compared to a case of applying LFNST. In addition, performance improvement may be expected by a method for applying NSPT. NSPT or LFNST may be applied by using symmetry described below. Here, for LFNST, a transpose operation is performed on a corresponding input block by using symmetry only for a ROI region. On the other hand, for NSPT, a transpose operation is performed on the entire block by using symmetry. Accordingly, for NSPT, symmetry in a more sophisticated manner may be used to train and apply a corresponding NSPT kernel, so performance improvement may be expected.

In addition, when LFNST, not NSPT, is applied for a 8x8 block, a 32x64 transform matrix, instead of a 16x64 transform matrix, may be applied from the perspective of forward transform. Here, a 16x64 transform matrix may be configured by sampling the top 16 rows in a 32x64 transform matrix. When 16x64 transform matrix-based LFNST is applied to a 8x8 block, 16 multiplications are needed per sample to apply LFNST, but when a 32x64 transform matrix is used, 32 multiplications are needed per sample to apply LFNST. However, when a 32x64 transform matrix is used like this, improvement of coding performance may be expected.

When the tree type of a current block is a single tree, NSPT may be applied to the luma component of a current block and NSPT may not be applied to the chroma component of a current block. When the tree type of a current block is a dual tree, NSPT may be applied to the luma component and the chroma component of a current block.

Alternatively, regardless of whether the tree type of a current block is a single tree, NSPT may be applied to the luma component of a current block and NSPT may not be applied to the chroma component of a current block. Alternatively, regardless of whether the tree type of a current block is a single tree, NSPT may be applied to the luma component and the chroma component of a current block.

As an example, when the tree type of a current block is a single tree, NSPT is allowed for a luma component and a chroma component and the size of a current block belongs to the first group, one NSPT index may be signaled and the luma component and the chroma component of a current block may share a corresponding NSPT index. Here, a NSPT index may be an index for selecting any one of the transform kernel candidates for NSPT. When the size of the luma block and chroma block of a current block belongs to the first group, a transform kernel candidate selected by the same NSPT index may be applied to a luma component and a chroma component. When the tree type of a current block is a single tree and NSPT is applied only to a luma component, LFNST may not be applied to and a separate transform may be applied to the chroma component of a current block. Alternatively, when the tree type of a current block is a single tree and NSPT is applied only to a luma component, LFNST may be applied to the chroma component of a current block.

A single tree may have a high correlation between a luma component and a chroma component. In this case, unnecessary signaling may be reduced and compression efficiency may be improved by applying NSPT only to a luma

28

component or by commonly applying a transform kernel candidate selected by one NSPT index to a luma component and a chroma component. On the other hand, for a non-single tree, a luma component and a chroma component have an independent partition and encoding structure, respectively. In this case, the characteristics of each component may be reflected and compression efficiency may be improved by signaling a NSPT index for each component.

A NSPT kernel for the NSPT may be derived based on at least one of symmetry between intra prediction modes or symmetry between block shapes. As an example, a NSPT kernel may be derived as a NSPT kernel corresponding to at least one of a mode symmetrical to the intra prediction mode of a current block or a block shape symmetrical to the block shape of a current block. Alternatively, a NSPT kernel may be derived based on a NSPT set including one or more NSPT kernel candidates, wherein a NSPT set may be derived as a NSPT set corresponding to at least one of a mode symmetrical to the intra prediction mode of a current block or a block shape symmetrical to the block shape of a current block. Any one of one or more NSPT kernel candidates belonging to the NSPT set may be set as the NSPT kernel of a current block. For this purpose, a NSPT index specifying any one of one or more NSPT kernel candidates belonging to a NSPT set may be used. A NSPT index may be signaled through a bitstream or may be derived based on the above-described symmetry.

There may be symmetry between at least two intra prediction modes among the intra prediction modes pre-defined in a decoding device. Hereinafter, for convenience of a description, symmetry around a top-left diagonal mode (i.e., mode 34) is described. Referring to FIG. 5, there is symmetry between directional modes. Excluding a planar mode, which is no.0, and a DC mode, which is no.1, all modes have a prediction direction. Mode 2 to mode 66 may be named a normal directional mode (may be expressed as [2, 66]), and mode -14 to mode -1 (may be expressed as [-14, -1]) and mode 67 to mode 80 (may be expressed as [67, 80]) may be named a wide directional mode. A wide directional mode may include at least one of a mode having a value smaller than -14 or a mode having a value larger than 80. Referring to FIG. 5, all modes excluding mode 0 and mode 1 are symmetrical around mode 34. Specifically, mode x and mode (68 - x) are symmetrical for mode [2, 66], and mode x and mode (66 - x) are symmetrical between mode [-14, -1] and mode [67, 80]. The same symmetry relationship may be established between mode [N, -1] and mode [67, 66 - N]. Here, N may be an integer less than or equal to -14.

Meanwhile, with respect to the symmetry between block shapes, a MxN block and a NxM block may be defined as blocks with symmetry to each other. Here, M and N may be the same or different from each other. Alternatively, when the ratio of the width and height of a M1xN1 block (M1/N1) and the ratio of the height and width of a M2xN2 block (N2/M2) are the same, a M1xN1 block and a M2xN2 block may be defined as blocks with symmetry to each other. Alternatively, when the ratio of the width and height of a M1xN1 block (M1/N1) and the ratio of the height and width of a M2xN2 block (M2/N2) are the same, a M1xN1 block and a M2xN2 block may be defined as blocks with symmetry to each other.

In a square block, modes symmetrical to each other may share at least one of a NSPT set, a NSPT index or a NSPT kernel. In other words, at least one of a NSPT set, a NSPT index or a NSPT kernel for any one of the symmetrical modes may be applied equally to another one of the symmetrical modes.

As an example, modes symmetrical to each other may share one NSPT kernel. However, for any one of the symmetrical modes, a corresponding NSPT kernel may be applied to input data, and for another one, a corresponding NSPT kernel may be applied after applying a transpose operation to input data. Specifically, when mode x belongs to mode [2, 33], a 1D vector may be configured for an MxM block which is input data according to the column-first order for mode x, and an NSPT kernel may be applied to a corresponding 1D vector. Here, the configuration of a 1D vector according to the column-first order may read input data in the unit of a column from an MxM block which is input data to obtain M columns, and arrange them sequentially to configure a 1D vector. On the other hand, a 1D vector may be configured according to the row-first order for mode (68 - x) symmetrical to mode x, and the corresponding same NSPT kernel may be applied to a corresponding 1D vector. Here, the configuration of a 1D vector according to the row-first order may read input data in the unit of a row from an MxM block which is input data to obtain M rows, and arrange them sequentially to configure a 1D vector. When mode x belongs to mode [N, -1] (N ≤ -14), a 1D vector may be configured according to the row-first order for mode (66 - x) symmetrical to mode x, and the same NSPT kernel as for mode x may be applied to a corresponding 1D vector. Column-first order or row-first order may be applied to mode 0 and mode 1, and column-first order or row-first order may also be applied to mode 34. In addition, row-first order may be applied to an intra prediction mode belonging to mode [2, 33], and column-first order may be applied to a mode symmetrical to a corresponding intra prediction mode. Row-first order may be applied to an intra prediction mode belonging to mode [N, -1], and column-first order may be applied to a mode symmetrical thereto.

For a non-square block, in addition to the symmetry between intra prediction modes, the symmetry between block shapes may be further considered. A non-square block whose width and height are M and N, respectively, may be considered to have a symmetry relationship with a non-square block whose width and height are N and M, respectively. As an example, in mode [2, 66], there may be symmetry between mode x of a MxN block and mode (68 - x) of a NxM block. Similarly, when mode x of a MxN block belongs to mode [N, -1] (N ≤ -14), there may be symmetry between mode x of a MxN block and mode (66 - x) of a NxM block.

A method for configuring a 1D vector from an input data block is as described above. In other words, when column-first order is applied to mode x, row-first order may be applied to a mode symmetrical thereto. Alternatively, when row-first order is applied to mode x, column-first order may be applied to a mode symmetrical thereto. Specifically, when column-first order is applied to mode x, M columns may be obtained by reading input data in the unit of a column from a MxN block which is input data, and they may be arranged sequentially to configure a 1D vector. Here, each column may have a length of N. For a mode symmetrical to mode x, N rows may be obtained by reading input data in the unit of a row from a MxN block which is input data, and they may be arranged sequentially to configure a 1D vector. Here, each row may have a length of M. Alternatively, when row-first order is applied to mode x, N rows may be obtained by reading input data in the unit of a row from a MxN block which is input data, and they may be arranged sequentially to configure a 1D vector. Here, each row may have a length of M. For a mode symmetrical to mode x, M columns may be obtained by reading input data in the unit of a column from a MxN block which is input data, and they may be arranged sequentially to configure a 1D vector. Here, each column may have a length of N.

When a current block is a MxN block having mode x and the above-described symmetry is used for a current block, tthe NSPT set and/or NSPT kernel of a current block may be determined based on at least one of an intra prediction mode symmetrical to mode x or a block size of NxM symmetrical to a block size of MxN. Here, a NSPT kernel may be set as a NSPT kernel for a NxM block, not a NSPT kernel for a MxN block. In other words, when symmetry is used for a current block, a NSPT set and/or a NSPT kernel for a block having symmetry with a current block may be used in the same manner. As described above, a 1D vector may be configured from an input data block according to a predetermined priority, which may correspond to the input of the NSPT kernel.

In addition, there may be a limit that the symmetry is used only when the value of the intra prediction mode of a current block is greater than 34. In other words, when the value of the intra prediction mode of a current block is greater than 34, a transpose operation may be applied when configuring a 1D vector from an input data block, and a NSPT set or a NSPT kernel corresponding to a block shape and/or a mode having symmetry with a current block may be used. Specifically, when the intra prediction mode of a current block belongs to mode [N, -1] and mode [2, 34], symmetry may not be used for a current block. On the other hand, when the intra prediction mode of a current block belongs to mode [35, 66] and mode [67, 66 - N], symmetry may be used for a current block. Here, N may be an integer less than or equal to -14.

The derivation of a NSPT set or a NSPT kernel based on the symmetry may be adaptively performed based on the size of a current block. As an example, for a 4x4 block and a 8x8 block, a NSPT set or a NSPT kernel may be derived based on symmetry, and for a 4x8 block and a 8x4 block, a NSPT set or a NSPT kernel may not be derived based on symmetry.

According to whether the symmetry is used, the number of available NSPT sets may be different. As an example, when symmetry is used, the number of available NSPT sets may be 35, and when symmetry is not used, the number of available NSPT sets may be 67.

Table 9 below relates to an example in which a NSPT set is determined by using symmetry, and shows a mapping relationship between a NSPT set and an intra prediction mode when the number of available NSPT sets is 35.

[Table 9]

| Intra Prediction Mode | NSPT Set Index |
|---|---|
| X<0 | 2 |
| $0 \leq X \leq 34$ | X |
| $35 \leq X \leq 66$ | 68 - X |
| X > 66 | 2 |

Referring to Table 9, when the value (X) of the intra prediction mode of a current block is less than 0, the NSPT set of a current block may be determined as a NSPT set having a NSPT set index of 2 among the 35 NSPT sets. When the value (X) of the intra prediction mode of a current block is greater than or equal to 0 and less than or equal to 34, the NSPT set of a current block may be determined as a NSPT set having a NSPT set index of X among the 35 NSPT sets. When the value (X) of the intra prediction mode of a current block is greater than or equal to 35 and less than or equal to 66, the NSPT set of a current block may be determined as a NSPT set having a NSPT set index of (68-X) among the 35 NSPT sets. When the value (X) of the intra prediction mode of a current block is greater than or equal to 35 and less than or equal to 66, the NSPT set of a current block may be the same as a NSPT set corresponding to the value (68-X) of a mode symmetrical to the intra prediction mode of a current block. Similarly, when the value (X) of the intra prediction mode of a current block is greater than 66, the NSPT set of a current block may be determined as a NSPT set having a NSPT set index of 2 among the 35 NSPT sets. When the value (X) of the intra prediction mode of a current block is greater than 66, the NSPT set of a current block may be the same as a NSPT set corresponding to a mode symmetrical to the intra prediction mode of a current block.

Table 10 below relates to an example in which a NSPT set is determined without using symmetry, and shows a mapping relationship between a NSPT set and an intra prediction mode when the number of available NSPT sets is 67.

[Table 10]

| Intra Prediction Mode | NSPT Set Index |
|---|---|
| X<0 | 2 |
| $0 \leq X \leq 66$ | X |
| X > 66 | 66 |

Referring to Table 10, when the value (X) of the intra prediction mode of a current block is less than 0, the NSPT set of a current block may be determined as a NSPT set having a NSPT set index of 2 among the 67 NSPT sets. When the value (X) of the intra prediction mode of a current block is greater than or equal to 0 and less than or equal to 66, the NSPT set of a current block may be determined as a NSPT set having a NSPT set index of X among the 67 NSPT sets. Similarly, when the value (X) of the intra prediction mode of a current block is greater than 66, the NSPT set of a current block may be determined as a NSPT set having a NSPT set index of 66 among the 67 NSPT sets.

The symmetry may be utilized to save a memory size needed to store a transform kernel while maintaining performance according to the application of transform. For example, when 35 NSPT sets, instead of 67 NSPT sets, are used by utilizing symmetry, a memory size needed to store a NSPT kernel may be significantly reduced.

The number of available NSPT sets and/or the number of NSPT kernel candidates belonging to a NSPT set may vary depending on a block size. For example, the number of available NSPT sets for a 4x4 block may be 35, the number of available NSPT sets for a 4x8 block and a 8x4 block may be 19 and the number of available NSPT sets for a 8x8 block may be 10. A NSPT set for a 4x4 block may be composed of three NSPT kernel candidates, a NSPT set for a 4x8 block and a 8x4 block may be composed of three or two NSPT kernel candidates and a NSPT set for a 8x8 block may be composed of one NSPT kernel candidate.

The size of a transform kernel may increase as a block size increases. Accordingly, the number of available NSPT sets and/or the number of NSPT kernel candidates belonging to a NSPT set may be reduced to save a memory size needed to store a transform kernel. In addition, as a block size increases, the characteristics of a residual signal within a corresponding block tend to become more generalized. Accordingly, reducing the number of available NSPT sets and/or the number of NSPT kernel candidates belonging to a NSPT set may help maintain compression efficiency while reducing implementation complexity by reflecting these statistical characteristics.

A NSPT kernel may be configured with 8-bit precision. The range of coefficients within a NSPT kernel may be greater than or equal to -128 and less than or equal to 127. When corresponding precision is increased to more than 8-bit, a result value obtained through matrix multiplication may be shifted to the right by increased precision. For example, when a value obtained after matrix multiplication based on a NSPT kernel with 8-bit precision is shifted to the right by S bits and stored in a buffer, if a kernel coefficient is configured with N-bit precision, it may be shifted to the right by (S+(N-8)) bits and stored in a buffer.

When a NSPT kernel is configured with 8-bit precision, it is possible to prevent an excessive increase in internal precision in an encoder/a decoder performing transform, thereby reducing implementation complexity in terms of the memory requirement and the operation quantity and minimizing a decrease in compression efficiency simultaneously.

When backward NSPT is applied to a NxN-sized current block, the size of a NSPT kernel (or a NSPT matrix) may be expressed as MN x r. Here, MN may mean the product of the width and height of a current block. This may mean the output length of NSPT or the number of residual samples generated by NSPT. In addition, r may mean the input length of NSPT or the number of (dequantized) transform coefficients to which NSPT is applied. r may be an integer greater than or equal to 0 and less than or equal to MN. The following is an example of a NSPT matrix of MN x r according to a block size.

A NSPT matrix for a 4x4 block may be composed of a 16x16 matrix. A NSPT matrix for a 4x8 block and a 8x4 block may be composed of a 32x20 matrix, a 32x16 matrix, a 32x24 matrix, a 32x28 matrix or a 32x32 matrix. A NSPT matrix for a 8x8 block may be composed of a 64x16 matrix, a 64x24 matrix, a 64x32 matrix, a 64x40 matrix, a 64x48 matrix, a 64x56 matrix or a 64x64 matrix. A NSPT matrix for a 4x16 block and a 16x4 block may be composed of a 64x16 matrix, a 64x24 matrix, a 64x32 matrix, a 64x40 matrix, a 64x48 matrix, a 64x56 matrix or a 64x64 matrix. A NSPT matrix for a 8x16 block and a 16x8 block may be composed of a 128x96 matrix, a 128x64 matrix, a 128x48 matrix or a 128x32 matrix. A NSPT matrix for a 16x16 block may be composed of a 256x128 matrix, a 256x96 matrix or a 256x64 matrix. A NSPT matrix for a 16x32 block and a 32x16 block may be composed of a 512x256 matrix or a 512x128 matrix. A NSPT matrix for a 32x32 block may be composed of a 1024x512 matrix, a 1024x256 matrix or a 1024x128 matrix.

Alternatively, a 16x16 matrix may be applied to a 4xN block and a Nx4 block. Here, N may be an integer greater than or equal to 4. A 64x16 matrix may be applied to a 8x8 block. A 64x32 matrix may be applied to a 8xN block and a Nx8 block. Here, N may be an integer greater than or equal to 16. A 96x32 matrix may be applied to a 16xN block and a Nx16 block. Here, N may be an integer greater than or equal to 16.

Alternatively, the value of r in the NSPT matrix of MN x r may be determined according to a predetermined criterion. A criterion here may be (1) ensuring that the sum of the amount of calculation for primary transform and the amount of calculation for secondary transform is less than or equal to a certain level, and (2) ensuring that the number of multiplications per sample needed for a NSPT operation is less than or equal to a certain number.

Based on inverse transform, when a separable primary transform is performed by matrix multiplication for a MxN block, (M+N) multiplications are needed per sample to perform a corresponding primary transform. In addition, when LFNST is applied to a certain Region-Of-Interest (ROI) region, (P*Q)/(M*N) multiplications are needed per sample when it is assumed that the LFNST matrix of inverse transform is a PxQ matrix. Here, a PxQ matrix may mean a matrix that the number of rows is P and the number of columns is Q.

When NSPT, instead of DCT-2 transform (or separable transform such as KLT) and LFNST, is applied to a MxN block, the value of r ensuring that the number of multiplications per sample for a case where corresponding NSPT is applied is less than or equal to the number of multiplications per sample for a case where DCT-2 transform and LFNST are applied may be determined as follows.

[Equation 6]

$$r \leq (M + N + (P*Q)/(M*N))$$

When the value of r is set as the maximum value while satisfying Equation 6 above (i.e., r = M + N + (P*Q)/(M*N)), the value of r in a NSPT matrix for each block size may be set as follows. In Equation 6, when the value of (P*Q)/(M*N) is not an integer, an integer close to the value of (P*Q)/(M*N) may be used. As an example, a floor operation may be applied to the value of (P*Q)/(M*N). In this case, r may be set as (M + N + floor((P*Q)/(M*N))). Here, floor(x) may refer to the largest integer not greater than x. Alternatively, a round operation may be applied to the value of (P*Q)/(M*N). In this case, r may be set as (M + N + round((P*Q)/(M*N))). Here, round(x) may refer to a value obtained by rounding x. Alternatively, a ceil operation may be applied to the value of (P*Q)/(M*N). In this case, r may be set as (M + N + ceil((P*Q)/(M*N))). Here, ceil(x) may refer to the smallest integer greater than or equal to x. When a floor operation is applied, an inequality in Equation 6 above may be satisfied. However, when a round operation or a ceil operation is applied, an inequality in Equation 6 above may not be satisfied.

For a NSPT for a 4x4 block, the maximum value of r is 24. However, since the value of r must be less than or equal to 16, the value of r may be set as 16.

For a NSPT for a 4x8 block and a 8x4 block, the maximum value of r is 20. The value of r may be set as 20.

For a NSPT for a 8x8 block, the maximum value of r is 32. The value of r may be set as 32.

For a NSPT for a 4x16 block and a 16x4 block, the maximum value of r is 24. The value of r may be set as 24.

For a NSPT for a 8x16 block and a 16x8 block, the maximum value of r is 40. The value of r may be set as 40.

For a NSPT for a 16x16 block, the maximum value of r is 44. The value of r may be set as 44.

For a NSPT for a 16x32 block and a 32x16 block, the maximum value of r is 54. The value of r may be set as 54.

For a NSPT for a 32x32 block, the maximum value of r is 67. The value of r may be set as 67.

For a NSPT for a 4x32 block and a 32x4 block, the maximum value of r is 38. The value of r may be set as 38. Alternatively, the value of r may be set as 20.

For a NSPT for a 8x32 block and a 32x8 block, the maximum value of r is 48. The value of r may be set as 48. Alternatively, the value of r may be set as 24.

In a NSPT matrix for each block size described above, there may be a case in which the value of r is not a multiple of 4. For ease of implementation, it may be advantageous that the value of r is a multiple of 4. For example, in implementing parallel processing through Single Instruction Multiple Data (SIMD) instructions, etc., when the inner product of four transform basis vectors is processed simultaneously (i.e., four transform coefficients are generated simultaneously) in the process of applying a forward NSPT, it may be advantageous to set the value of r as a multiple of 4.

As an example, for a NSPT for a 16x32 block and a 32x16 block, the value of r may be set as 52 or 56 instead of 54. For a NSPT for a 32x32 block, the value of r may be set as 64 or 68 instead of 67. For a NSPT for a 4x32 block and a 32x4 block, the value of r may be set as 36 or 40 instead of 38.

More generally, the value of r may be set to be a multiple of K. Here, K may be an integer greater than or equal to 1. As an example, the value of r may be set as a multiple of K that satisfies an inequality in Equation 7 below.

[Equation 7]

$$r \leq func ( ( M + N + (P*Q)/(M*N) ) / K ) * K$$

In Equation 7 above, func() may be floor, round or ceil described above.

The value of r according to a predetermined standard described above relates to a case where zero-out is not considered. In other words, when forward LFNST is applied, primary-transformed transform coefficients in the remaining region except for a region where LFNST is applied are zeroed out, so the actual amount of calculation needed to apply DCT-2 and LFNST may be less than the amount of calculation above. Accordingly, when the zero-out is considered, the value of r may be set as a value less than the value of r according to the predetermined standard.

Since zero-out is not performed for a 4x4 block, the value of r may be set as a value less than or equal to 16.

For a 4x8 block, zero-out may be performed for the remaining region except for a top-left 4x4 block based on forward transform, and a 16x16 matrix, which is a forward LFNST matrix, may be applied to a top-left 4x4 block. When such zero-out is performed, the number of multiplications per sample needed in forward separable primary transform is 8 (((4x4x8)+(4x8x4))/(4x8)=8), and the number of multiplications per sample needed in LFNST is 8 ((16x16)/32=8). Accordingly, when separable primary transform and LFNST are replaced with NSPT, the value of r may be set as a value less than or equal to 16, which is the sum of the number of multiplications per sample in separable primary transform and the number of multiplications per sample in LFNST. Since the same amount of calculation is needed even when applying backward separable primary transform and LFNST, the value of r may be set as a value less than or equal to 16.

For a 8x4 block, zero-out may be performed for the remaining region except for a top-left 4x4 block based on forward transform, and a 16x16 matrix, which is a forward LFNST matrix, may be applied to a top-left 4x4 block. When such zero-out is performed, the number of multiplications per sample needed in forward separable primary transform is 6 ((4x8x4)+(4x4x4)/(8x4)=6), and the number of multiplications per sample needed in LFNST is 8 ((16x16)/32=8). Accordingly, when separable primary transform and LFNST are replaced with NSPT, the value of r may be set as a value less than or equal to 14, which is the sum of the number of multiplications per sample in separable primary transform and the number of multiplications per sample in LFNST. Since the same amount of calculation is needed even when applying backward separable primary transform and LFNST, the value of r may be set as a value less than or equal to 14.

For a 8x8 block, zero-out may not be performed for separable primary transform, and in this case, the value of r may be set as a value less than or equal to 32.

For a 8x16 block, zero-out may be performed for the remaining region except for a top-left 8x8 block based on forward transform, and a 64x32 matrix, which is a forward LFNST matrix, may be applied to a top-left 8x8 block. When such zero-out is performed, the number of multiplications per sample needed in forward separable primary transform is 16 ((8x8x16)+(8x16x8)/(8x16)=16), and the number of multiplications per sample needed in LFNST is 16 ((64x32)/128=16). Accordingly, when separable primary transform and LFNST are replaced with NSPT, the value of r may be set as a value less than or equal to 32, which is the sum of the number of multiplications per sample in separable primary transform and the number of multiplications per sample in LFNST. Since the same amount of calculation is needed even when applying backward separable primary transform and LFNST, the value of r may be set as a value less than or equal to 32.

For a 16x8 block, zero-out may be performed for the remaining region except for a top-left 8x8 block based on forward transform, and a 64x32 matrix, which is a forward LFNST matrix, may be applied to a top-left 8x8 block. When such zero-out is performed, the number of multiplications per sample needed in forward separable primary transform is 12 ((8x16x8)+(8x8x8)/(16x8)=12), and the number of multiplications per sample needed in LFNST is 16 ((64x32)/128=16). Accordingly, when separable primary transform and LFNST are replaced with NSPT, the value of r may be set as a value less than or equal to 28, which is the sum of the number of multiplications per sample in separable primary transform and the number of multiplications per sample in LFNST. Since the same amount of calculation is needed even when applying backward separable primary transform and LFNST, the value of r may be set as a value less than or equal to 28.

For a 16x16 block, zero-out may be performed for the remaining region except for a top-left 12x12 block based on forward transform, and a 96x32 matrix, which is a forward LFNST matrix, may be applied to a top-left 12x12 block. When such zero-out is performed, the number of multiplications per sample needed in forward separable primary transform is 21 ((12x16x16)+(12x16x12)/(16x16)=21), and the number of multiplications per sample needed in LFNST is 12 ((96x32)/256=12). Accordingly, when separable primary transform and LFNST are replaced with NSPT, the value of r may be set as a value less than or equal to 33, which is the sum of the number of multiplications per sample in separable primary transform and the number of multiplications per sample in LFNST. Since the same amount of calculation is needed even when applying backward separable primary transform and LFNST, the value of r may be set as a value less than or equal to 33.

For a 4x16 block, zero-out may be performed for the remaining regions except for a top-left 4x4 block based on a forward transform, and a 16x16 matrix which is a forward LFNST matrix may be applied to a top-left 4x4 block. When such zero-out is performed, the number of multiplications per sample needed in a forward separable primary transform is 8 (((4x4x16)+(4x16x4))/(4x16)=8), and the number of multiplications per sample needed in an LFNST is 4 ((16x16)/64=4). Accordingly, when a separable primary transform and an LFNST are replaced with a NSPT, the value of r may be set as a value less than or equal to 12, which is the sum of the number of multiplications per sample in a separable primary transform and the number of multiplications per sample in an LFNST. Since the same amount of calculation is needed even when applying a backward separable primary transform and an LFNST, the value of r may be set as a value less than or equal to 12.

For a 16x4 block, zero-out may be performed for the remaining regions except for a top-left 4x4 block based on a forward transform, and a 16x16 matrix which is a forward LFNST matrix may be applied to a top-left 4x4 block. When such zero-out is performed, the number of multiplications per sample needed in a forward separable primary transform is 5 (((4x16x4)+(4x4x4))/(16x4)=5), and the number of multiplications per sample needed in an LFNST is 4 ((16x16)/64=4).

Accordingly, when a separable primary transform and an LFNST are substituted with a NSPT, the value of r may be set as a value less than or equal to 9 which is the sum of the number of multiplications per sample in a separable primary transform and the number of multiplications per sample in an LFNST. Since the same amount of calculation is needed even when applying a backward separable primary transform and an LFNST, the value of r may be set as a value less than or equal to 9.

For a 4x32 block, zero-out may be performed for the remaining regions except for a top-left 4x4 block based on a forward transform, and a 16x16 matrix which is a forward LFNST matrix may be applied to a top-left 4x4 block. When such zero-out is performed, the number of multiplications per sample needed in a forward separable primary transform is 8 (((4x4x32)+(4x32x4))/(4x32)=8), and the number of multiplications per sample needed in an LFNST is 2 ((16x16)/128=2). Accordingly, when a separable primary transform and an LFNST are substituted with a NSPT, the value of r may be set as a value less than or equal to 10 which is the sum of the number of multiplications per sample in a separable primary transform and the number of multiplications per sample in an LFNST. Since the same amount of calculation is needed even when applying a backward separable primary transform and an LFNST, the value of r may be set as a value less than or equal to 10.

For a 32x4 block, zero-out may be performed for the remaining regions except for a top-left 4x4 block based on a forward transform, and a 16x16 matrix which is a forward LFNST matrix may be applied to a top-left 4x4 block. When such zero-out is performed, the number of multiplications per sample needed in a forward separable primary transform is 4.5 (((4x32x4)+(4x4x4))/(32x4)=4.5), and the number of multiplications per sample needed in an LFNST is 2 ((16x16)/128=2). Accordingly, when a separable primary transform and an LFNST are substituted with a NSPT, the value of r may be set as a value less than or equal to 6.5. Since the same amount of calculation is needed even when applying a backward separable primary transform and an LFNST, the value of r may be set as a value less than or equal to 6.5. Here, the value of r is a value configuring a matrix dimension, so it may be set as an integer of 6 or 7 instead of 6.5.

For a 8x32 block, zero-out may be performed for the remaining regions except for a top-left 8x8 block based on a forward transform, and a 64x32 matrix which is a forward LFNST matrix may be applied to a top-left 8x8 block. When such zero-out is performed, the number of multiplications per sample needed in a forward separable primary transform is 16 (((8x8x32)+(8x32x8))/(8x32)=16), and the number of multiplications per sample needed in an LFNST is 8 ((64x32)/256=8). Accordingly, when a separable primary transform and an LFNST are substituted with a NSPT, the value of r may be set as a value less than or equal to 24. Since the same amount of calculation is needed even when applying a backward separable primary transform and an LFNST, the value of r may be set as a value less than or equal to 24.

For a 32x8 block, zero-out may be performed for the remaining regions except for a top-left 8x8 block based on a forward transform, and a 64x32 matrix which is a forward LFNST matrix may be applied to a top-left 8x8 block. When such zero-out is performed, the number of multiplications per sample needed in a forward separable primary transform is 10 (((8x32x8)+(8x8x8))/(32x8)=10), and the number of multiplications per sample needed in an LFNST is 8 ((64x32)/256=8). Accordingly, when a separable primary transform and an LFNST are substituted with a NSPT, the value of r may be set as a value less than or equal to 18. Since the same amount of calculation is needed even when applying a backward separable primary transform and an LFNST, the value of r may be set as a value less than or equal to 18.

For a 16x32 block, zero-out may be performed for the remaining regions except for a top-left 12x12 block based on a forward transform, and a 96x32 matrix which is a forward LFNST matrix may be applied to a top-left 12x12 block. When such zero-out is performed, the number of multiplications per sample needed in a forward separable primary transform is 21 (((12x16x32)+(12x32x12)/(16x32)=21), and the number of multiplications per sample needed in an LFNST is 6 ((96x32)/512=6). Accordingly, when a separable primary transform and an LFNST are substituted with a NSPT, the value of r may be set as a value less than or equal to 27. Since the same amount of calculation is needed even when applying a backward separable primary transform and an LFNST, the value of r may be set as a value less than or equal to 27.

For a 32x16 block, zero-out may be performed for the remaining regions except for a top-left 12x12 block based on a forward transform, and a 96x32 matrix which is a forward LFNST matrix may be applied to a top-left 12x12 block. When such zero-out is performed, the number of multiplications per sample needed in a forward separable primary transform is 13.5 (((12x32x12)+(12x16x12)/(32x16)=13.5), and the number of multiplications per sample needed in an LFNST is 6 ((96x32)/512=6). Accordingly, when a separable primary transform and an LFNST are substituted with a NSPT, the value of r may be set as a value less than or equal to 19.5. Since the same amount of calculation is needed even when applying a backward separable primary transform and an LFNST, the value of r may be set as a value less than or equal to 19.5. Here, the value of r is a value configuring a matrix dimension, so it may be set as an integer of 19 or 20 instead of 19.5.

In a NSPT matrix for each block size described above, there may be a case in which the value of r is not a multiple of K. Here, K may be 4. In this case, for ease of implementation, the value of r may be set to be a multiple of K. When the value of r which is pre-set through the above-described method is $r_{prev}$, the value of r which is a multiple of K may be set as follows.

[Equation 8]

$$r = func(r_{prev} / K) \times K$$

In Equation 8 above, func() may be floor, round or ceil described above.

As described above, the value of r in a NSPT matrix for a MxN block may be different from the value of r in a NSPT matrix for a NxM block. As an example, a backward NSPT matrix for a 4x8 block may be a 32x16 matrix, and a backward NSPT matrix for a 8x4 block may be a 32x14 matrix. In this case, a NSPT matrix may be determined by using symmetry between a MxN block and a NxM block.

It is assumed that a current block is a MxN block having mode x. When the above-described symmetry is used for a current block, instead of applying a NSPT matrix corresponding to the block size of MxN or mode x, a NSPT matrix corresponding to at least one of a mode symmetrical to mode x or the block size of NxM symmetrical to the block size of MxN may be applied. In this case, a NSPT matrix corresponding to the block size of NxM may be applied to a current block as it is. Alternatively, a NSPT matrix corresponding to the block size of NxM is applied, but for the value of r, the value of r in a NSPT matrix corresponding to the block size of MxN may be used.

As an example, a backward NSPT matrix for a 4x8 block may be a 32x16 matrix (i.e., the value of r in a NSPT matrix is 16), and a backward NSPT matrix for a 8x4 block may be a 32x14 matrix (i.e., the value of r in a NSPT matrix is 14). When a current block is a 8x4 block having mode x, a NSPT matrix for at least one of a mode symmetrical to mode x or a 4x8 block symmetrical to a 8x4 block may be applied to a current block. In this case, a 32x16 matrix, which is a backward NSPT matrix for a 4x8 block, may be used as it is, or a 32x14 matrix having the value of r in a backward NSPT matrix for a 8x4 block may be used. Here, a 32x14 matrix may be derived by sampling 14 rows from the left in a 32x16 matrix. In this way, when a 32x14 matrix is applied to a current block with a block size of 8x4, the above-described predetermined standard is satisfied.

Conversely, when a current block is a 4x8 block having mode x, a NSPT matrix for at least one of a mode symmetrical to mode x or a 8x4 block symmetrical to a 4x8 block may be applied to a current block. In this case, a 32x14 matrix for a 8x4 block, not a 32x16 matrix for a 4x8 block, may be applied to a current block. Through this, NSPT may be performed by using fewer multiplications than the number of multiplications allowed for a 4x8 block.

For NSPT for a MxN block and a NxM block, when the values of r satisfying the above-described predetermined condition is r1 and r2, respectively, a backward NSPT matrix for a MxN block and a NxM block may be set as MN x max(r1, r2). Here, max(r1, r2) may refer to selecting a value greater than or equal to r1 and r2.

As an example, a backward NSPT matrix for a 4x8 block may be a 32x16 matrix (i.e., the value of r in a NSPT matrix is 16), and a backward NSPT matrix for a 8x4 block may be a 32x14 matrix (i.e., the value of r in a NSPT matrix is 14). When a current block is a 4x8 block having mode x, a NSPT matrix for at least one of a mode symmetrical to mode x or a 8x4 block symmetrical to a 4x8 block may be applied to a current block. In this case, a 32x16 matrix, which is a backward NSPT matrix for a 8x4 block, may be used. When a backward NSPT matrix is not configured like MN x max(r1, r2), a 32x14 matrix will be used as a NSPT matrix for a 8x4 block. However, when a NSPT matrix for a 4x8 block and a NSPT matrix for a 8x4 block are configured as a 32 x max(16, 14) matrix, a 32x16 matrix may be fully applied.

Conversely, when a current block is a 8x4 block having mode x, a NSPT matrix for at least one of a mode symmetrical to mode x or a 4x8 block symmetrical to a 8x4 block may be applied to a current block. In this case, a 32x16 matrix, which is a backward NSPT matrix for a 4x8 block, may be used or a 32x14 matrix may be used. Here, a 32x14 matrix may be derived by sampling 14 rows from the left in a 32x16 matrix.

When a NSPT matrix is configured as described above, transform consisting of the maximum number of transform basis vectors may be applied while satisfying the predetermined condition, thereby maximizing coding performance.

In the above-described embodiment, the value of r may be set to be a multiple of 16. As an example, for backward NSPT for a 4x8 block and a 8x4 block, a 32x16 matrix, not a 32x20 matrix, may be applied. The transform coefficients of a transform block may be encoded in the unit of a predetermined coefficient group (CG). Here, a CG may be defined as a group of 16 transform coefficients, and as an example, a CG may be a sub-block of a size such as 4x4, 2x8 or 8x2. A non-zero transform coefficient may not exist within one CG, and in this case, the encoding process of a transform coefficient may be skipped for a corresponding CG. Accordingly, when the value of r is set as a multiple of 16, there is an advantage of reducing the complexity of implementation.

The transform coefficients may be derived by applying forward NSPT to residual samples of a MxN block. In this case, the number of derived transform coefficients may be less than or equal to the value of (M*N) due to zero-out. In other words, a forward NSPT matrix may be defined as a r x (M*N) matrix, wherein r may mean the output length of NSPT or the number of transform coefficients derived through NSPT, and (M*N) may mean the input length of NSPT or the number of residual samples to which NSPT is applied.

The derived transform coefficients may be arranged in a MxN block according to the predetermined scan order, and a region where the transform coefficients are not filled may be filled with 0 (i.e., zero-out). Accordingly, in the process of scanning transform coefficients in a decoding device, when a non-zero transform coefficient is found in a region that would have been filled with 0 if NSPT had been applied (or, when the scan position of the last valid coefficient in a MxN block is greater than or equal to r), it is considered that NSPT is not applied to a corresponding MxN block, and a NSPT index may not be signaled. An index representing a scan position of 0 may be allocated to a top-left coefficient (i.e., a DC component coefficient) within a MxN block, and an index increased by 1 may be allocated to the remaining coefficients within a MxN block in predetermined order.

One or more values of r available for block sizes to which NSPT is applicable may be defined. As an example, one or more values of r may be defined for each block size to which NSPT is applicable. Alternatively, one value of r may be defined for each block size to which NSPT is applicable, and the value of r for any one of the block sizes to which NSPT is applicable may be different from the value of r for another one. Alternatively, one value of r may be defined for some of the block sizes to which NSPT is applicable, and at least two values of r may be defined for the remaining.

When a plurality of values of r are available, an index specifying any one of a plurality of values of r or r itself may be signaled. A corresponding index may be signaled in a high level syntax (HLS) such as VPS, SPS, PPS, PH or SH or may be signaled at a block level such as CTU, CU or TU. When the value of r is a value belonging to a specific range, bits enough to include a corresponding range may be allocated and signaled. For example, when the value of r belongs to the range of 1 to 256, 8 bits may be designated as fixed-length and signaled.

The transform kernel of a current block may be determined based on any one of the above-described embodiments 1 to 3. Alternatively, the transform kernel of a current block may be determined based on a combination of at least two of the embodiments 1 to 3 within a range where an invention according to the above-described embodiments 1 to 3 does not conflict with each other.

A transform index for inverse transform of a current block may be signaled. Here, a transform index may specify any one of one or more transform kernels (or, transform matrices) belonging to a transform set. Here, a transform index may mean a NSPT index specifying any one of one or more NSPT kernels belonging to a NSPT set. Alternatively, the transform index may mean a LFNST index specifying any one of one or more LFNST kernels belonging to a LFNST set.

Whether the transform index corresponds to a NSPT index may be determined based on whether the size of a current block is any one of the block sizes belonging to the first group described above. It assumes that block sizes to which NSPT is applicable and block sizes to which LFNST is applicable are distinct from each other. In this case, when the size of a current block belongs to the first group, a transform index signaled for a current block may correspond to a NSPT index and a NSPT kernel may be determined from a NSPT set based on a corresponding transform index. On the other hand, when the size of a current block does not belong to the first group, a transform index signaled for a current block may correspond to a LFNST index and a LFNST kernel may be determined from a LFNST set based on a corresponding transform index. When the size of a current block does not belong to the first group, it may mean that the size of a current block belongs to the second group described above. Alternatively, when the size of a current block does not belong to the first group, it may mean that the size of a current block corresponds to a block size to which LFNST is applicable among the block sizes belonging to the second group. In this way, a NSPT index and a LFNST index may be configured as one integrated syntax, not as a separate syntax.

As an example, it is assumed that block sizes to which NSPT is applicable, belonging to the first group, are 4x4, 4x8, 8x4 and 8x8. For block sizes belonging to the first group, NSPT may be applied instead of LFNST. Specifically, NSPT may be applied instead of a combination of separable primary transform (e.g., DCT-2, separable KLT) and LFNST. A NSPT index may be signaled for four block sizes belonging to the first group, and a LFNST index may be signaled for the remaining block sizes (where LFNST is allowed).

In this way, when a NSPT index and a LFNST index are signaled as one syntax, the amount of encoded information may be reduced. In addition, the complexity of implementation may be reduced by applying at least one of binarization, a CABAC context or an initial value for entropy coding to a NSPT/LFNST index equally.

Alternatively, a NSPT index and a LFNST index may be signaled separately as a separate syntax. In this case, the complexity of implementation may be increased partially, but compression performance may be improved by performing optimized entropy coding for each index.

When the number of LFNST kernel candidates belonging to a LFNST set and the number of NSPT kernel candidates belonging to a NSPT set are the same, the same binarization may be applied to a LFNST index and a NSPT index. The same CABAC context (or, CABAC context increment) may be allocated to the bins of a LFNST index and a NSPT index.

Different binarization and/or CABAC context may be used for a LFNST index and a NSPT index. A different CABAC initial value may be allocated to a LFNST index and a NSPT index. As an example, any one of a LFNST index and a NSPT index may be binarized based on fixed-length binarization, and the other may be binarized based on truncated unary binarization. Even when the binarization of a LFNST index and a NSPT index are the same, a different CABAC context and/or CABAC initial value may be allocated. When the number of LFNST kernel candidates belonging to a LFNST set and the number of NSPT kernel candidates belonging to a NSPT set are different from each other, different binarization and/or CABAC context may be used for a LFNST index and a NSPT index.

The number of NSPT kernel candidates belonging to a NSPT set may be set differently for each block size. Alternatively, block sizes belonging to the first group may be divided into a plurality of sub-groups. In this case, the number of NSPT kernel candidates belonging to a NSPT set may be set differently for each of the plurality of sub-groups. Here, at least one of a plurality of sub-groups may include a plurality of different block sizes.

According to the number of NSPT kernel candidates belonging to a NSPT set, binarization applied to a NSPT index may be different.

As an example, when the number of NSPT kernel candidates in a NSPT set for a specific block size is 3, a NSPT index may have a value of any one of 0 to 3. When the value of a NSPT index is 0, it may represent that NSPT is not applied to a current block. When the value of a NSPT index is not 0, it may represent a NSPT kernel candidate corresponding to a corresponding NSPT index among the three NSPT kernel candidates. One bin may be allocated to distinguish between a case where NSPT is applied and a case where it is not applied. A case where the value of a corresponding bin is 0 may correspond to a case where the value of a NSPT index is 0. On the other hand, a case where the value of a corresponding bin is 1 may correspond to a case where the value of a NSPT index is 1, 2 or 3. In this case, truncated unary binarization may be applied to distinguish three NSPT kernel candidates. In other words, two bins may be allocated to distinguish three NSPT kernel candidates as 0, 10 and 11.

When the number of NSPT kernel candidates in a NSPT set for a specific block size is 2, a NSPT index may have a value of any one of 0 to 2. When the value of a NSPT index is 0, it may represent that NSPT is not applied to a current block. When the value of a NSPT index is not 0, it may represent a NSPT kernel candidate corresponding to a corresponding NSPT index among the two NSPT kernel candidates. One bin may be allocated to distinguish between a case where NSPT is applied and a case where it is not applied. Two NSPT kernel candidates may be distinguished by allocating one bin representing any one of the two NSPT kernel candidates.

When the number of NSPT kernel candidates in a NSPT set for a specific block size is 1, a NSPT index may have a value of any one of 0 or 1. When the value of a NSPT index is 0, it may represent that NSPT is not applied to a current block. When the value of a NSPT index is 1, it may represent one NSPT kernel candidate. In this case, whether to apply NSPT and a NSPT kernel candidate may be specified only with one bin.

The inverse transform of the current block may be a separable primary transform and/or a LFNST-based inverse transform. In other words, backward LFNST may be applied to all or a part of the (dequantized) transform coefficients of a current block, and then a backward separable primary transform may be applied to transform coefficients derived through LFNST to derive residual samples. As an example, backward LFNST may be applied to (dequantized) transform coefficients belonging to a partial region of a current block. Here, a partial region refers to a region to which forward LFNST is applied, and hereinafter, it is referred to as a region of interest (ROI) region. Transform coefficients derived through LFNST may be arranged in a ROI region according to the predetermined scan order. The predetermined scan order may be row-first order or column-first order. A backward separable primary transform may be applied to transform coefficients derived through the LFNST and transform coefficients belonging to the remaining region except for a ROI region within the current block. Alternatively, in a forward transform process, when zero-out is performed on the remaining region except for a ROI region within the current block (i.e., when transform coefficients within the remaining region are set as 0), a backward separable primary transform may be applied to transform coefficients derived through LFNST. The size of the ROI region may be determined based on at least one of the width or height of a current block. Here, the size of a ROI region may refer to at least one of the width or height of a ROI region, or may refer to the number of sample positions belonging to a ROI region.

LFNST defined for a 4x8 block (hereinafter, referred to as LFNST4x8) or LFNST defined for a 8x4 block (hereinafter, referred to as LFNST8x4) may be applied to the current block. When LFNST4x8 is applied to a current block, the ROI region of a current block may be a 4x8 region within a current block. Here, a 4x8 region is a region including the top-left sample of a current block, which may mean a block whose width and height are 4 and 8, respectively. When LFNST8x4 is applied to a current block, the ROI region of a current block may be a 8x4 region within a current block. Here, a 8x4 region is a region including the top-left sample of a current block, which may mean a block whose width and height are 8 and 4, respectively.

The LFNST4x8 may be applied only when a current block is a 4x8 block. Alternatively, the LFNST4x8 may be applied when a current block is 4xN and N is greater than or equal to 8 (e.g., when a current block is a block of 4x8, 4x16, 4x32 or higher). Alternatively, the LFNST4x8 may be applied when a current block is 4xN and N is greater than or equal to 8 and less than or equal to a predetermined threshold value. As an example, when a threshold value is 16, LFNST4x8 may be applied when a current block is a 4x8 or 4x16 block.

The LFNST8x4 may be applied only when a current block is a 8x4 block. Alternatively, the LFNST8x4 may be applied when a current block is Nx4 and N is greater than or equal to 8 (e.g., when a current block is a block of 8x4, 16x4, 32x4 or higher). Alternatively, the LFNST8x4 may be applied when a current block is Nx4 and N is greater than or equal to 8 and less than or equal to a predetermined threshold value. As an example, when a threshold value is 16, LFNST8x4 may be applied when a current block is a 8x4 or 16x4 block.

Specifically, when LFNST4x8 or LFNST8x4 is applied to a current block, LFNST that an input length is less than or equal to 32 and an output length is 32 (hereinafter, referred to as LFNST-32) may be used. The input length may mean the number of transform coefficients input to LFNST. Here, transform coefficients input to LFNST may mean all transform coefficients derived based on the residual information of a current block or may mean transform coefficients to which forward LFNST is applied among the derived transform coefficients. The output length may mean the number of transform coefficients derived through LFNST. The ROI region of a current block may consist of 32 sample positions. In this case, the dimension (or, size) of a transform matrix for backward LFNST4x8 or LFNST8x4 may be 32xN. Here, N may be 16, 20 or 24. In other words, an input length of LFNST-32 may be N, and an output length of LFNST-32 may be 32.

As an example, when the size of a current block is 4xN, LFNST-32 may be applied to all or a part of the transform coefficients belonging to a 4x8 region, which is a ROI region within a current block. Transform coefficients derived through LFNST-32 may be arranged according to the predetermined scan order in a 4x8 region within the current block. Alternatively, when the size of a current block is Nx4, LFNST-32 may be applied to all or a part of the transform coefficients belonging to a 8x4 region, which is a ROI region within a current block. Transform coefficients derived through LFNST-32 may be arranged according to the predetermined scan order in a 8x4 region within the current block.

A transform kernel for LFNST-32 may be determined as any one of one or more transform kernels (or, LFNST kernel candidates) belonging to a transform set. For this purpose, an index specifying any one of a plurality of transform kernels belonging to a transform set may be used. Here, an index may be signaled through a bitstream. The transform set of the current block may be determined as any one of a plurality of pre-defined transform sets. As an example, the transform set of a current block may be determined as any one of the 35 transform sets, and each transform set may include three transform kernels. The transform set of the current block may be determined based on the intra prediction mode of a current block, which is the same as described above. The plurality of transform sets for LFNST-32 may also be defined for LFNST4x8 and LFNST8x4, respectively.

However, as described above, LFNST4x8 and LFNST8x4 may be adaptively applied based on the size of a current block. When LFNST4x8 and LFNST8x4 is not applied to a current block, LFNST that an input length is less than or equal to 16 and an output length is 16 (hereinafter, referred to as LFNST-16) may be used. LFNST16 may be applied to all or a part of the transform coefficients belonging to a 4x4 region within a current block. A 4x4 region within a current block is a region including the top-left sample of a current block, which may mean a block whose width and height are 4 and 4, respectively. Transform coefficients derived through LFNST-16 may be arranged according to the predetermined scan order in a 4x4 region within the current block.

From the perspective of forward transform, transform coefficients may be derived by applying a separate primary transform to the residual samples of a current block. Forward LFNST may be applied to all of the derived transform coefficients or only to transform coefficients belonging to a partial region within a current block (i.e., a ROI region). Transform coefficients derived through LFNST may be arranged according to the predetermined scan order in a ROI region within a current block. When the number of transform coefficients output from LFNST is less than the number of transform coefficients input to LFNST, there may be a region that is not filled with transform coefficients derived through LFNST within a ROI region. A corresponding region may be filled with transform coefficients that are 0. In addition, the remaining region (or, a region to which LFNST is not applied) excluding a ROI region in a current block may be filled with transform coefficients derived through a separate primary transform or may be filled with transform coefficients that are 0 through zero-out.

Specifically, when LFNST4x8 or LFNST8x4 is applied to a current block or the ROI region of a current block, LFNST that an input length is 32 and an output length is less than or equal to 32 (hereinafter, referred to as LFNST-32) may be used. Here, an input length may mean the number of transform coefficients input to LFNST. The input transform coefficients may be coefficients derived through a separable primary transform. The input length may mean the number of transform coefficients belonging to the ROI region of a current block. An output length may mean the number of transform coefficients derived through LFNST. The ROI region of a current block may consist of 32 sample positions. In this case, the dimension of a transform matrix for forward LFNST4x8 or LFNST8x4 may be Nx32. Here, N may be 16, 20 or 24. In other words, an input length of LFNST-32 may be 32, and an output length of LFNST-32 may be N.

As an example, when the size of a current block is 4xN, LFNST-32 may be applied to transform coefficients belonging to a 4x8 region, which is a ROI region within a current block. Transform coefficients derived through LFNST-32 may be arranged according to the predetermined scan order in a 4x8 region within the current block. Alternatively, when the size of a current block is Nx4, LFNST-32 may be applied to transform coefficients belonging to a 8x4 region, which is a ROI region within a current block. Transform coefficients derived through LFNST-32 may be arranged according to the predetermined scan order in a 8x4 region within the current block.

However, as described above, LFNST4x8 and LFNST8x4 may be adaptively applied based on the size of a current block. When LFNST4x8 and LFNST8x4 are not applied to a current block, LFNST that an input length and an output length are 16 and 16 respectively (hereinafter, referred to as LFNST-16) may be used. LFNST-16 may be applied to transform coefficients belonging to a 4x4 region within a current block. A 4x4 region within a current block is a region including the top-left sample of a current block, which may mean a block whose width and height are 4 and 4, respectively. Transform coefficients derived through LFNST-16 may be arranged according to the predetermined scan order in a 4x4 region within the current block.

In applying LFNST4x8 or LFNST8x4 to a current block, the above-described symmetry between block shapes may be used. As an example, a LFNST set and/or a LFNST kernel for LFNST of a current block may be determined according to the symmetry between a 4xN block and a Nx4 block. A 4xN block (or, a Nx4 block) may use a LNFST set and/or a LFNST kernel corresponding to a Nx4 block (or, a 4xN block) that has symmetry therewith. The symmetry described above may be used for a block where N is 8 may be used as it is, and LFNST may be applied to a block where N is greater than or equal to 16 by using the symmetry described above for a ROI region within a current block (i.e., a 4x8 region or a 8x4 region).

In addition, LFNST for a 8x16 block (hereinafter, referred to as LFNST8x16) and LFNST for a 16x8 block (hereinafter, referred to as LFNST16x8) may be defined. When LFNST8x16 is applied to a current block, the ROI region of a current block may be a 4x8, 4x16, 8x8 or 8x16 region within a current block. Here, a ROI region is a region including the top-left sample of a current block, which may mean a block having a corresponding width and height. When LFNST16x8 is applied to a current block, the ROI region of a current block may be a 8x4, 16x4, 8x8 or 16x8 region within a current block. Here, a ROI region is a region including the top-left sample of a current block, which may mean a block having a corresponding width and height. The ROI region may be preset equally for an encoding device and a decoding device for each of LFNST8x16 and LFNST16x8. The same ROI region may be set for blocks whose width and height are 8 and N, respectively. Alternatively, at least one of the blocks whose width and height are 8 and N, respectively, may have a different ROI region from another. Similarly, the same ROI region may be set for blocks whose width and height are N and 8, respectively. Alternatively, at least one of the blocks whose width and height are N and 8, respectively, may have a different ROI region from another.

The LFNST8x16 may be applied only when a current block is a 8x16 block. Alternatively, the LFNST8x16 may be applied when a current block is 8xN and N is greater than or equal to 16 (e.g., when a current block is a block of 8x16, 8x32, 8x64 or higher). Alternatively, the LFNST8x16 may be applied when a current block is 8xN and N is greater than or equal to 16 and less than or equal to a predetermined threshold value. As an example, when a threshold value is 32, LFNST8x16 may be applied when a current block is a 8x16 or 8x32 block.

The LFNST16x8 may be applied only when a current block is a 16x8 block. Alternatively, the LFNST16x8 may be applied when a current block is Nx8 and N is greater than or equal to 16 (e.g., when a current block is a block of 16x8, 32x8, 64x8 or higher). Alternatively, the LFNST16x8 may be applied when a current block is Nx8 and N is greater than or equal to 16 and less than or equal to a predetermined threshold value. As an example, when a threshold value is 32, LFNST16x8 may be applied when a current block is a 16x8 or 32x8 block.

Specifically, when LFNST8x16 or LFNST16x8 is applied to a current block, LFNST that an input length is less than or equal to K and an output length is K (hereinafter, referred to as LFNST-K) may be used. As described above, the input length may mean the number of transform coefficients input to LFNST. Here, transform coefficients input to LFNST may mean all transform coefficients derived based on the residual information of a current block or may mean transform coefficients to which forward LFNST is applied among the derived transform coefficients. The output length may mean the number of transform coefficients derived through LFNST.

The K may be determined based on the size of the ROI region of a current block. As an example, when a ROI region is 4x8 or 8x4, LFNST that an input length is less than or equal to 32 and an output length is 32 (i.e., LFNST-32) may be used. When a ROI region is 4x16, 16x4 or 8x8, LFNST that an input length is less than or equal to 64 and an output length is 64 (i.e., LFNST-64) may be used. When a ROI region is a 8x16 or 16x8 region, LFNST that an input length is less than or equal to 128 and an output length is 128 (i.e., LFNST-128) may be used. In other words, when LFNST8x16 or LFNST16x8 is applied to a current block of 8xN or Nx8, LFNST-K may be applied to a ROI region within a current block. Here, K may be 32, 64 or 128, but it is just an example and K may be an integer greater than 128. The ROI region of a current block may consist of 128 sample positions. In this case, the dimension (or, size) of a transform matrix for backward LFNST8x16 or LFNST16x8 may be 128xN. Here, N may be 32, 40 or 48. In other words, an input length of LFNST-128 may be N, and an output length of LFNST-128 may be 128.

When the size of a current block is 8xN, LFNST-K may be applied to all or a part of the transform coefficients belonging to a ROI region within a current block. Transform coefficients derived through LFNST-K may be arranged according to the predetermined scan order in a ROI region within the current block. Alternatively, when the size of a current block is Nx8, LFNST-K may be applied to all or a part of the transform coefficients belonging to a ROI region within a current block. Transform coefficients derived through LFNST-K may be arranged according to the predetermined scan order in a ROI region within the current block.

A transform kernel for LFNST-128 may be determined as any one of one or more transform kernels (or, LFNST kernel candidates) belonging to a transform set. For this purpose, an index specifying any one of a plurality of transform kernels belonging to a transform set may be used. Here, an index may be signaled through a bitstream. The transform set of the current block may be determined as any one of a plurality of pre-defined transform sets. As an example, the transform set of a current block may be determined as any one of the 35 transform sets, and each transform set may include three transform kernels. The transform set of the current block may be determined based on the intra prediction mode of a current block, which is the same as described above. The plurality of transform sets for LFNST-128 may also be defined for LFNST8x16 and LFNST16x8, respectively.

However, as described above, LFNST8x16 and LFNST16x8 may be adaptively applied based on the size of a current block. When LFNST8x16 and LFNST16x8 are not applied to a current block, LFNST that an input length is 16 and an output length is 48 (hereinafter, referred to as LFNST-48) may be used. LFNST-48 may be applied to transform coefficients belonging to a 4x4 region within a current block. A 4x4 region within a current block is a region including the top-left sample of a current block, which may mean a block whose width and height are 4 and 4, respectively. Transform coefficients derived through LFNST-48 may be arranged according to the predetermined scan order in three 4x4 regions within the current block. The three 4x4 regions may be composed of the first 4x4 region including the top-left sample of a current block, the second 4x4 region adjacent to the right of the first 4x4 region and the third 4x4 region adjacent to the bottom of the first 4x4 region.

From the perspective of forward transform, transform coefficients may be derived by applying a separate primary transform to the residual samples of a current block. Forward LFNST may be applied to all of the derived transform coefficients or only to transform coefficients belonging to a partial region within a current block (i.e., a ROI region). Transform coefficients derived through LFNST may be arranged according to the predetermined scan order in a ROI region within a current block. When the number of transform coefficients output from LFNST is less than the number of transform coefficients input to LFNST, there may be a region that is not filled with transform coefficients derived through LFNST within a ROI region. A corresponding region may be filled with transform coefficients that are 0. In addition, the remaining region (or, a region to which LFNST is not applied) excluding a ROI region in a current block may be filled with transform coefficients derived through a separate primary transform or may be filled with transform coefficients that are 0 through zero-out.

Specifically, when LFNST8x16 or LFNST16x8 is applied to a current block or the ROI region of a current block, LFNST that an input length is K and an output length is less than or equal to K (i.e., referred to as LFNST-K) may be used. Here, an input length may mean the number of transform coefficients input to LFNST. The input transform coefficients may be coefficients derived through a separable primary transform. The input length may mean the number of transform coefficients belonging to the ROI region of a current block. An output length may mean the number of transform coefficients derived through LFNST. The ROI region of a current block may consist of 128 sample positions. In this case, the dimension of a transform matrix for forward LFNST8x16 or LFNST16x8 may be Nx128. Here, N may be 32, 40 or 48. In other words, an input length of LFNST-128 may be 128, and an output length of LFNST-128 may be N.

As an example, when the size of a current block is 8xN and N is greater than or equal to 16, LFNST-K may be applied to transform coefficients belonging to a ROI region within a current block. Transform coefficients derived through LFNST-K may be arranged according to the predetermined scan order in a ROI region within the current block. Alternatively, when the size of a current block is Nx8 and N is greater than or equal to 16, LFNST-K may be applied to transform coefficients belonging to a ROI region within a current block. Transform coefficients derived through LFNST-K may be arranged according to the predetermined scan order in a ROI region within the current block.

However, as described above, LFNST8x16 and LFNST16x8 may be adaptively applied based on the size of a current block. When LFNST8x16 and LFNST16x8 are not applied to a current block, LFNST that an input length and an output length are 48 and 16 respectively (i.e., referred to as LFNST-48) may be used. LFNST-48 may be applied to transform coefficients belonging to three 4x4 region within a current block. The three 4x4 regions may be composed of the first 4x4 region including the top-left sample of a current block, the second 4x4 region adjacent to the right of the first 4x4 region and the third 4x4 region adjacent to the bottom of the first 4x4 region. Transform coefficients derived through LFNST-48 may be arranged according to the predetermined scan order in a 4x4 region within the current block.

In applying LFNST8x16 or LFNST16x8 to a current block, the above-described symmetry between block shapes may be used. As an example, a LFNST set and/or a LFNST kernel for LFNST-K of a current block may be determined according to the symmetry between a 8xN block and a Nx8 block. A 8xN block (or, a Nx8 block) may use a LNFST set and/or a LFNST kernel corresponding to a Nx8 block (or, a 8xN block) that has symmetry therewith. The symmetry described above may be used for a block where N is 16 may be used as it is, and LFNST may be applied to a block where N is greater than or equal to 32 by using the symmetry described above for a ROI region within a current block (i.e., a 8x16 region or a 16x8 region).

As described above, LFNSTMx2M for a Mx2M block and LFNST2MxM for a 2MxM block may be defined. LFNSTMx2M may be applied to a MxN current block and LFNST2MxM may be applied to a NxM current block. Here, N may be greater than or equal to (2*M). As an example, M may be 16 and N may be greater than or equal to 32.

A ROI region may be defined for LFNSTMx2M and LFNST2MxM, respectively, and LFNST with a predetermined input length and output length may be defined/used. The size of a ROI region may be determined based on the minimum value (i.e., M) of the width and height of a current block. The size of a ROI region may vary depending on the value of M. As an example, the ROI region of a MxN block may be a Mx2M region within a MxN block. Here, a Mx2M region is a region including the top-left sample of a current block, which may mean a block whose width and height are M and 2M, respectively. The ROI region of a NxM block may be a 2MxM region within a NxM block. Here, a 2MxM region is a region including the top-left sample of a current block, which may mean a block whose width and height are 2M and M, respectively.

LFNSTMx2M or LFNST2MxM may be applied to the current block (or, the ROI region of a current block). In this case, at least one of the input length and the output length of a LFNST for the LFNSTMx2M or LFNST2MxM may be determined based on at least one of the minimum value of the width and height of a current block or the size of a ROI region. As an example, the input length of a LFNST may be less than or equal to (2*M*M), and the output length of an LFNST may be (2*M*M). The input length may mean the number of transform coefficients input to an LFNST. Here, transform coefficients input to an LFNST may mean all transform coefficients derived based on the residual information of a current block or may mean transform coefficients to which a forward LFNST is applied among the derived transform coefficients. The output length may mean the number of transform coefficients derived through an LFNST. The ROI region of a current block may consist of (2*M*M) sample positions. In this case, the dimension (or, size) of a transform matrix for backward LFNSTMx2M or LFNST2MxM may be (2*M*M)xL. In other words, the input length of an LFNST may be L, and the output length of an LFNST may be (2*M*M). Here, the value of L may be set to be less than or equal to (2*M*M).

When the size of a current block is MxN, an LFNST may be applied to all or a part of the transform coefficients belonging to a Mx2M region which is a ROI region within a current block. Transform coefficients derived through an LFNST may be arranged according to the predetermined scan order in a Mx2M region within the current block. Alternatively, when the size of a current block is NxM, an LFNST may be applied to all or a part of the transform coefficients belonging to a 2MxM region which is a ROI region within a current block. Transform coefficients derived through an LFNST may be arranged according to the predetermined scan order in a 2MxM region within the current block.

A transform kernel for the LFNST may be determined as any one of one or more transform kernels (or, LFNST kernel candidates) belonging to a transform set. For this purpose, an index specifying any one of a plurality of transform kernels belonging to a transform set may be used. Here, an index may be signaled through a bitstream. The transform set of the current block may be determined as any one of a plurality of pre-defined transform sets. As an example, the transform set of a current block may be determined as any one of the 35 transform sets, and each transform set may include three transform kernels. The transform set of the current block may be determined based on the intra prediction mode of a current block, which is the same as described above. The plurality of transform sets for an LFNST may also be defined for LFNSTMx2M and LFNST2MxM, respectively.

From the perspective of a forward transform, transform coefficients may be derived by applying a separable primary transform to the residual samples of a current block. A forward LFNST may be applied to all of the derived transform coefficients or only to transform coefficients belonging to a partial region within a current block (i.e., a ROI region). Transform coefficients derived through an LFNST may be arranged according to the predetermined scan order in a ROI region within a current block. When the number of transform coefficients output from an LFNST is less than the number of transform coefficients input to an LFNST, there may be a region that is not filled with transform coefficients derived through an LFNST within a ROI region. A corresponding region may be filled with transform coefficients that are 0. In addition, the remaining regions (or, a region to which an LFNST is not applied) excluding a ROI region in a current block may be filled with transform coefficients derived through a separable primary transform or may be filled with transform coefficients that are 0 through zero-out.

Specifically, when LFNSTMx2M or LFNST2MxM is applied to a current block or the ROI region of a current block, an LFNST that an input length is (2*M*M) and an output length is less than or equal to (2*M*M) may be used. Here, an input length may mean the number of transform coefficients input to an LFNST. The input transform coefficients may be coefficients derived through a separable primary transform. The input length may mean the number of transform coefficients belonging to the ROI region of a current block. An output length may mean the number of transform coefficients derived through an LFNST. The ROI region of a current block may consist of (2*M*M) sample positions. In this case, the dimension of a transform matrix for forward LFNSTMx2M or LFNST2MxM may be Lx(2*M*M). In other words, the input length of an LFNST may be (2*M*M), and the output length of an LFNST may be L. Here, the value of L may be set to be less than or equal to (2*M*M).

When the size of a current block is MxN, an LFNST may be applied to transform coefficients belonging to a Mx2M region which is a ROI region within a current block. Transform coefficients derived through an LFNST may be arranged according to the predetermined scan order in a Mx2M region within the current block. Alternatively, when the size of a current block is NxM, an LFNST may be applied to transform coefficients belonging to a 2MxM region which is a ROI region within a current block. Transform coefficients derived through an LFNST may be arranged according to the predetermined scan order in a 2MxM region within the current block.

In applying LFNSTMx2M or LFNST2MxM to a current block, the above-described symmetry between block forms may be used. As an example, an LFNST set and/or an LFNST kernel for the LFNST of a current block may be determined according to the symmetry between a MxN block and a NxM block. A MxN block (or, a NxM block) may use a LNFST set and/or an LFNST kernel corresponding to a NxM block (or, a MxN block) symmetrical thereto in the same manner. The above-described symmetry may be used as it is for a block where N is 2M, and an LFNST may be applied to a block where N is greater than 2M by using the above-described symmetry for a ROI region within a current block (i.e., a Mx2M region or a 2MxM region).

LFNSTMxrM for a M x rM block and LFNSTrMxM for a rM x M block may be defined. Here, the value of r may be an integer greater than or equal to 2. rM represents (r*M), which may be considered to have the same meaning below. LFNSTMxrM may be applied to the current block of MxN, and LFNSTrMxM may be applied to the current block of NxM. Here, N may be greater than or equal to (r*M).

A ROI region may be defined for LFNSTMxrM and LFNSTrMxM, respectively, and an LFNST having a predetermined input length and output length may be defined/used. The size of a ROI region may be determined based on the minimum value (i.e., M) of the width and height of a current block. The size of a ROI region may vary depending on the value of M. As an example, the ROI region of a MxN block may be a M x rM region within a MxN block. Here, a M x rM region is a region including the top-left sample of a current block, which may mean a block whose width and height are M and rM, respectively. The ROI region of a NxM block may be a rM x M region within a NxM block. Here, a rM x M region is a region including the top-left sample of a current block, which may mean a block whose width and height are rM and M, respectively.

LFNSTMxrM or LFNSTrMxM may be applied to the current block (or, the ROI region of a current block). In this case, at least one of the input length and the output length of an LFNST for the LFNSTMxrM or LFNSTrMxM may be determined based on at least one of the minimum value of the width and height of a current block or the size of a ROI region. As an example, the input length of an LFNST may be less than or equal to (r*M*M), and the output length of an LFNST may be (r*M*M). The input length may mean the number of transform coefficients input to an LFNST. Here, transform coefficients input to an LFNST may mean all transform coefficients derived based on the residual information of a current block or may mean transform coefficients to which a forward LFNST is applied among the derived transform coefficients. The output length may mean the number of transform coefficients derived through an LFNST. The ROI region of a current block may consist of (r*M*M) sample positions. In this case, the dimension (or, size) of a transform matrix for backward LFNSTMxrM or LFNSTrMxM may be (r*M*M)xL. In other words, the input length of an LFNST may be L, and the output length of an LFNST may be (r*M*M). Here, the value of L may be set to be less than or equal to (r*M*M).

When the size of a current block is MxN, an LFNST may be applied to all or a part of the transform coefficients belonging to a M x rM region which is a ROI region within a current block. Transform coefficients derived through an LFNST may be arranged according to the predetermined scan order in a M x rM region within the current block. Alternatively, when the size of a current block is NxM, an LFNST may be applied to all or a part of the transform coefficients belonging to a rM x M region which is a ROI region within a current block. Transform coefficients derived through an LFNST may be arranged according to the predetermined scan order in a rM x M region within the current block.

A transform kernel for the LFNST may be determined as any one of one or more transform kernels (or, LFNST kernel candidates) belonging to a transform set. For this purpose, an index specifying any one of a plurality of transform kernels belonging to a transform set may be used. Here, an index may be signaled through a bitstream. The transform set of the current block may be determined as any one of a plurality of pre-defined transform sets. As an example, the transform set of a current block may be determined as any one of the 35 transform sets, and each transform set may include three transform kernels. The transform set of the current block may be determined based on the intra prediction mode of a current block, which is the same as described above. The plurality of transform sets for an LFNST may also be defined for LFNSTMxrM and LFNSTrMxM, respectively.

From the perspective of a forward transform, transform coefficients may be derived by applying a separable primary transform to the residual samples of a current block. A forward LFNST may be applied to all of the derived transform coefficients or only to transform coefficients belonging to a partial region within a current block (i.e., a ROI region). Transform coefficients derived through an LFNST may be arranged according to the predetermined scan order in a ROI region within a current block. When the number of transform coefficients output from an LFNST is less than the number of transform coefficients input to an LFNST, there may be a region that is not filled with transform coefficients derived through an LFNST within a ROI region. A corresponding region may be filled with transform coefficients that are 0. In addition, the remaining regions (or, a region to which an LFNST is not applied) excluding a ROI region in a current block may be filled with transform coefficients derived through a separable primary transform or may be filled with transform coefficients that are 0 through zero-out.

Specifically, when LFNSTMxrM or LFNSTrMxM is applied to a current block or the ROI region of a current block, an LFNST that an input length is (r*M*M) and an output length is less than or equal to (r*M*M) may be used. Here, an input length may mean the number of transform coefficients input to an LFNST. The input transform coefficients may be coefficients derived through a separable primary transform. The input length may mean the number of transform coefficients belonging to the ROI region of a current block. An output length may mean the number of transform coefficients derived through an LFNST. The ROI region of a current block may consist of (r*M*M) sample positions. In this case, the dimension of a transform matrix for forward LFNSTMxrM or LFNSTrMxM may be Lx(r*M*M). In other words, the input length of an LFNST may be (r*M*M), and the output length of an LFNST may be L. Here, the value of L may be set to be less than or equal to (r*M*M).

When the size of a current block is MxN, an LFNST may be applied to transform coefficients belonging to a M x rM region which is a ROI region within a current block. Transform coefficients derived through an LFNST may be arranged according to the predetermined scan order in a M x rM region within the current block. Alternatively, when the size of a current block is NxM, an LFNST may be applied to transform coefficients belonging to a rM x M region which is a ROI region within a current block. Transform coefficients derived through an LFNST may be arranged according to the predetermined scan order in a rM x M region within the current block.

In applying LFNSTMxrM or LFNSTrMxM to a current block, the above-described symmetry between block forms may be used. As an example, an LFNST set and/or an LFNST kernel for the LFNST of a current block may be determined according to the symmetry between a MxN block and a NxM block. A MxN block (or, a NxM block) may use a LNFST set and/or an LFNST kernel corresponding to a NxM block (or, a MxN block) symmetrical thereto in the same manner. The above-described symmetry may be used as it is for a block where N is rM, and an LFNST may be applied to a block where N is greater than rM by using the above-described symmetry for a ROI region within a current block (i.e., a M x rM region or a rM x M region).

As an example, when the value of M is 4 and the value of r is 4, LFNST4x16 and LFNST16x4 may be defined. LFNST4x16 may be applied to a current block of 4xN, and LFNST16x4 may be applied to a current block of Nx4. Here, N may be greater than or equal to 16. When a current block is a 4xN block, the ROI region of a current block may be a 4x16 region within a current block. Here, a 4x16 region is a region including the top-left sample of a current block, which may mean a block whose width and height are 4 and 16, respectively. LFNST4x16 may be applied to a 4x16 region which is a ROI region within a current block. Alternatively, when a current block is a Nx4 block, the ROI region of a current block may be a 16x4 region within a current block. Here, a 16x4 region is a region including the top-left sample of a current block, which may mean a block whose width and height are 16 and 4, respectively. LFNST16x4 may be applied to a 16x4 region which is a ROI region within a current block.

Based on the size of a current block, the above-described LFNSTMxrM (or, LFNSTrMxM) may be adaptively applied to a current block.

Specifically, when any one of the width or height of a current block is less than a predetermined threshold size, LFNSTMxrM (or, LFNSTrMxM) may be applied to a current block. Conversely, when any one of the width or height of a current block is greater than or equal to a predetermined threshold size, LFNSTMxrM (or, LFNSTrMxM) may not be applied to a current block. When any one of the width or height of a current block is greater than or equal to a predetermined threshold size, a NSPT may be applied to a current block. As an example, any one of the width or height of the current block may be defined as the minimum value of the width or height of a current block. The threshold size may be defined as 8. In this case, when a current block is a 4xN block, LFNST4x8 may be applied to a current block. Alternatively, when a current block is a Nx4 block, LFNST8x4 may be applied to a current block. Here, N may be an integer greater than or equal to 8. On the other hand, when a current block is a 8x16 block (or, a 16x8 block), LFNST8x16 (or, LFNST16x8) may not be applied to a current block. When a current block is a 8x16 block (or, a 16x8 block), a NSPT may be applied to a current block.

Alternatively, when any one of the width or height of a current block is greater than or equal to a predetermined threshold size, LFNSTMxrM (or, LFNSTrMxM) may be applied to a current block. On the other hand, when any one of the width or height of a current block is less than a predetermined threshold size, LFNSTMxrM (or, LFNSTrMxM) may not be applied to a current block. When any one of the width or height of a current block is less than a predetermined threshold size, a NSPT may be applied to a current block. As an example, any one of the width or height of the current block may be defined as the maximum value of the width or height of a current block. The threshold size may be defined as 16. In this case, when a current block is a 4xL block, LFNST4x16 may be applied to a current block. Alternatively, when a current block is a Lx4 block, LFNST 16x4 may be applied to a current block. Here, L may be an integer greater than or equal to 16. On the other hand, when a current block is a 4x8 block (or, a 8x4 block), LFNST4x8 (or, LFNST8x4) may not be applied to a current block. When a current block is a 4x8 block (or, a 8x4 block), a NSPT may be applied to a current block.

Alternatively, when any one of the width or height of a current block is greater than or equal to a predetermined threshold size, LFNSTMxrM (or, LFNSTrMxM) may be applied to a current block. On the other hand, when any one of the width or height of a current block is less than a predetermined threshold size, LFNSTMxrM (or, LFNSTrMxM) may not be applied to a current block. When any one of the width or height of a current block is less than a predetermined threshold size, a NSPT may be applied to a current block. As an example, any one of the width or height of the current block may be defined as the minimum value of the width or height of a current block. The threshold size may be defined as 8. In this case, when a current block is a 8xN block, LFNST8x16 may be applied to a current block. Alternatively, when a current block is a Nx8 block, LFNST16x8 may be applied to a current block. Here, N may be an integer greater than or equal to 16. On the other hand, when a current block is a 4x8 block, a 8x4 block, a 4x16 block or a 16x4 block, a NSPT may be applied to a current block.

The ROI region of LFNST4x8 and LFNST8x4 may be configured in the same manner as LFNST4. Here, LFNST4 refers to an LFNST applied to a 4x4 block, and the ROI region of LFNST4 may be a 4x4 block. In other words, when an LFNST is applied to a 4xN or Nx4 block which is a block to which LFNST4x8 or LFNST8x4 may be applied, 16 transform coefficients may be output, and 16 output transform coefficients may be arranged in a 4x4 region within a 4xN or Nx4 block. Here, as described above, N may be an integer greater than or equal to 8. As an example, N may be an integer of 8, 16, 32 or higher. The 4x4 region is a region including a top-left sample within a 4xN or Nx4 block, which may be a region whose width and height are 4 and 4, respectively.

The dimension (or, size) of a transform matrix for the LFNST4x8 and LFNST8x4 may be configured in the same manner as the LFNST4. As an example, the dimension of a transform matrix for LFNST4x8 and LFNST8x4 may be a 16x16 matrix. In other words, when an LFNST is applied to a 4xN or Nx4 block, 16 transform coefficients belonging to a ROI region (i.e., a 4x4 region) within a 4xN or Nx4 block may be input to an LFNST, and 16 transform coefficients may be output through an LFNST. However, it is not limited thereto, and the dimension of a transform matrix for LFNST4x8 and LFNST8x4 may be configured differently from the LFNST4. As an example, the input length of an LFNST for a 4x4 block may be different from the input length of an LFNST for a 4xN or Nx4 block, and the output length of an LFNST for a 4x4 block may be the same as the output length of an LFNST for a 4xN or Nx4 block. As described above, the input or output length of an LFNST may refer to the number of transform coefficients input to or output from an LFNST.

From the perspective of a forward transform, when an LFNST is applied to a 4xN or Nx4 block which is a block to which LFNST4x8 or LFNST8x4 may be applied, 16 transform coefficients belonging to a 4x4 region within a 4xN or Nx4 block may be input to an LFNST. Here, as described above, N may be an integer greater than or equal to 8. As an example, N may be an integer of 8, 16, 32 or higher. The 4x4 region is a region including a top-left sample within a 4xN or Nx4 block, which may be a region whose width and height are 4 and 4, respectively.

The dimension (or, size) of a transform matrix for the LFNST4x8 and LFNST8x4 may be configured in the same manner as the LFNST4. As an example, the dimension of a transform matrix for LFNST4x8 and LFNST8x4 may be a 16x16 matrix. In other words, when an LFNST is applied to a 4xN or Nx4 block, 16 transform coefficients belonging to a ROI region (i.e., a 4x4 region) within a 4xN or Nx4 block may be input to an LFNST, and 16 transform coefficients may be output through an LFNST. However, it is not limited thereto, and the dimension of a transform matrix for LFNST4x8 and LFNST8x4 may be configured differently from the LFNST4. As an example, the input length of an LFNST for a 4x4 block may be the same as the input length of an LFNST for a 4xN or Nx4 block, and the output length of an LFNST for a 4x4 block may be different from the output length of an LFNST for a 4xN or Nx4 block.

At least one of transform sets for LFNST4x8 and LFNST8x4, the number of transform kernels belonging to each transform set or the determination of a transform set may be configured in the same manner as LFNST4. In other words, transform sets for a 4x4 block, the number of transform kernels belonging to each transform set or the determination method of a transform set may also be applied equally to the 4xN or Nx4 block.

The ROI region of LFNST8x16 and LFNST16x8 may be configured in the same manner as LFNST8. Here, LFNST8 refers to an LFNST applied to a 8x8 block, and the ROI region of LFNST8 may be a 8x8 block. In other words, when an LFNST is applied to a 8xN or Nx8 block which is a block to which LFNST8x16 or LFNST16x8 may be applied, 64 transform coefficients may be output, and 64 output transform coefficients may be arranged in a 8x8 region within a 8xN or Nx8 block. Here, as described above, N may be an integer greater than or equal to 16. As an example, N may be an integer of 16, 32, 64 or higher. The 8x8 region is a region including a top-left sample within a 8xN or Nx8 block, which may be a region whose width and height are 8 and 8, respectively.

The dimension (or, size) of a transform matrix for the LFNST8x16 and LFNST16x8 may be configured in the same manner as the LFNST8. As an example, the dimension of a transform matrix for LFNST8x16 and LFNST16x8 may be a 64x32 matrix. In other words, when an LFNST is applied to a 8xN or Nx8 block, 32 transform coefficients belonging to a ROI region (i.e., a 8x8 region) within a 8xN or Nx8 block may be input to an LFNST, and 64 transform coefficients may be output through an LFNST. However, it is not limited thereto, and the dimension of a transform matrix for LFNST8x16 and LFNST16x8 may be configured differently from the LFNST8. As an example, the input length of an LFNST for a 8x8 block may be different from the input length of an LFNST for a 8xN or Nx8 block, and the output length of an LFNST for a 8x8 block may be the same as the output length of an LFNST for a 8xN or Nx8 block. The dimension of a transform matrix for LFNST8 may be 64x16, and the dimension of a transform matrix for LFNST8x16 and LFNST16x8 may be a 64x32 matrix. In other words, the input length and output length of an LFNST for a 8x8 block may be 16 and 64, respectively. On the other hand, the input length and output length of an LFNST for a 8xN or Nx8 block may be 32 and 64, respectively. It means that 32 transform coefficients belonging to a ROI region (i.e., a 8x8 region) within a 8xN or Nx8 block may be input to an LFNST and 64 transform coefficients may be output through an LFNST.

From the perspective of a forward transform, when an LFNST is applied to a 8xN or Nx8 block which is a block to which LFNST8x16 or LFNST16x8 may be applied, 64 transform coefficients belonging to a 8x8 region within a 8xN or Nx8 block may be input to an LFNST. Here, as described above, N may be an integer greater than or equal to 16. As an example, N may be an integer of 16, 32, 64 or more. The 8x8 region is a region including a top-left sample within a 8xN or Nx8 block, which may be a region whose width and height are 8 and 8, respectively.

The dimension (or, size) of a transform matrix for the LFNST8x16 and LFNST16x8 may be configured in the same manner as the LFNST8. As an example, the dimension of a transform matrix for LFNST8x16 and LFNST16x8 may be a 32x64 matrix. In other words, when an LFNST is applied to a 8xN or Nx8 block, 64 transform coefficients belonging to a ROI region (i.e., a 8x8 region) within a 8xN or Nx8 block may be input to an LFNST, and 32 transform coefficients may be output through an LFNST. However, it is not limited thereto, and the dimension of a transform matrix for LFNST8x16 and LFNST16x8 may be configured differently from the LFNST8. As an example, the input length of an LFNST for a 8x8 block may be the same as the input length of an LFNST for a 8xN or Nx8 block, and the output length of an LFNST for a 8x8 block may be different from the output length of an LFNST for a 8xN or Nx8 block. The dimension of a transform matrix for LFNST8 may be 16x64, and the dimension of a transform matrix for LFNST8x16 and LFNST16x8 may be a 32x64 matrix. In other words, the input length and output length of an LFNST for a 8x8 block may be 64 and 16, respectively. On the other hand, the input length and output length of an LFNST for a 8xN or Nx8 block may be 64 and 32, respectively. It means that 64 transform coefficients belonging to a ROI region (i.e., a 8x8 region) within a 8xN or Nx8 block may be input to an LFNST and 32 transform coefficients may be output through an LFNST.

At least one of transform sets for LFNST8x16 and LFNST16x8, the number of transform kernels belonging to each transform set or the determination of a transform set may be configured in the same manner as LFNST8. In other words, transform sets for a 8x8 block, the number of transform kernels belonging to each transform set or the determination method of a transform set may also be applied equally to the 8xN or Nx8 block.

The ROI region of LFNST16x32 and LFNST32x16 may be configured in the same manner as LFNST16. Here, LFNST16 refers to an LFNST applied to a 16x16 block, and the ROI region of LFNST16 may consist of one or more 4x4 blocks. As an example, the ROI region of LFNST16 may consist of 6 4x4 blocks within a 16x16 block. Here, 6 4x4 blocks may refer to the first 4x4 block to the sixth 4x4 block according to the predetermined scan order. In other words, the ROI region of LFNST16 may consist of 96 sample positions. The scan order refers to the order according to a diagonal scan, but is not limited thereto, and a vertical scan, a horizontal scan, etc. may also be used.

In other words, when an LFNST is applied to a 16xN or Nx16 block which is a block to which LFNST16x32 or LFNST32x16 may be applied, 96 transform coefficients may be output, and 96 output transform coefficients may be arranged in a ROI region within a 16xN or Nx16 block. Here, as described above, N may be an integer greater than or equal to 32. As an example, N may be an integer of 32, 64 or higher.

The dimension (or, size) of a transform matrix for the LFNST16x32 and LFNST32x16 may be configured in the same manner as the LFNST16. As an example, the dimension of a transform matrix for LFNST16x32 and LFNST32x16 may be a 96x32 matrix. In other words, when an LFNST is applied to a 16xN or Nx16 block, 32 transform coefficients belonging to a ROI region within a 16xN or Nx16 block may be input to an LFNST, and 96 transform coefficients may be output through an LFNST. However, it is not limited thereto, and the dimension of a transform matrix for LFNST16x32 and LFNST32x16 may be configured differently from the LFNST16. As an example, the input length of an LFNST for a 16x16 block may be different from the input length of an LFNST for a 16xN or Nx16 block, and the output length of an LFNST for a 16x16 block may be the same as the output length of an LFNST for a 16xN or Nx16 block.

From the perspective of a forward transform, when an LFNST is applied to a 16xN or Nx16 block which is a block to which LFNST16x32 or LFNST32x16 may be applied, 96 transform coefficients belonging to a ROI region within a 16xN or Nx16 block may be input to an LFNST. Here, as described above, N may be an integer greater than or equal to 32. As an example, N may be an integer of 32, 64 or higher.

The dimension (or, size) of a transform matrix for the LFNST16x32 and LFNST32x16 may be configured in the same manner as the LFNST16. As an example, the dimension of a transform matrix for LFNST16x32 and LFNST32x16 may be a 32x96 matrix. In other words, when an LFNST is applied to a 16xN or Nx16 block, 96 transform coefficients belonging to a ROI region within a 16xN or Nx16 block may be input to an LFNST, and 32 transform coefficients may be output through an LFNST. However, it is not limited thereto, and the dimension of a transform matrix for LFNST16x32 and LFNST32x16 may be configured differently from the LFNST16. As an example, the input length of an LFNST for a 16x16 block may be the same as the input length of an LFNST for a 16xN or Nx16 block, and the output length of an LFNST for a 16x16 block may be different from the output length of an LFNST for a 16xN or Nx16 block.

At least one of transform sets for LFNST16x32 and LFNST32x16, the number of transform kernels belonging to each transform set or the determination of a transform set may be configured in the same manner as LFNST16. In other words, transform sets for a 16x16 block, the number of transform kernels belonging to each transform set or the determination method of a transform set may also be applied equally to the 16xN or Nx16 block.

For a MxN block, an LFNST for a square block or an LFNST for a non-square block may be applied. Here, M and N may be an integer greater than or equal to 32, respectively. M and N may be the same or different from each other. The LFNST for a square block may refer to the above-described LFNST16. However, it is not limited thereto, and an LFNST for a square block may refer to LFNST4 or LFNST8. The LFNST for a non-square block may refer to the above-described LFNST16x32 (or, LFNST32x16). However, it is not limited thereto. As an example, an LFNST for a non-square block may refer to the above-described LFNST8x16 (or, LFNST16x8) or may refer to LFNST4x8 (or, LFNST8x4). The LFNST for a square block may be defined as an LFNST having the same output length as an LFNST for a non-square block and having a different input length from an LFNST for a non-square block. Alternatively, the LFNST for a square block may be defined as an LFNST having different input and output lengths from an LFNST for a non-square block. From the perspective of a forward transform, the LFNST for a square block may be defined as an LFNST having the same input length as an LFNST for a non-square block and having a different output length from an LFNST for a non-square block. Alternatively, the LFNST for a square block may be defined as an LFNST having different input and output lengths from an LFNST for a non-square block.

Specifically, an LFNST for a square block may be applied to all blocks where M and N are greater than or equal to 32. As an example, LFNST16 may be applied to all blocks where M and N are greater than or equal to 32. Alternatively, LFNST8 may be applied to all blocks where M and N are greater than or equal to 32. Alternatively, LFNST4 may be applied to all blocks where M and N are greater than or equal to 32.

Alternatively, an LFNST for a square block may be applied to a block where M and N are greater than or equal to 32 and M and N are the same. On the other hand, an LFNST for a non-square block may be applied to a block where M and N are greater than or equal to 32 and M and N are different. As an example, LFNST16 may be applied to a 32x32 block, a 64x64 block or 128x128. Alternatively, LFNST8 may be applied to a 32x32 block, a 64x64 block or 128x128. Alternatively, LFNST4 may be applied to a 32x32 block, a 64x64 block or 128x128. LFNST16x32 may be applied to a 32x64 block, a 32x128 block or a 64x128 block. Alternatively, LFNST8x16 may be applied to a 32x64 block, a 32x128 block or a 64x128 block. Alternatively, LFNST4x8 may be applied to a 32x64 block, a 32x128 block or a 64x128 block. LFNST32x16 may be applied to a 64x32 block, a 128x32 block or a 128x64 block. Alternatively, LFNST16x8 may be applied to a 64x32 block, a 128x32 block or a 128x64 block. Alternatively, LFNST8x4 may be applied to a 64x32 block, a 128x32 block or a 128x64 block.

Allowed transform block sizes pre-defined in a decoding apparatus may be divided into a plurality of groups. A plurality of groups according to the present disclosure may include at least two of Group _4xN_Nx4, Group_8xN_Nx8, Group_16xN_Nx16, Group_GTE16x16, Group_GTE32x32 or Group _GTE8x8. Group _4xN_Nx4 may be a group including at least one of a 4xN block or an Nx4 block, and N may be an integer greater than or equal to 4. Group_4xN_Nx4 may be a group including block sizes that the smaller value (i.e., the minimum value) of the width and the height is 4. Group_8xN_Nx8 may be a group including at least one of an 8xN block or an Nx8 block, and N may be an integer greater than or equal to 8. Group _8xN_Nx8 may be a group including block sizes that the smaller value (i.e., the minimum value) of the width and the height is 8. Group_16xN_Nxl6 may be a group including at least one of a 16xN block or an Nx16 block, and N may be an integer greater than or equal to 16. Group_16xN_Nx16 may be a group including block sizes that the smaller value (i.e., the minimum value) of the width and the height is 16. Group_GTE16x16 may be a group including an MxN block, and M and N may be an integer greater than or equal to 16, respectively. Group_GTE16x16 may be a group including block sizes greater than or equal to 16x16. Group _GTE32x32 may be a group including an MxN block, and M and N may be an integer greater than or equal to 32, respectively. Group _GTE32x32 may be a group including block sizes greater than or equal to 32x32. Group_GTE8x8 may be a group including an MxN block, and M and N may be an integer greater than or equal to 8, respectively. Group_GTE8x8 may be a group including block sizes greater than or equal to 8x8.

As an example, allowed transform block sizes may be divided into a combination of Group_4xN_Nx4, Group_8xN_Nx8 and Group_GTE16x16. Alternatively, allowed transform block sizes may be divided into a combination of Group_4xN_Nx4, Group_8xN_Nx8, Group_16xNNx16 and Group _GTE32x32. Alternatively, allowed transform block sizes may be divided into a combination of Group_4xN_Nx4 and Group _GTE8x8.

Each group may be considered as a set having one or more block sizes belonging to a corresponding group as an element. For each block size belonging to a corresponding group, it may be set to ensure that at least one of NSPT or LFNST is applied or both NSPT and LFNST are not applied. A transform kernel for a block size where both NSPT and LFNST are not applied may be determined as DCT-2 or may be determined based on the above-described MTS. When LFNST is applied, LFNST according to a block size may be applied. As an example, the above-described LFNST4, LFNST8 or LFNST16 may be applied, or LFNST4x8, LFNST8x4, LFNST8x16 or LFNST16x8 may be applied. According to the above-described configuration, each group may be defined as any one of the following.

a) A set of one or more block sizes to which NSPT is applicable
b) A set of one or more block sizes to which NSPT is applicable and one or more block sizes to which NSPT and LFNST are not applied
c) A set of one or more block sizes to which NSPT is applicable and one or more block sizes to which LFNST is applicable
d) A set of one or more block sizes to which NSPT is applicable, one or more block sizes to which LFNST may be applied and one or more block sizes to which NSPT and LFNST are not applied
e) A set of one or more block sizes to which LFNST is applicable
f) A set of one or more block sizes to which LFNST is applicable and one or more block sizes to which NSPT and LFNST are not applied
g) A set of one or more block sizes to which NSPT and LFNST are not applied

For a group defined as the a), a corresponding group may include one or more block sizes where NSPT is allowed. As an example, NSPT may be allowed and LFNST may not be allowed for block size(s) belonging to a corresponding group. In this case, LFNST may be unnecessary for a group defined as a).

For a group defined as the b), the corresponding group may include one or more block sizes where NSPT is allowed and one or more block sizes where NSPT and LFNST are not allowed. As an example, NSPT may be allowed and LFNST may not be allowed for some block size(s) belonging to a corresponding group. In addition, both NSPT and LFNST may not be allowed for some other block size(s) belonging to a corresponding group. In this case, LFNST may be unnecessary for a group defined as b).

For a group defined as the c), a corresponding group may include one or more block sizes where at least one of NSPT or LFNST is allowed. As an example, NSPT may be allowed and LFNST may not be allowed for some block size(s) belonging to a corresponding group. LFNST may be allowed and NSPT may not be allowed for some other block size(s) belonging to a corresponding group.

For a group defined as the d), a corresponding group may include one or more block sizes where at least one of NSPT or LFNST is allowed and one or more block sizes where both NSPT and LFNST are not allowed. As an example, NSPT may be allowed and LFNST may not be allowed for some block size(s) belonging to a corresponding group. LFNST may be allowed and NSPT may not be allowed for some other block size(s) belonging to a corresponding group. Both NSPT and LFNST may not be allowed for some another block size(s) belonging to a corresponding group.

For a group defined as the e), a corresponding group may include one or more block sizes where LFNST is allowed. LFNST may be allowed and NSPT may not be allowed for block size(s) belonging to a corresponding group. In this case, NSPT may be unnecessary for a group defined as e).

For a group defined as the f), a corresponding group may include one or more block sizes where LFNST is allowed and one or more block sizes where both NSPT and LFNST are not allowed. As an example, LFNST may be allowed and NSPT may not be allowed for some block size(s) belonging to a corresponding group. In addition, both NSPT and LFNST may not be allowed for some other block size(s) belonging to a corresponding group. In this case, NSPT may be unnecessary for a group defined as f).

For a group defined as the g), a corresponding group may include one or more block sizes where NSPT and LFNST are not allowed. As an example, NSPT and LFNST may not be allowed for all block size(s) belonging to a corresponding group. In this case, both NSPT and LFNST may be unnecessary for a group defined as g).

When unnecessary transform (or, a transform kernel, transform kernel data) described above is removed, the memory space required to store corresponding transform may be reduced. In addition, since a hardware circuit, an SW code, etc. for performing corresponding transform may be removed, implementation complexity may be significantly reduced. Since an encoding apparatus does not attempt corresponding transform, the time required for encoding may also be significantly reduced. The removal of transform according to the present disclosure may represent that a transform kernel (or transform kernel data) for corresponding transform is not stored or is not available. Hereinafter, various embodiments of removing unnecessary transform will be described.

1. In Group_4xN_Nx4, NSPT may be applied/allowed for a 4xL block and an Lx4 block ($4 \leq L \leq 32$), and both NSPT and LFNST may not be applied/allowed for a 4xM block and an Mx4 block (M>32). In this case, LFNST4, LFNST4x8 and/or LFNST8x4 may be removed. In other words, the transform kernels of LFNST4, LFNST4x8 and/or LFNST8x4 may not be stored or available. The transform kernels of the LFNST4, LFNST4x8 and/or LFNST8x4 may not be stored or available when LFNST4, LFNST4x8 and/or LFNST8x4 are not applied/allowed in a group other than Group_4xN_Nx4.

2. NSPT may not be applied/allowed for Group_4xN_Nx4. That is, for block size(s) belonging to Group_4xN_Nx4, LFNST such as LFNST4, LFNST4x8 or LFNST8x4 may be applied/allowed or both NSPT and LFNST may not be applied/allowed. In this case, NSPT for Group_4xN_Nx4 may be removed. In other words, a transform kernel of NSPT for Group_4xN_Nx4 may not be stored or available.

3. In Group_4xN_Nx4, NSPT may be applied/allowed for a 4x4 block, LFNST4x8 and LFNST8x4 may be applied/allowed for a 4xL block and an Lx4 block ($L \geq 8$) or both NSPT and LFNST may not be applied/allowed. In this case, LFNST4 may be removed. In other words, a transform kernel of LFNST4 may not be stored or available. The transform kernel of the LFNST4 may not be stored or available when LFNST4 is not applied/allowed in a group other than Group_4xN_Nx4.

4. In Group_8xN_Nx8, NSPT may be applied/allowed for an 8xL block and an Lx8 block ($8 \leq L \leq 32$), and both NSPT and LFNST may not be applied/allowed for an 8xM block and an Mx8 block (M>32). In this case, LFNST8, LFNST8x16 and/or LFNST16x8 may be removed. In other words, the transform kernels of LFNST8, LFNST8x16 and/or LFNST16x8 may not be stored or available. The transform kernels of the LFNST8, LFNST8x16 and/or LFNST16x8 may not be stored or available when LFNST8, LFNST8x16 and/or LFNST16x8 are not applied/allowed in a group other than Group_8xN_Nx8.

5. NSPT may not be applied/allowed for Group_8xN_Nx8. That is, for block size(s) belonging to Group_8xN_Nx8, LFNST such as LFNST8, LFNST8x16 or LFNST16x8 may be applied/allowed or both NSPT and LFNST may not be applied/allowed. In this case, NSPT for Group_8xN_Nx8 may be removed. In other words, a transform kernel of NSPT for Group_8xN_Nx8 may not be stored or available.

6. In Group_8xN_Nx8, NSPT may be applied/allowed for an 8x8 block, LFNST8x16 and LFNST16x8 may be applied/allowed for an 8xL block and an Lx8 block ($L \geq 16$) or both NSPT and LFNST may not be applied/allowed. In this case, LFNST8 may be removed. In other words, a transform kernel of LFNST8 may not be stored or available. The transform kernel of the LFNST8 may not be stored or available when LFNST8 is not applied/allowed in a group other than Group_8xN_Nx8.

7. NSPT may not be applied/allowed for Group_16xN_Nx16. That is, for block size(s) belonging to Group_16xN_Nx16, LFNST such as LFNST16, LFNST16x32 or LFNST32x16 may be applied/allowed or both NSPT and LFNST may not be applied/allowed. In this case, NSPT for Group_16xN Nx16 may be removed. In other words, a transform kernel of NSPT for Group_16xN_Nx16 may not be stored or available.

8. NSPT may not be applied/allowed for Group_GTE16x16. That is, for block size(s) belonging to Group_GTE16x16, LFNST such as LFNST8, LFNST16, LFNST16x32 or LFNST32x16 may be applied/allowed or both NSPT and LFNST may not be applied/allowed. In this case, NSPT for Group_GTE16x16 may be removed. In other words, a transform kernel of NSPT for Group_GTE16x16 may not be stored or available.

9. NSPT may not be applied/allowed for Group _GTE32x32. That is, for block size(s) belonging to Group_GTE32x32, LFNST such as LFNST8 or LFNST16 may be applied/allowed or both NSPT and LFNST may not be applied/allowed. In this case, NSPT for Group _GTE32x32 may be removed. In other words, a transform kernel of NSPT for Group _GTE32x32 may not be stored or available.

10. NSPT may not be applied/allowed for Group _GTE8x8. That is, for block size(s) belonging to Group _GTE8x8, LFNST such as LFNST8, LFNST8x16 or LFNST16x8 may be applied/allowed or both NSPT and LFNST may not be applied/allowed. In this case, NSPT for Group_GTE8x8 may be removed. In other words, a transform kernel of NSPT for Group_GTE8x8 may not be stored or available.

11. In Group_4xN_Nx4, for a 4x4 block, at least one of NSPT or LFNST4 may be applied/allowed or both NSPT and LFNST may not be applied/allowed. Meanwhile, in Group_4xN_Nx4, for a 4xL block and an Lx4 block ($L{\geq}8$), LFNST4x8 and LFNST8x4 may be applied/allowed or LFNST4 may be applied/allowed. Alternatively, both NSPT and LFNST may not be applied/allowed for a 4xL block and an Lx4 block ($L{\geq}8$).

12. In Group_4xN_Nx4, for a 4x4 block, at least one of NSPT or LFNST4 may be applied/allowed or both NSPT and LFNST may not be applied/allowed. In Group_4xN_Nx4, for a 4x8 block and an 8x4 block, NSPT may be applied/allowed or LFNST4x8 and LFNST8x4 may be applied/allowed. Alternatively, both NSPT and LFNST may not be applied/allowed for a 4x8 block and an 8x4 block. In Group_4xN_Nx4, for a 4xL block and an Lx4 block ($L{\geq}16$), LFNST4x16 and LFNST16x4 may be applied/allowed or LFNST4 may be applied/allowed. Alternatively, both NSPT and LFNST may not be applied/allowed for a 4xL block and an Lx4 block ($L{\geq}16$).

13. In Group_8xN_Nx8, for an 8x8 block, at least one of NSPT or LFNST8 may be applied/allowed or both NSPT and LFNST may not be applied/allowed. In Group_8xN_Nx8, for an 8xL block and an Lx8 block ($L{\geq}16$), LFNST8x16 and LFNST16x8 may be applied/allowed or LFNST8 may be applied/allowed. Alternatively, both NSPT and LFNST may not be applied/allowed for an 8xL block and an Lx8 block ($L{\geq}16$).

According to a combination of 1, 4 and 8 described above, LFNST4 and LFNST8 may be removed. In other words, the transform kernels of LFNST4 and LFNST8 may not be stored or available.

Specifically, NSPT may be configured to be applied/allowed for a 4x4 block, a 4x8 block, a 4x16 block, a 4x32 block, an 8x4 block, a 16x4 block and a 32x4 block, and both NSPT and LFNST may be configured not to be applied/allowed for a 4xL block and an Lx4 block ($L{\geq}64$). NSPT may be configured to be applied/allowed for an 8x8 block, an 8x16 block, an 8x32 block, a 16x8 block and a 32x8 block, and both NSPT and LFNST may be configured not to be applied/allowed for an 8xM block and an Mx8 block ($M{\geq}64$). LFNST8 or LFNST16 may be configured to be applied/allowed for a PxQ block ($P{\geq}16$, $Q{\geq}16$). When even any one of the width and height of a block size is greater than the maximum allowed size (e.g., 64, 128 or 256), both NSPT and LFNST may be configured not to be applied/allowed for a corresponding block size.

According to a combination of 3, 4 and 8 described above, LFNST4 and LFNST8 may be removed and LFNST4x8 and LFNST8x4 may be included. That is, the transform kernels of LFNST4 and LFNST8 may not be stored or available, and the transform kernels of LFNST4x8 and LFNST8x4 may be stored or available.

Specifically, NSPT may be configured to be applied/allowed for a 4x4 block, and LFNST4x8 and LFNST8x4 may be configured to be applied/allowed for a 4xL block and an Lx4 block ($8{\leq}L$). NSPT may be configured to be applied/allowed for an 8x8 block, an 8x16 block, an 8x32 block, a 16x8 block and a 32x8 block, and both NSPT and LFNST may be configured not to be applied/allowed for an 8xM block and an Mx8 block ($M{\geq}64$). LFNST8 or LFNST16 may be configured to be applied/allowed for a PxQ block ($P{\geq}16$, $Q{\geq}16$). When even any one of the width and height of a block size is greater than the maximum allowed size (e.g., 64, 128 or 256), both NSPT and LFNST may be configured not to be applied/allowed for a corresponding block size.

According to a combination of 1, 5 and 8 described above, LFNST4 may be removed. In other words, a transform kernel of LFNST4 may not be stored or available.

Specifically, NSPT may be configured to be applied/allowed for a 4x4 block, a 4x8 block, a 4x16 block, a 4x32 block, an 8x4 block, a 16x4 block and a 32x4 block, and both NSPT and LFNST may be configured not to be applied/allowed for a 4xL block and an Lx4 block ($L{\geq}64$). LFNST8 may be configured to be applied/allowed for an 8xM block and an Mx8 block (M≥8). LFNST8 or LFNST16 may be configured to be applied/allowed for a PxQ block (P≥16, Q≥16). When even any one of the width and height of a block size is greater than the maximum allowed size (e.g., 64, 128 or 256), both NSPT and LFNST may be configured not to be applied/allowed for a corresponding block size.

According to a combination of 3, 5 and 8 described above, LFNST4 may be removed and LFNST4x8 and LFNST8x4 may be included. That is, a transform kernel of LFNST4 may not be stored or available, and the transform kernels of LFNST4x8 and LFNST8x4 may be stored or available.

Specifically, NSPT may be configured to be applied/allowed for a 4x4 block, and LFNST4x8 and LFNST8x4 may be configured to be applied/allowed for a 4xL block and an Lx4 block (8≤L). LFNST8 may be configured to be applied/allowed for an 8xM block and an Mx8 block (M≥8). LFNST8 or LFNST16 may be configured to be applied/allowed for a PxQ block (P≥16, Q≥16). When even any one of the width and height of a block size is greater than the maximum allowed size (e.g., 64, 128 or 256), both NSPT and LFNST may be configured not to be applied/allowed for a corresponding block size.

According to a combination of 1, 6 and 8 described above, LFNST4 and LFNST8 may be removed and LFNST8x16 and LFNST16x8 may be included. That is, the transform kernels of LFNST4 and LFNST8 may not be stored or available, and the transform kernels of LFNST8x16 and LFNST16x8 may be stored or available.

Specifically, NSPT may be configured to be applied/allowed for a 4x4 block, a 4x8 block, a 4x16 block, a 4x32 block, an 8x4 block, a 16x4 block and a 32x4 block, and both NSPT and LFNST may be configured not to be applied/allowed for a 4xL block and an Lx4 block (L≥64). NSPT may be configured to be applied/allowed for an 8x8 block, and LFNST8x16 and LFNST16x8 may be configured to be applied/allowed for an 8xM block and an Mx8 block (M≥16). LFNST8 or LFNST16 may be configured to be applied for a PxQ block (P≥16, Q≥16). When even any one of the width and height of a block size is greater than the maximum allowed size (e.g., 64, 128 or 256), both NSPT and LFNST may be configured not to be applied/allowed for a corresponding block size.

According to a combination of 3, 6 and 8 described above, LFNST4 and LFNST8 may be removed and LFNST4x8, LFNST8x4, LFNST8x16 and LFNST16x8 may be included. That is, the transform kernels of LFNST4 and LFNST8 may not be stored or available, and the transform kernels of LFNST4x8, LFNST8x4, LFNST8x16 and LFNST16x8 may be stored or available.

Specifically, NSPT may be configured to be applied/allowed for a 4x4 block, and LFNST4x8 and LFNST8x4 may be configured to be applied/allowed for a 4xL block and an Lx4 block (8≤L). NSPT may be configured to be applied/allowed for an 8x8 block, and LFNST8x16 and LFNST16x8 may be configured to be applied/allowed for an 8xM block and an Mx8 block (M≥16). LFNST8 or LFNST16 may be configured to be applied/allowed for a PxQ block (P≥16, Q≥16). When even any one of the width and height of a block size is greater than the maximum allowed size (e.g., 64, 128 or 256), both NSPT and LFNST may be configured not to be applied/allowed for a corresponding block size.

According to a combination of 1 and 10 described above, LFNST4 may be removed. In other words, a transform kernel of LFNST4 may not be stored or available.

Specifically, NSPT may be configured to be applied/allowed for a 4x4 block, a 4x8 block, a 4x16 block, a 4x32 block, an 8x4 block, a 16x4 block and a 32x4 block, and both NSPT and LFNST may be configured not to be applied/allowed for a 4xL block and an Lx4 block (L≥64). LFNST8 may be configured to be applied/allowed for a PxQ block (P≥8, Q≥8). When even any one of the width and height of a block size is greater than the maximum allowed size (e.g., 64, 128 or 256), both NSPT and LFNST may be configured not to be applied/allowed for a corresponding block size.

According to a combination of 3 and 10 described above, LFNST4 may be removed and LFNST4x8 and LFNST8x4 may be included. That is, a transform kernel of LFNST4 may not be stored or available, and the transform kernels of LFNST4x8 and LFNST8x4 may be stored or available.

Specifically, NSPT may be configured to be applied/allowed for a 4x4 block, and LFNST4x8 and LFNST8x4 may be configured to be applied/allowed for a 4xL block and an Lx4 block (8≤L). LFNST8 may be configured to be applied for a PxQ block (P≥8, Q≥8). When even any one of the width and height of a block size is greater than the maximum allowed size (e.g., 64, 128 or 256), both NSPT and LFNST may be configured not to be applied/allowed for a corresponding block size.

Other than the combinations of groups described above, a combination between other groups is possible within a range in which block sizes do not overlap between groups. At least two of the above-described 1 to 13 may be combined within a range in which block sizes do not overlap.

For a block size that both NSPT and LFNST are not applied/allowed, an NSPT index and an LFNST index may not be signaled. In this case, an NSPT index and an LFNST index may be derived as 0, respectively. An NSPT index of 0 may indicate that NSPT is not applied. An LFNST index of 0 may indicate that LFNST is not applied.

Referring to FIG. 4, a current block may be reconstructed based on the residual sample of a current block S420.

The prediction samples of the current block may be derived based on the intra prediction mode of the current block. The reconstructed samples of the current block may be generated based on the prediction samples and the residual samples of the current block.

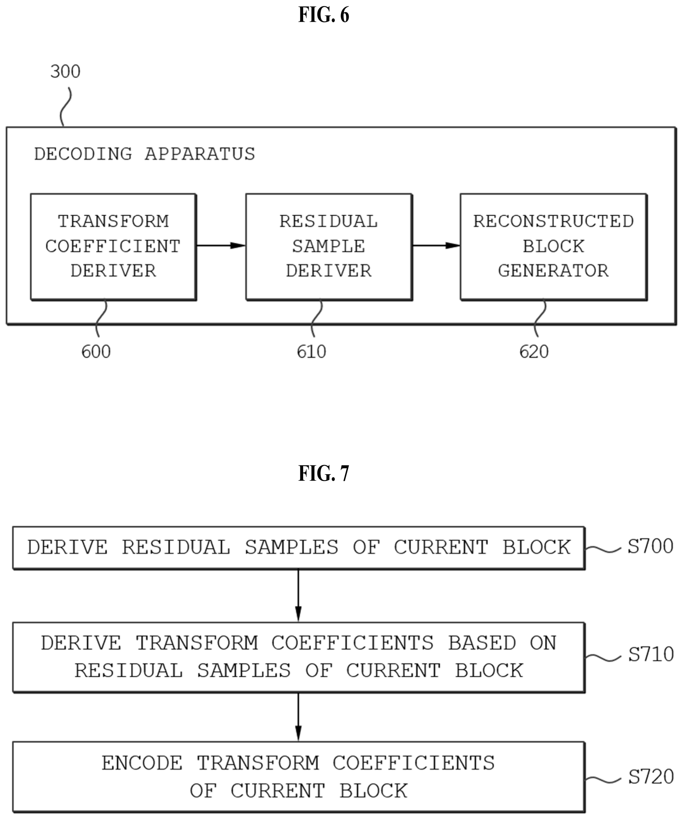

FIG. 6 illustrates a schematic configuration of a decoding apparatus (300) that performs an image decoding method according to the present disclosure.

Referring to FIG. 6, the decoding apparatus (300) according to the present disclosure may include a transform coefficient deriver (600), a residual sample deriver (610), and a reconstructed block generator (620). The transform coefficient deriver (600) may be configured in the entropy decoder (310) of FIG. 3, the residual sample deriver (610) may be configured in the residual processor (320) of FIG. 3, and the reconstructed block generator (620) may be configured in the adder (340) of FIG. 3.

The transform coefficient deriver (600) may obtain residual information of the current block from the bitstream and decode it to derive the transform coefficients of the current block.

The residual sample deriver (610) may derive the residual samples of the current block by performing at least one of dequantization or inverse transform on the transform coefficients of the current block.

The residual sample deriver (610) may determine a transform kernel for the inverse transform of the current block through a predetermined transform kernel determination method, and derive the residual samples of the current block based on this. It is the same as described by referring to FIG. 4, and a detailed description thereof will be omitted here.

The reconstructed block generator (620) may reconstruct the current block based on the residual samples of the current block.

FIG. 7 illustrates an image encoding method performed by an encoding apparatus (200) according to an embodiment of the present disclosure.

Referring to FIG. 7, residual samples of a current block may be derived (S700).

The residual samples of the current block may be derived by subtracting prediction samples from original samples of the current block. Here, the prediction samples may be derived based on a predetermined intra prediction mode.

Referring to FIG. 7, transform coefficients of the current block may be derived by performing at least one of transform or quantization on the residual samples of the current block (S710).

A transform method according to the present disclosure may be understood as the reverse process of inverse transform described by referring to FIG. 4. A method for determining a transform kernel for the transform is the same as described by referring to FIG. 4. A detailed description thereof will be omitted here.

For example, one or more transform sets for transform of the current block may be defined/configured, and each transform set may include one or more transform kernel candidates. In this case, one from the plurality of transform sets may be selected as the transform set of the current block. One of the plurality of transform kernel candidates belonging to the transform set of the current block may be selected. The selection may be performed implicitly based on the context of the current block. Alternatively, an optimal transform set and/or transform kernel candidate for the current block may be selected, and an index indicating it may be signaled.

Alternatively, the transform kernel of the current block may be determined based on an MTS set. One of a plurality of MTS sets may be selected based on at least one of a size or an intra prediction mode of the current block. The selected MTS set may include one or more transform kernel candidates. One of the one or more transform kernel candidates may be selected, and the transform kernel of the current block may be determined based on the selected transform kernel candidate. The selection of the transform kernel candidate may be performed using a transform kernel candidate index derived based on the context of the current block. Alternatively, an optimal transform kernel candidate for the current block may be selected, and a transform kernel candidate index indicating the selected transform kernel candidate may be signaled.

Alternatively, the transform kernel of a current block may be determined based on a non-separable primary transform (NSPT) kernel. When the size of a current block belongs to the first group which is a set of block sizes to which NSPT is applicable, forward NSPT may be applied to a current block, and when the size of a current block belongs to the second group, forward NSPT may not be applied to a current block. When the size of a current block belongs to the second group, a forward separable primary transform (e.g., DCT-2) may be applied to the residual sample of a current block to derive transformation coefficients. Forward LFNST may be additionally applied to all or a part of the transform coefficients derived through the separable primary transform.

In addition, the NSPT may be applied based on at least one of the tree type or component type of a current block. A NSPT kernel (or, a NSPT matrix) for the NSPT may be determined by using the symmetry between intra prediction modes or the symmetry between block shapes. When forward NSPT is applied to a current block of MxN, a NSPT kernel may be expressed as r x MN. Here, r means the output length of NSPT or the number of transform coefficients generated by NSPT, and MN is the product of the width and height of a current block, which may mean the input length of NSPT or the number of residual samples to which NSPT is applied. A method for determining the size of this NSPT kernel is the same as described by referring to FIG. 4.

A LFNST index and/or a NSPT index for transform may be encoded as one integrated syntax or a LFNST index and a NSPT index may be encoded and inserted into a bitstream, respectively. The binarization for a LFNST index and a NSPT index and the allocation of a CABAC context and an initial value are the same as described by referring to FIG. 4.

In addition, a method for signaling a transform index by referring to FIG. 4 was described, which may be applied equally to a method for encoding a transform index.

Referring to FIG. 7, a bitstream may be generated by encoding the transform coefficients of the current block (S720).

Residual information on the transform coefficients may be generated based on the transform coefficients of the current block, and a bitstream may be generated by encoding the residual information.

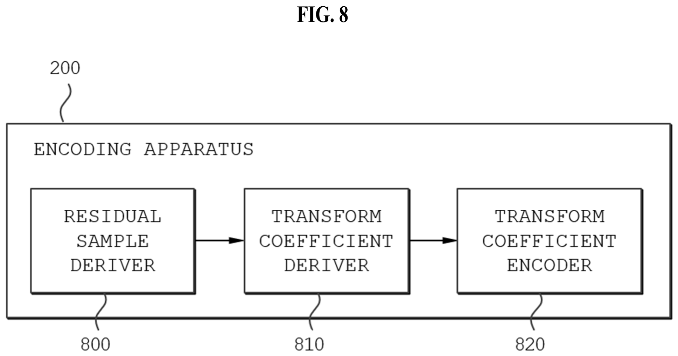

FIG. 8 illustrates a schematic configuration of an encoding apparatus (200) that performs an image encoding method according to the present disclosure.

Referring to FIG. 8, the encoding apparatus (200) according to the present disclosure may include a residual sample deriver (800), a transform coefficient deriver (810), and a transform coefficient encoder (820). The residual sample deriver (800) and the transform coefficient deriver (810) may be configured in the residual processor (230) of FIG. 2, and the transform coefficient encoder (820) may be configured in the entropy encoder (240) of FIG. 2.

The residual sample deriver (800) may derive residual samples of the current block by subtracting prediction samples from original samples of the current block. Here, the prediction samples may be derived based on a predetermined intra prediction mode.

The transform coefficient deriver (810) may derive the transform coefficients of the current block by performing at least one of transform or quantization on the residual samples of the current block. A transform coefficient deriver 810 may determine the transform kernel of a current block based on at least one of the above-described embodiments 1 to 3 and apply the transform kernel to the residual sample of a current block to derive a transform coefficient.

The transform coefficient encoder (820) may encode the transform coefficients of the current block to generate a bitstream.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

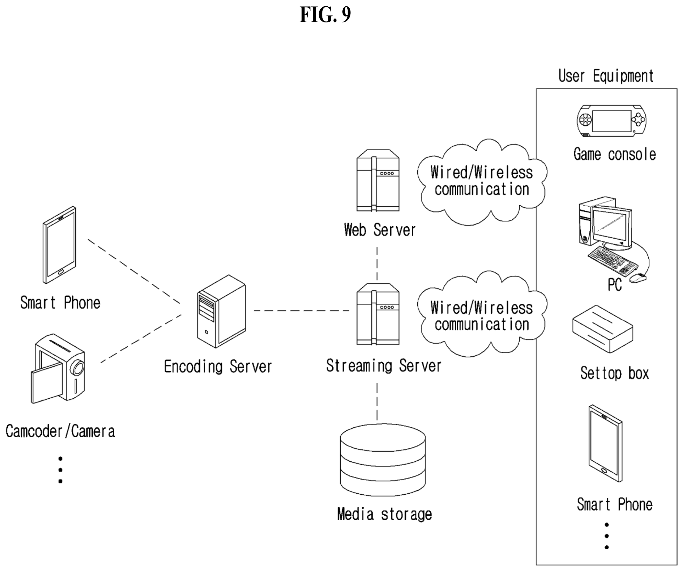

FIG. 9 shows an example of a contents streaming system to which embodiments of the present disclosure may be applied.

Referring to FIG. 9, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, comprising:

    obtaining residual information from a bitstream;
    deriving transform coefficients of a current block based on the residual information;
    deriving residual samples of the current block by performing at least one of dequantization or inverse transform on the transform coefficients of the current block; and
    reconstructing the current block based on the residual samples of the current block,
    wherein the inverse transform is performed based on at least one of non-separable primary transform (NSPT), low frequency non-separable transform (LFNST), or separable primary transform,
    wherein pre-defined allowed transform block sizes are divided into a plurality of groups, and
    wherein the plurality of groups include at least two of a first group including block sizes that a minimum value of a width and a height is 4, a second group including block sizes that the minimum value of the width and the height is 8, a third group including block sizes that the minimum value of the width and the height is 16, a fourth group including block sizes greater than or equal to 16x16, a fifth group including block sizes greater than or equal to 32x32, or a sixth group including block sizes greater than or equal to 8x8.

2. The method of claim 1, wherein one of the plurality of groups includes one or more block sizes to which the NSPT is applicable.

3. The method of claim 2, wherein the one of the plurality of groups includes one or more block sizes to which the NSPT

52

and the LFNST are not applied.

4. The method of claim 2, wherein the one of the plurality of groups includes one or more block sizes to which the LFNST is applicable.

5. The method of claim 1, wherein the NSPT is applicable to a 4xL block and an Lx4 block (4≤L≤32) belonging to the first group, and
wherein the NSPT and the LFNST are not applied to a 4xM block and an Mx4 block (M>32) belonging to the first group.

6. The method of claim 1, wherein the NSPT is applicable to a 4x4 block belonging to the first group, and
wherein the LFNST is applicable to a 4xL block and an Lx4 block (L≥8) belonging to the first group.

7. The method of claim 1, wherein the NSPT is applicable to a 4x4 block belonging to the first group, and
wherein the NSPT and the LFNST are not applied to a 4xL block and an Lx4 block (L≥8) belonging to the first group.

8. The method of claim 1, wherein the NSPT is applicable to an 8xL block and an Lx8 block (8≤L≤32) belonging to the second group, and
wherein the NSPT and the LFNST are not applied to an 8xM block and an Mx8 block (M>32) belonging to the second group.

9. The method of claim 1, wherein the NSPT is applicable to an 8x8 block belonging to the second group, and
wherein the LFNST is applicable to an 8xL block and an Lx8 block (L≥16) belonging to the second group.

10. The method of claim 1, wherein the NSPT is applicable to an 8x8 block belonging to the second group, and
wherein the NSPT and the LFNST are not applied to an 8xL block and an Lx8 block (L≥16) belonging to the second group.

11. The method of claim 1, wherein the NSPT is not applied to at least one of the third group to the sixth group.

12. An image encoding method, comprising:

deriving residual samples of a current block;
deriving transform coefficients of the current block by performing at least one of transform or quantization on the residual samples of the current block; and
encoding the transform coefficients of the current block,
wherein the transform is performed based on at least one of non-separable primary transform (NSPT), separable primary transform, or low frequency non-separable transform (LFNST),
wherein pre-defined allowed transform block sizes are divided into a plurality of groups, and
wherein the plurality of groups include at least two of a first group including block sizes that a minimum value of a width and a height is 4, a second group including block sizes that the minimum value of the width and the height is 8, a third group including block sizes that the minimum value of the width and the height is 16, a fourth group including block sizes greater than or equal to 16x16, a fifth group including block sizes greater than or equal to 32x32, or a sixth group including block sizes greater than or equal to 8x8.

13. A computer-readable storage medium storing a bitstream generated by the image encoding method according to claim 12.

14. A method for transmitting data, comprising:

obtaining a bitstream for image information, wherein the bitstream is generated by deriving residual samples of a current block, deriving transform coefficients by performing at least one of transform or quantization on the residual samples of the current block, and encoding a transform coefficient of the current block; and
transmitting data including the bitstream,
wherein the transform is performed based on at least one of non-separable primary transform (NSPT), separable primary transform, or low frequency non-separable transform (LFNST),
wherein pre-defined allowed transform block sizes are divided into a plurality of groups, and
wherein the plurality of groups include at least two of a first group including block sizes that a minimum value of a width and a height is 4, a second group including block sizes that the minimum value of the width and the height is 8, a third group including block sizes that the minimum value of the width and the height is 16, a fourth group including block sizes greater than or equal to 16x16, a fifth group including block sizes greater than or equal to 32x32, or a sixth group including block sizes greater than or equal to 8x8.

# FIG.1

SOURCE DEVICE

VIDEO SOURCE

ENCODING APPARATUS

TRANSMITTER

RECEIVE DEVICE

RENDERER

DECODING APPARATUS

RECEIVER

**FIG.2**

**FIG.3**

**FIG.4**

DERIVE TRANSFORM COEFFICIENTS
OF CURRENT BLOCK ～ S400

DERIVE RESIDUAL SAMPLES BASED ON
TRANSFORM COEFFICIENTS OF CURRENT BLOCK ～ S410

RECONSTRUCT CURRENT BLOCK BASED ON
RESIDUAL SAMPLES OF CURRENT BLOCK ～ S420

**FIG. 5**

**FIG. 6**

300

DECODING APPARATUS

| TRANSFORM COEFFICIENT DERIVER | → | RESIDUAL SAMPLE DERIVER | → | RECONSTRUCTED BLOCK GENERATOR |

600           610           620

**FIG. 7**

DERIVE RESIDUAL SAMPLES OF CURRENT BLOCK — S700

DERIVE TRANSFORM COEFFICIENTS BASED ON RESIDUAL SAMPLES OF CURRENT BLOCK — S710

ENCODE TRANSFORM COEFFICIENTS OF CURRENT BLOCK — S720

**FIG. 8**

200

ENCODING APPARATUS

| RESIDUAL SAMPLE DERIVER | TRANSFORM COEFFICIENT DERIVER | TRANSFORM COEFFICIENT ENCODER |

800       810       820

EP 4 742 666 A1

**FIG. 9**

61

## INTERNATIONAL SEARCH REPORT

| International application No. |
|---|
| **PCT/KR2024/009380** |

### A. CLASSIFICATION OF SUBJECT MATTER

**H04N 19/122**(2014.01)i; **H04N 19/63**(2014.01)i; **H04N 19/124**(2014.01)i; **H04N 19/176**(2014.01)i; **H04N 19/18**(2014.01)i

According to International Patent Classification (IPC) or to both national classification and IPC

### B. FIELDS SEARCHED

Minimum documentation searched (classification system followed by classification symbols)

H04N 19/122(2014.01); H04N 19/11(2014.01); H04N 19/12(2014.01); H04N 19/18(2014.01); H04N 19/60(2014.01); H04N 19/61(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 변환 계수(transform coefficient), 비분리(non-separable), 일차(primary), 잔차(residual), 세트(set)

### C. DOCUMENTS CONSIDERED TO BE RELEVANT

| Category* | Citation of document, with indication, where appropriate, of the relevant passages | Relevant to claim No. |
|---|---|---|
| Y | WO 2023-075353 A1 (LG ELECTRONICS INC.) 04 May 2023 (2023-05-04)<br>See paragraphs [0070]-[0071], [0077], [0124], [0128], [0151], [0207] and [0216]; claims 1 and 19-20; and figure 3. | 1-14 |
| Y | GARUS, Patrick et al. EE2-4.2: Non-Separable Primary Transform for Intra Coding. JVET-AC0130-v2, Joint Video Experts Team (JVET) of ITU-T SG 16 WP 3 and ISO/IEC JTC 1/SC 29/WG 11, 29th Meeting, by teleconference. pp. 1-5, 10 January 2023.<br>See pages 1-2; and figure 1. | 1-14 |
| Y | KOO, Moonmo et al. Non-EE2: On large NSPT. JVET-AD0187-v1, Joint Video Experts Team (JVET) of ITU-T SG 16 WP 3 and ISO/IEC JTC 1/SC 29, 30th Meeting. Antalya, TR. pp. 1-2, 14 April 2023.<br>See page 1. | 1-14 |
| A | KR 10-2021-0135320 A (TENCENT AMERICA LLC) 12 November 2021 (2021-11-12)<br>See claims 1-11. | 1-14 |
| A | KR 10-2435840 B1 (QUALCOMM INCORPORATED) 23 August 2022 (2022-08-23)<br>See claims 14-17, 19 and 21-22. | 1-14 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 October 2024** | **16 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/009380**

| Patent document cited in search report | | | Publication date (day/month/year) | Patent family member(s) | | | Publication date (day/month/year) |
|---|---|---|---|---|---|---|---|
| WO | 2023-075353 | A1 | 04 May 2023 | CN | 118435604 | A | 02 August 2024 |
| | | | | EP | 4425930 | A1 | 04 September 2024 |
| | | | | KR | 10-2024-0097825 | A | 27 June 2024 |
| KR | 10-2021-0135320 | A | 12 November 2021 | CN | 113853745 | A | 28 December 2021 |
| | | | | EP | 4066385 | A1 | 05 October 2022 |
| | | | | EP | 4066385 | A4 | 25 January 2023 |
| | | | | JP | 2022-526400 | A | 24 May 2022 |
| | | | | JP | 7285954 | B2 | 02 June 2023 |
| | | | | US | 11375220 | B2 | 28 June 2022 |
| | | | | US | 11800126 | B2 | 24 October 2023 |
| | | | | US | 2021-0160519 | A1 | 27 May 2021 |
| | | | | US | 2022-0295086 | A1 | 15 September 2022 |
| | | | | US | 2023-0421790 | A1 | 28 December 2023 |
| | | | | WO | 2021-108027 | A1 | 03 June 2021 |
| KR | 10-2435840 | B1 | 23 August 2022 | CN | 110800300 | A | 14 February 2020 |
| | | | | CN | 110800300 | B | 07 June 2024 |
| | | | | EP | 3646592 | A1 | 06 May 2020 |
| | | | | KR | 10-2020-0021944 | A | 02 March 2020 |
| | | | | US | 11134272 | B2 | 28 September 2021 |
| | | | | US | 2019-0007705 | A1 | 03 January 2019 |
| | | | | WO | 2019-006148 | A1 | 03 January 2019 |

Form PCT/ISA/210 (patent family annex) (July 2022)